# EUROPEAN PATENT SPECIFICATION

(11) **EP 3 806 567 B1**
(45) Date of publication and mention of the grant of the patent: **13.03.2024**
(21) Application number: 19825695.0
(22) Date of filing: 03.06.2019
(51) Int. Cl.: H04W 72/20, H04W 84/12, H04W 92/20, H04W 72/12, H04W 72/121

(54) **TRANSMISSION SCHEDULING METHOD, AND RELATED DEVICE AND SYSTEM**
VERFAHREN ZUR ÜBERTRAGUNGSPLANUNG SOWIE ZUGEHÖRIGE VORRICHTUNG UND SYSTEM
PROCÉDÉ DE PLANIFICATION DE TRANSMISSION ET DISPOSITIF ET SYSTÈME ASSOCIÉS

(30) Priority: 25.06.2018 CN 201810661059
(43) Date of publication of application: 14.04.2021
(73) Proprietor: HUAWEI TECHNOLOGIES CO., LTD., Shenzhen, Guangdong 518129 (CN)
(72) Inventor: MA, Mengyao, Shenzhen, Guangdong 518129 (CN)
(74) Representative: Pfenning, Meinig & Partner mbB
(86) International application number: PCT/CN2019/089790
(87) International publication number: WO 2020/001237

(56) References cited:
- EP-A1- 2 958 371
- EP-B1- 2 958 371
- WO-A1-2014/074919
- WO-A1-2014/110397
- CN-A- 102 088 792
- CN-A- 105 144 814
- CN-A- 105 379 397
- US-A1- 2011 199 966
- ASSASA, HANY et al: "Extending the IEEE 802.11ad Model: Scheduled Access, Spatial Reuse, Clustering, and Relaying", Proceedings of the Workshop on ns-3, 1 June 2017 (2017-06-01), pages 39-46, XP055669680, DOI: 10.1145/3067665.3067667

## Description

### TECHNICAL FIELD

This application relates to the field of communications technologies, and particularly, to a transmission scheduling method, a related apparatus, and a system.

### BACKGROUND

Personal basic service set (personal basic service set, PBSS) control point (control point, PCP)/access point (access point, AP) clustering, referred to as a PCP/AP clustering technology for short, in the wireless fidelity standard protocol 802.11ad can improve spatial sharing efficiency and mitigate interference among a plurality of BSSs in a same channel. The PCP/CP clustering technology includes two modes: centralized PCP/AP clustering and non-centralized PCP/AP clustering.

All APs included in a cluster in the non-centralized PCP/AP clustering are coordinated by one synchronization AP (synchronization PCP/AP, S-PCP/AP). Different from the synchronization AP, other APs are referred to as member APs (member AP).

All synchronization APs in a cluster in the centralized PCP/AP clustering are coordinated by a centralized coordination service root (centralized coordination service root). Functions of the centralized coordination service root include configuring a beacon interval, configuring a length of a beacon service period, aligning time of all synchronization APs, and the like. When an AP expects to become a member AP of a cluster, the AP first needs to be associated, as a non-AP station (station, STA), with a synchronization AP to obtain a related parameter of the cluster, and then becomes a member AP.

However, in the PCP/AP clustering technology in existing 802.11ad, there is no direct communication channel between a member AP and a synchronization AP in a cluster. The member AP obtains a related parameter of the cluster by listening on a beacon frame of another AP (for example, in the non-centralized clustering); obtains a related parameter of the cluster after being associated, as a non-AP STA, with a synchronization AP (for example, in the centralized clustering); indirectly obtains some interference information (information indicating that BSS beacon SPs of two APs are not aligned, and the like) of the cluster by using a cluster report (cluster report) element reported by a STA; or indirectly obtains SP scheduling information of another AP by using an announcement frame (Announcement frame) sent by a STA. Therefore, the synchronization AP or the member AP cannot control transmission and scheduling of a plurality of APs and STAs in a cluster. In addition, because there is no direct communication channel between a member AP and a synchronization AP in a cluster, scheduling of each STA by each access point AP in an AP cluster is independent, and spatial sharing and joint transmission cannot be fully implemented. Consequently, efficiency of scheduling transmission and communication is relatively low. WO 2014/ 074 919 A1 describes an apparatus may be configured to transmit a joint transmission request on a first medium, and receive a joint transmission response on the first medium. In response, the apparatus my perform a joint transmission negotiation on a second medium and transmit data on the second medium based on the joint transmission negotiation. In WO 2014 / 110 397 A1, a method and an apparatus for communication in a network of WLAN overlapping basic service set are discussed. Further prior art is also disclosed in EP2958371 A1.

### SUMMARY

The present invention the methods and apparatuses specified in the independent lciams. Particular embodiments of the present invention are defined by the dependent claims. This application further provides a data transmission method that provides information exchange between a plurality of APs, to improve efficiency of scheduling transmission and communication.

According to a first aspect, an embodiment of this application provides a transmission scheduling method applied to a first access point side, including: A first access point AP sends a scheduling request message to at least one second access point AP, where the scheduling request message includes information about at least one scheduling set and at least one transmission time identifier, the information about the at least one scheduling set is used to indicate the at least one scheduling set, and the scheduling set includes at least one scheduling set element. The at least one transmission time identifier is in a one-to-one correspondence with the at least one scheduling set, and the transmission time identifier is used to indicate a transmission time range in which at least one scheduling set element indicated by the scheduling set performs transmission. The scheduling request message is used by the at least one second AP to determine whether to schedule a scheduling set element, served by the at least one second AP, in the scheduling set to perform transmission in a corresponding transmission time range. To be specific, the scheduling request message is used by the at least one second AP to schedule a station group member to perform transmission in a corresponding transmission time range, where the station group member is in at least one station group indicated by the scheduling set and is served by the at least one second AP. Alternatively, the scheduling request message is used by the at least one second AP to avoid scheduling a station group member to perform transmission in a corresponding transmission time range, where the station group member is served by the at least one second AP and is in at least one station group indicated by the scheduling set. Based on this solution, the first access point AP may control, by using the scheduling request message based on the scheduling set, transmission and scheduling of a plurality of APs and STAs in an access point cluster, thereby effectively improving efficiency of scheduling transmission. The information about the scheduling set includes a station and a specified direction of the station. A scheduling set subfield corresponding to the scheduling set element includes identifier information of the station, and an antenna identifier and/or a sector identifier of the station.

According to a second aspect, a transmission scheduling method applied to a second access point side is provided. The method includes: A second AP receives a scheduling request message, where the scheduling request message includes information about at least one scheduling set and at least one transmission time identifier, the information about the at least one scheduling set is used to indicate the at least one scheduling set, and the scheduling set includes at least one scheduling set element. The at least one transmission time identifier is in a one-to-one correspondence with the at least one scheduling set, and the transmission time identifier is used to indicate a transmission time range in which at least one scheduling set element indicated by the scheduling set performs transmission. The second AP determines, based on the scheduling request message, whether to schedule a scheduling set element, served by the at least one second AP, in the at least one scheduling set element in the scheduling set to perform transmission in the transmission time range.

With reference to the first or the second aspect, in some possible implementations, the first access point AP is a centralized coordination AP, and the second access point AP is a member AP.

With reference to the first or the second aspect, in some possible implementations, the first access point AP and the second access point AP are same APs.

With reference to the first or the second aspect, in some possible implementations, the information about the scheduling set further includes a scheduling set element type identifier, where the scheduling set element type identifier is used to indicate a type of a scheduling set element.

In some possible implementations, a definition manner of the station group may include a first definition and/or a second definition, where a station group member in a station group determined based on the first definition satisfies a condition of being scheduled for simultaneous communication; and a station group member in a station group determined based on the second definition does not satisfy the condition of being scheduled for simultaneous communication. Based on this solution, the access point AP may schedule station group members, in the station group determined based on the first definition, to perform transmission at the same time, thereby improving spatial sharing efficiency. The access point AP may further avoid scheduling station group members, in the station group determined based on the second definition, to perform transmission at the same time, thereby effectively implementing interference control, and reducing interference between members in the station group determined based on the second definition.

With reference to the second aspect, in some possible implementations, that the second AP determines, based on the scheduling request message, whether to schedule a scheduling set element, served by the second AP, in the at least one scheduling set element in the scheduling set to perform transmission in the transmission time range includes: When the second AP determines that the scheduling set element served by the second AP in the scheduling set is a station group that is based on the first definition, the second AP schedules a station group member, served by the second AP, in the station group that is based on the first definition to perform transmission in the transmission time range; or when the second AP determines that the scheduling set element, served by the second AP, in the scheduling set is a station group that is based on the second definition, the second AP does not schedule a station group member, served by the second AP, in the station group that is based on the second definition to perform transmission in the transmission time range. Based on this solution, the second AP may schedule station group members that satisfy the first definition to perform transmission at the same time, thereby improving transmission efficiency; the second AP does not schedule station group members that satisfy the second definition to perform transmission at the same time, thereby effectively implementing interference control. The information about the scheduling set includes a station and a specified direction of the station. A scheduling set subfield corresponding to the scheduling set element includes identifier information of the station, and an antenna identifier and/or a sector identifier of the station.

With reference to the first or the second aspect, in some possible implementations, the scheduling request message further includes a scheduling time identifier. The scheduling time identifier is used to indicate a time range in which all second APs in the at least one second AP schedule the at least one scheduling set. That is, all the second APs simultaneously send scheduling frames to schedule the at least one scheduling set. Alternatively, the scheduling time identifier is used to indicate a time range in which each second AP in the at least one second AP schedules the at least one scheduling set, where the at least one scheduling time identifier is in a one-to-one correspondence with the at least one scheduling set. That is, time ranges in which all the second APs send scheduling frames are separately set, and may be different or may be the same. The scheduling time identifier may provide a spatial sharing/interference reduction selection for the first access point AP, especially for a scenario in which the first access point AP is a centralized coordination AP. That is, a centralized coordination AP 1 may control a time range in which a member AP (for example, an AP 2 or an AP 3) sends an air interface message to a STA served by the member AP, thereby avoiding interference between a plurality of member APs.

With reference to the first or the second aspect, in some possible implementations, the scheduling request message further includes one or a combination of the following: a scheduling set quantity, used to indicate a quantity of scheduling sets included in the scheduling request message; at least one transmission period type, used to respectively indicate a period type of the at least one transmission time, where the at least one transmission period type is in a one-to-one correspondence with the at least one transmission time identifier; and at least one scheduling set element quantity identifier, used to respectively indicate a quantity of scheduling set elements included in the at least one scheduling set, where the at least one scheduling set element quantity identifier is in a one-to-one correspondence with the at least one scheduling set.

With reference to the first or the second aspect, in some possible implementations, a period indicated by the transmission period type is an ordered service period ORDER_SP, a regular service period REGULAR_SP, or a contention-based access period CBAP.

According to a third aspect, this application provides a station group setup method applied to a first access point side, including: A first access point AP generates a station group setup request message, where the station group setup request message includes an ID of at least one station group and at least one piece of station group information, the at least one piece of station group information is in a one-to-one correspondence with the ID of the at least one station group, and any one of the at least one station group includes at least one station group member. The station group information includes at least one station group element field, and the station group element field is used to indicate a station group member. Further, the first AP sends the station group setup request message to at least one second access point AP, so that the at least one second access point AP determines a station group context. The station group context may also be understood as a station group information list. The station group context may include IDs of a plurality of station groups and information about station group members included in the station groups. Based on this solution, the first access point AP may transfer the determined station group information to the second access point, so that the second access point maintains the station group context of the second access point.

In some possible implementations, a type of any one of the at least one station group member is a station, a station and a specified direction, or a station pair. If the type of any one of the at least one station group member is a station, a station group element field corresponding to the station group member includes an identifier of the station. If the type of any one of the at least one station group member is a station pair, and the station pair includes two stations, a station group element field corresponding to the station group member includes identifiers of the two stations included in the station pair. If the type of any one of the at least one station group member is a station and a specified direction, a station group element field corresponding to the station group member includes an identifier of the station, and an antenna identifier and/or a sector identifier of the station.

In some possible implementations, the station group element field includes one or a combination of the following: a station group element identifier, used to indicate a station group member corresponding to the station group element field; and a station group element type identifier, used to indicate a type of a station group member indicated by the station group element field.

In some possible implementations, the station group information further includes a station group element field quantity identifier, used to indicate a quantity of station group element fields included in the station group information. The station group element field quantity identifier may also indicate a quantity of station group members included in a station group. This is because the station group members are in a one-to-one correspondence with the station group element fields.

In some possible implementations, the station group setup request message further includes one or a combination of the following: a station group quantity identifier, used to indicate a quantity of station groups included in the station group setup request message; and at least one station group definition identifier, where the at least one station group definition identifier is in a one-to-one correspondence with the at least one station group, and the station group definition identifier is used to indicate a definition manner of a corresponding station group.

In some possible implementations, the definition manner includes a first definition and/or a second definition, where the first definition indicates that a station group member in the station group corresponding to the station group definition identifier satisfies a condition of being scheduled for simultaneous communication, and the second definition indicates that a station group member in the station group corresponding to the station group definition identifier does not satisfy a condition of being scheduled for simultaneous communication. Based on the identifier, the first AP may indicate, to the second AP, a condition satisfied by each station group, to facilitate subsequent scheduling and transmission.

In some possible implementations, the method further includes: The first access point AP receives a station group setup response message sent by the at least one second access point, where the station group setup response message includes at least one result identifier, and the result identifier is used to indicate whether a station group is successfully established. The first AP may obtain a station group setup result based on the station group setup response message. Reliability is higher. In addition, the second AP feeds back only the station group setup result, and does not need to feed back an ID of a station group, reducing signaling overheads.

In some possible implementations, the station group setup response message further includes an ID of at least one station group, and the ID of the at least one station group is in a one-to-one correspondence with the at least one result identifier. The first AP may obtain the station group setup result based on the station group setup response message. Reliability is higher.

In some possible implementations, the method further includes: The first access point AP receives a station group setup response message sent by the at least one second access point, where the station group setup response message includes an ID of a station group that is successfully set up and that is in the at least one station group, or an ID of a station group that is unsuccessfully set up and that is in the at least one station group. Based on this solution, the first AP may obtain a station group setup result. Reliability is higher. In addition, only an ID of a station group that is successfully or unsuccessfully set up is fed back, reducing signaling overheads to some extent.

In some possible implementations, the method further includes: The first AP sends a scheduling request message to the at least one second access point AP, where the scheduling request message includes information about at least one scheduling set and at least one transmission time identifier, the information about the at least one scheduling set is used to indicate the at least one scheduling set, and the scheduling set includes at least one station group. The at least one transmission time identifier is in a one-to-one correspondence with the at least one scheduling set, and the transmission time identifier is used to indicate a transmission time range in which the at least one station group indicated by the scheduling set performs transmission. In this way, the at least one second AP schedules, based on the scheduling request message, a station group member to perform transmission in the corresponding transmission time range, where the station group member is served by the at least one second AP and is in the at least one station group indicated by the scheduling set. Alternatively, the at least one second AP does not schedule, based on the scheduling request message, a station group member to perform transmission in the corresponding transmission time range, where the station group member is served by the at least one second AP and is in the at least one station group indicated by the scheduling set. Compared with existing scheduling based on a single station, scheduling based on a station group improves efficiency of communication and scheduling between APs.

In some possible implementations, the information about the scheduling set includes the ID of the at least one station group.

In some possible implementations, the scheduling request message further includes a first scheduling time identifier, used to indicate a time range in which the at least one second AP schedules the at least one station group. Alternatively, the scheduling request message further includes at least one second scheduling time identifier, where the at least one second scheduling time identifier is respectively used to indicate a time range in which the at least one second AP schedules the at least one scheduling set. The at least one second scheduling time identifier is in a one-to-one correspondence with the at least one scheduling set. Based on the scheduling time identifier, the first access point AP may control a time range in which a member AP (for example, an AP 2 or an AP 3) sends an air interface message to a STA served by the member AP, thereby avoiding interference between a plurality of member APs.

According to a fourth aspect, this application provides a station group setup method applied to a second access point side, including: A second access point AP receives a station group setup request message, where the station group setup request message includes an ID of at least one station group and at least one piece of station group information, the at least one piece of station group information is in a one-to-one correspondence with the ID of the at least one station group, and any one of the at least one station group includes at least one station group member. The station group information includes at least one station group element field, and the station group element field is used to indicate a station group member. The second AP determines a station group context based on the station group setup request message. Based on this solution, the second access point AP may receive the station group information transferred by a first AP, to maintain the station group context of the second access point AP.

In some possible implementations, a type of any one of the at least one station group member is a station, a station and a specified direction, or a station pair. If the type of any one of the at least one station group member is a station, a station group element field corresponding to the station group member includes an identifier of the station. If the type of any one of the at least one station group member is a station pair, and the station pair includes two stations, a station group element field corresponding to the station group member includes identifiers of the two stations included in the station pair. If the type of any one of the at least one station group member is a station and a specified direction, a station group element field corresponding to the station group member includes an identifier of the station, and an antenna identifier and/or a sector identifier of the station.

In some possible implementations, the station group element field further includes one or a combination of the following: a station group element identifier, used to indicate a station group member corresponding to the station group element field; and a station group element type identifier, used to indicate a type of a station group member indicated by the station group element field.

In some possible implementations, the station group information further includes a station group element field quantity identifier, used to indicate a quantity of station group element fields included in the station group information. The station group element field quantity identifier may also indicate a quantity of station group members included in a station group. This is because the station group members are in a one-to-one correspondence with the station group element fields.

In some possible implementations, the station group setup request message further includes one or a combination of the following: a station group quantity identifier, used to indicate a quantity of station groups included in the station group setup request message; and at least one station group definition identifier, where the at least one station group definition identifier is in a one-to-one correspondence with the at least one station group, and the station group definition identifier is used to indicate a definition manner of a corresponding station group.

In some possible implementations, the definition manner includes a first definition and/or a second definition, where the first definition indicates that a station group member in the station group corresponding to the station group definition identifier satisfies a condition of being scheduled for simultaneous communication, and the second definition indicates that a station group member in the station group corresponding to the station group definition identifier does not satisfy a condition of being scheduled for simultaneous communication. Based on the identifier, the first AP may indicate, to the second AP, a condition satisfied by each station group, to facilitate subsequent scheduling and transmission.

In some possible implementations, the method further includes: The second AP sends a station group setup response message to the first AP, where the station group setup response message includes at least one result identifier, and the result identifier is used to indicate whether a station group is successfully established. The second AP feeds back a station group setup result based on the station group setup response message, so that the first AP can learn of a station group setup status. Reliability is higher. In addition, the second AP feeds back only the station group setup result, and does not need to feed back an ID of a station group, reducing signaling overheads.

In some possible implementations, the station group setup response message further includes an ID of at least one station group, and the ID of the at least one station group is in a one-to-one correspondence with the at least one result identifier. The second AP feeds back a station group setup result based on the station group setup response message, so that the first AP can learn of a station group setup status. Reliability is higher.

In some possible implementations, the method further includes: The second AP sends a station group setup response message to the first AP, where the station group setup response message includes an ID of a station group that is successfully set up and that is in the at least one station group, or an ID of a station group that is unsuccessfully set up and that is in the at least one station group. Based on this solution, the first AP may obtain a station group setup result. Reliability is higher. In addition, only an ID of a station group that is successfully or unsuccessfully set up is fed back, reducing signaling overheads to some extent.

In some possible implementations, the method further includes: The second AP receives a scheduling request message sent by the first AP, where the scheduling request message includes information about at least one scheduling set and at least one transmission time identifier, the information about the at least one scheduling set is used to indicate the at least one scheduling set, and the scheduling set includes the at least one station group. The at least one transmission time identifier is in a one-to-one correspondence with the at least one scheduling set, and the transmission time identifier is used to indicate a transmission time range in which the at least one station group in the scheduling set performs transmission. In this way, the second AP schedules, based on the scheduling request message, a station group member to perform transmission in the corresponding transmission time range, where the station group member is served by the at least one second AP and is in the at least one station group in the scheduling set. Alternatively, the at least one second AP does not schedule, based on the scheduling request message, a station group member to perform transmission in the corresponding transmission time range, where the station group member is served by the at least one second AP and is in the at least one station group indicated by the scheduling set. Compared with existing scheduling based on a single station, scheduling based on a station group improves efficiency of communication and scheduling between APs.

In some possible implementations, the scheduling request message further includes: a first scheduling time identifier, used to indicate a time range in which the at least one second AP schedules the at least one station group; or at least one second scheduling time identifier, where the at least one second scheduling time identifier is respectively used to indicate a time range in which at least one second AP schedules the at least one scheduling set. The at least one second scheduling time identifier is in a one-to-one correspondence with the at least one scheduling set. Based on the scheduling time identifier, the first access point AP may control a time range in which a member AP (for example, an AP 2 or an AP 3) sends an air interface message to a STA served by the member AP, thereby avoiding interference between a plurality of member APs.

According to a fifth aspect, this application provides a station group update method applied to a first access point side, including: A first access point AP generates a station group update request message, where the station group update request message includes an ID of at least one to-be-updated station group and at least one station group element field corresponding to the at least one to-be-updated station group. The at least one station group element field includes at least one first station group element field and/or at least one second station group element field. The first station group element field is used to indicate a station group member to be added to a to-be-updated station group, and the second station group element field is used to indicate a station group member to be deleted from a to-be-updated station group. The first AP sends the station group update request message to at least one second access point AP, where the station group update request message is used to indicate the at least one second AP to update a station group context.

In some possible implementations, a type of the station group member to be added is a station, a station and a specified direction, or a station pair. If the type of the station group member is a station, the first station group element field includes an identifier of the station. If the type of the station group member is a station pair, the first station group element field includes identifiers of two stations included in the station pair. If the type of the station group member is a station and a specified direction, the first station group element field includes an identifier of the station, and an antenna identifier and/or a sector identifier of the station.

In some possible implementations, a type of the station group member to be deleted may also be a station, a station and a specified direction, or a station pair. If the type of the station group member is a station, the second station group element field includes an identifier of the station. If the type of the station group member is a station pair, the second station group element field includes identifiers of two stations included in the station pair. If the type of the station group member is a station and a specified direction, the second station group element field includes an identifier of the station, and an antenna identifier and/or a sector identifier of the station.

In some possible implementations, the second station group element field includes a station group element identifier, where the station group element identifier is used to indicate a to-be-deleted station group member corresponding to the second station group element field. For example, the station group element identifier is a sequence number of a station group member. A station group element identifier is used to indicate a to-be-deleted station group member, and there is no need to transmit all information about the to-be-deleted station group member, reducing signaling overheads.

In some possible implementations, the station group element field further includes one or a combination of the following: a station group element identifier, where the station group element identifier is used to indicate a station group member corresponding to the station group element field; and a station group element type identifier, used to indicate a type of a station group member indicated by the station group element field.

In some possible implementations, the station group update request message further includes one or a combination of the following: a station group quantity identifier, used to indicate a quantity of to-be-updated station groups included in the station group update request message; at least one first station group element field quantity identifier, where the first station group element field quantity identifier is used to indicate a quantity of station group element fields to be added to a corresponding to-be-updated station group, and the at least one first station group element field quantity identifier is in a one-to-one correspondence with the at least one to-be-updated station group; and at least one second station group element field quantity identifier, where the second station group element field quantity identifier is used to indicate a quantity of station group element fields to be deleted from a corresponding to-be-updated station group, and the at least one second station group element field quantity identifier is in a one-to-one correspondence with the at least one to-be-updated station group.

In some possible implementations, the method further includes: The first AP receives a station group update response message sent by the at least one second AP, where the station group update response message includes at least one result identifier, and the result identifier is used to indicate whether a to-be-updated station group is successfully updated.

In some possible implementations, the station group update response message further includes an ID of the at least one to-be-updated station group, and the ID of the at least one to-be-updated station group is in a one-to-one correspondence with the at least one result identifier.

In some possible implementations, the method further includes: The first AP receives a station group update response message sent by the at least one second AP, where the station group update response message includes an ID of a station group that is successfully updated in the at least one to-be-updated station group, or an ID of a station group that is unsuccessfully updated in the at least one to-be-updated station group.

According to a sixth aspect, this application provides a station group update method applied to a second access point side, including: A second access point AP receives a station group update request message sent by a first access point AP, where the station group update request message includes an ID of at least one to-be-updated station group and at least one station group element field corresponding to the to-be-updated station group. The to-be-updated station group includes at least one station group member. The at least one station group element field includes at least one first station group element field and/or at least one second station group element field. The first station group element field is used to indicate a station group member to be added to a to-be-updated station group, and the second station group element field is used to indicate a station group member to be deleted from a to-be-updated station group. The second AP updates a station group context based on the station group update request message.

In some possible implementations, a type of the station group member to be added is a station, a station and a specified direction, or a station pair. If the type of the station group member is a station, the first station group element field includes an identifier of the station. If the type of the station group member is a station pair, the first station group element field includes identifiers of two stations included in the station pair. If the type of the station group member is a station and a specified direction, the first station group element field includes an identifier of the station, and an antenna identifier and/or a sector identifier of the station.

In some possible implementations, a type of the station group member to be deleted is a station, a station and a specified direction, or a station pair. If the type of the station group member is a station, the second station group element field includes an identifier of the station. If the type of the station group member is a station pair, the second station group element field includes identifiers of two stations included in the station pair. If the type of the station group member is a station and a specified direction, the second station group element field includes an identifier of the station, and an antenna identifier and/or a sector identifier of the station.

In some possible implementations, the second station group element field includes a station group element identifier, where the station group element identifier is used to indicate a to-be-deleted station group member corresponding to the second station group element field.

In some possible implementations, the method further includes: The second AP sends a station group update response message first the first AP, where the station group update response message includes at least one result identifier, and the result identifier is used to indicate whether a to-be-updated station group is successfully updated.

In some possible implementations, the station group update response message further includes an ID of the at least one to-be-updated station group, and the ID of the at least one to-be-updated station group is in a one-to-one correspondence with the at least one result identifier.

In some possible implementations, the method further includes: The second AP sends a station group update response message to the first AP, where the station group update response message includes an ID of a station group that is successfully updated in the at least one to-be-updated station group, or an ID of a station group that is unsuccessfully updated in the at least one to-be-updated station group.

According to a seventh aspect, this application provides a station group release method applied to a first access point side, including: A first access point AP generates a station group release request message, where the station group release request message includes an ID of at least one to-be-released station group. The first AP sends the station group release request message to at least one second access point AP, where the station group release request message is used to indicate the at least one second AP to release, from a station group context, a station group indicated by an ID of a to-be-released station group.

In some possible implementations, the method further includes: The first AP receives a station group release response message sent by the at least one second AP, where the station group release response message includes at least one release result identifier, and the release result identifier is used to indicate whether a to-be-released station group is successfully released.

In some possible implementations, the station group release response message further includes an ID of at least one to-be-released station group, and the ID of the at least one to-be-released station group is in a one-to-one correspondence with the at least one release result identifier.

In some possible implementations, the method further includes: The first AP receives a station group release response message sent by the at least one second AP, where the station group release response message includes an ID of a station group that is successfully released in the at least one to-be-released station group, or an ID of a station group that is unsuccessfully released in the at least one to-be-released station group.

According to an eighth aspect, this application provides a station group release method applied to a second access point side, including: A second access point AP receives a station group release request message sent by a first access point AP, where the station group release request message includes an ID of at least one to-be-released station group. The second AP releases, based on the station group release request message, a station group indicated by an ID of a to-be-released station group in a station group context.

In some possible implementations, the method further includes: The second AP sends a station group release response message to the first AP, where the station group release response message includes at least one release result identifier, and the release result identifier is used to indicate whether the to-be-released station group is successfully released.

In some possible implementations, the station group release response message further includes an ID of at least one to-be-released station group, and the ID of the at least one to-be-released station group is in a one-to-one correspondence with the at least one release result identifier.

In some possible implementations, the method further includes: The second AP sends a station group release response message to the first AP. The station group release response message includes an ID of a station group that is successfully released in the at least one to-be-released station group, or an ID of a station group that is unsuccessfully released in the at least one to-be-released station group.

According to a ninth aspect, this application provides a transmission scheduling method applied to a first access point, including: The first access point AP generates a scheduling indication message, where the scheduling indication message includes information about Y scheduling sets of the first access point AP and Y transmission time identifiers, the information about the Y scheduling sets are used to indicate the Y scheduling sets, and the transmission time identifier is used to indicate a time range in which a scheduling set is scheduled by the first access point AP to perform transmission. The Y scheduling sets are in a one-to-one correspondence with the Y transmission times, and Y is an integer greater than or equal to 1. The first access point AP sends the scheduling indication message to one or more second APs, where the scheduling indication message is used to indicate the Y transmission times corresponding to the Y scheduling sets of the first access point AP to the one or more second APs.

According to a tenth aspect, this application provides a transmission scheduling method applied to a second access point, including: The second access point AP receives a scheduling indication message sent by a first access point AP, where the scheduling indication message includes information about Y scheduling sets of the first access point AP and Y transmission time identifiers, the information about the Y scheduling sets are used to indicate the Y scheduling sets, and the transmission time identifier is used to indicate a time range in which a scheduling set is scheduled by the first access point AP to perform transmission. The Y scheduling sets are in a one-to-one correspondence with Y transmission times, and Y is an integer greater than or equal to 1. The scheduling indication message is used to indicate the Y transmission times corresponding to the Y scheduling sets of the first access point AP to one or more other APs. The second access point AP determines, based on the scheduling indication message, whether to schedule a STA, served by the second access point, to perform transmission in a transmission time.

According to an eleventh aspect, an embodiment of this application provides a communications apparatus on a first access point side. The apparatus may be a first access point device, or may be a chip in a first access point. The apparatus has functions of implementing the first access point in any one of the first aspect, the third aspect, the fifth aspect, the seventh aspect, or the ninth aspect. The functions may be implemented by hardware, or may be implemented by hardware by executing corresponding software. The hardware or software includes one or more units corresponding to the foregoing functions.

In a possible implementation, when the apparatus is a first access point, the first access point includes a processor and a transceiver. The processor is configured to support the first access point AP in performing a corresponding function in the foregoing methods. The transceiver is configured to: support communication between the first access point AP and a second access point AP, and send information or an instruction used in the foregoing methods to the second access point. Optionally, the first access point may further include a memory. The memory is configured to be coupled to the processor, and the memory stores a program instruction and data that are necessary for the first access point.

In a possible implementation, the apparatus includes a processor, a baseband circuit, a radio frequency circuit, and an antenna. The processor is configured to control functions of each circuit part. The baseband circuit is configured to generate various signaling and messages such as a scheduling request message, and send, to a second access point AP through the antenna, signaling and messages resulting from processing of the radio frequency circuit such as analog conversion, filtering, amplification, and up-conversion. Optionally, the apparatus may further include a memory. The memory stores a program instruction and data that are necessary for the first access point.

In a possible implementation, when the apparatus is a chip in a first access point, the chip includes a processing module and a transceiver module. The processing module may be, for example, a processor. For example, the processor is configured to generate various messages and signaling, and perform processing such as encoding, modulation, and amplification on various messages resulting from protocol-based encapsulation. The processor may be further configured to perform demodulation, decoding, and decapsulation to obtain the signaling and messages. The transceiver module may be, for example, an input/output interface, a pin, or a circuit on the chip. The processing module may execute a computer executable instruction stored in a storage unit, to support the first access point AP in performing corresponding functions in the foregoing methods. Optionally, the storage unit may be a storage unit in the chip, for example, a register or a buffer. The storage unit may be alternatively a storage unit that is in the first access point and that is located outside the chip, for example, a read-only memory (read-only memory, ROM for short) or another type of static storage device that can store static information and instructions, or a random access memory (random access memory, RAM for short).

In a possible implementation, the apparatus may include a processor and a modem. The processor may be configured to process an instruction or an operating system to control a function of the first access point. The modem may perform encapsulation, encoding/decoding, modulation/demodulation, equalization, and the like on data according to a protocol, to generate a radio frame, to support the first access point AP in performing a corresponding function in any one of the first aspect, the third aspect, the fifth aspect, the seventh aspect or the ninth aspect.

In a possible implementation, the apparatus includes a processor. The processor is configured to be coupled to a memory, read an instruction in the memory, and perform, according to the instruction, the method according to any one of the first aspect, the third aspect, the fifth aspect, the seventh aspect, or the ninth aspect. The memory may be located inside the processor, or may be located outside the processor.

The processor mentioned anywhere above may be a general-purpose central processing unit (Central Processing Unit, CPU for short), a microprocessor, an application-specific integrated circuit (application-specific integrated circuit, ASIC for short), or one or more integrated circuits configured to control program execution in the methods in the foregoing aspects.

According to a twelfth aspect, this application provides a communications apparatus on a second access point side. The apparatus may be a second access point, or may be a chip in a second access point. The apparatus has functions of implementing the second access point in any one of the second aspect, the fourth aspect, the sixth aspect, the eighth aspect, or the tenth aspect. The functions may be implemented by hardware, or may be implemented by hardware by executing corresponding software. The hardware or software includes one or more units corresponding to the foregoing functions.

In a possible implementation, when the apparatus is a second access point, the second access point includes a processor and a transceiver. The processor is configured to support the second access point AP in performing a corresponding function in the foregoing methods. The transceiver is configured to support communication between the second access point AP and another second access point AP or a station, for example, receiving information or an instruction, such as a scheduling request message or a station group setup request message, sent by a first access point in the foregoing methods. Optionally, the second access point may further include a memory. The memory is configured to be coupled to the processor, and the memory stores a program instruction and data that are necessary for the second access point.

In a possible implementation, the apparatus includes a processor, a baseband circuit, a radio frequency circuit, and an antenna. The processor is configured to control functions of each circuit part. The radio frequency circuit may perform processing such as digital conversion, filtering, amplification, and down-conversion on a data packet (for example, a data packet carrying a scheduling request message) that is sent by the first access point and that is received through the antenna: The baseband circuit decodes the data packet and decapsulates the data packet according to a protocol, to obtain signaling information. Optionally, the apparatus further includes a memory. The memory stores a program instruction and data that are necessary for the second access point.

In a possible implementation, when the apparatus is a chip in a second access point, the chip includes a processing module and a transceiver module. The processing module may be, for example, a processor. The processor may be configured to perform processing such as filtering, demodulation, power amplification, and decoding on a data packet (for example, a data packet including a scheduling request message) that carries signaling or data information and that is received by the transceiver module. The transceiver module may be, for example, an input/output interface, a pin, or a circuit on the chip. The processing module may execute a computer executable instruction stored in a storage unit, to support the second access point AP in performing corresponding functions in the foregoing methods. Optionally, the storage unit may be a storage unit in the chip, for example, a register or a buffer. The storage unit may be alternatively a storage unit that is in the second access point and that is located outside the chip, for example, a read-only memory (read-only memory, ROM for short) or another type of static storage device that can store static information and instructions, or a random access memory (random access memory, RAM for short).

In a possible implementation, the apparatus includes a processor and a modem. The processor may be configured to process an instruction or an operating system to control a function of the second access point. The modem may perform encapsulation, encoding/decoding, modulation/demodulation, equalization, and the like on data according to a protocol, to generate a downlink frame, to support the second access point AP in performing a corresponding function in the method in the first aspect or the third aspect.

In a possible implementation, the apparatus includes a processor. The processor is configured to be coupled to a memory, read an instruction in the memory, and perform, according to the instruction, the method according to any one of the second aspect, the fourth aspect, the sixth aspect, the eighth aspect, or the tenth aspect. The memory may be located inside the processor, or may be located outside the processor.

The processor mentioned anywhere above may be a general-purpose central processing unit (Central Processing Unit, CPU for short), a microprocessor, an application-specific integrated circuit (application-specific integrated circuit, ASIC for short), or one or more integrated circuits configured to control program execution in the methods in the foregoing aspects.

According to a thirteenth aspect, this application provides a computer-readable storage medium. The computer-readable storage medium stores an instruction, and the instruction may be executed by one or more processors on a processing circuit. When the instruction is run on a computer, the computer is enabled to perform the method according to any one of the first to the tenth aspects or any possible implementation thereof.

According to a fourteenth aspect, a computer program product including an instruction is provided. When the computer program product runs on a computer, the computer is enabled to perform the method according to any one of the first to the tenth aspect or any possible implementation thereof.

According to another aspect, this application provides a chip system. The chip system includes a processor, configured to support a data sending device in implementing functions in the foregoing aspects, for example, generating or processing data and/or information used in the foregoing aspects. In a possible design, the chip system further includes a memory, and the memory is configured to store a program instruction and data that are necessary for the data sending device. The chip system may include a chip, or may include a chip and another discrete device.

According to still another aspect, an embodiment of this application provides a wireless communications system. The system includes the first access point and the at least one second access point in the foregoing aspects.

In the technical solutions in this application, efficiency of scheduling and transmission in an access point cluster can be improved through interaction between access points APs.

### BRIEF DESCRIPTION OF DRAWINGS

FIG. 1 is a schematic diagram of a beacon interval;
FIG. 2 is an example of an application scenario according to an embodiment of this application;
FIG. 3 is a schematic flowchart of a station group setup method according to an embodiment of this application;
FIG. 4a is a schematic structural diagram of a station group setup request message according to an embodiment of this application;
FIG. 4b is another schematic structural diagram of a station group setup request message according to an embodiment of this application;
FIG. 5a is a schematic structural diagram of a station group element field according to an embodiment of this application;
FIG. 5b is another schematic structural diagram of a station group element field according to an embodiment of this application;
FIG. 5c is a schematic structural diagram of still another station group element field according to an embodiment of this application;
FIG. 6 is still another schematic structural diagram of a station group setup request message according to an embodiment of this application;
FIG. 7a is a schematic structural diagram of a station group setup response message according to an embodiment of this application;
FIG. 7b is another schematic structural diagram of a station group setup response message according to an embodiment of this application;
FIG. 7c is still another schematic structural diagram of a station group setup response message according to an embodiment of this application;
FIG. 7d is yet another schematic structural diagram of a station group setup response message according to an embodiment of this application;
FIG. 8 is a schematic flowchart of a station group update method according to an embodiment of this application;
FIG. 9a is a schematic structural diagram of a station group update request message according to an embodiment of this application;
FIG. 9b is another schematic structural diagram of a station group update request message according to an embodiment of this application;
FIG. 10 is a schematic flowchart of a station group release method according to an embodiment of this application;
FIG. 11 is a schematic structural diagram of a station group release response message according to an embodiment of this application;
FIG. 12a is a schematic structural diagram of a measurement request message according to an embodiment of this application;
FIG. 12b is another schematic structural diagram of a measurement request message according to an embodiment of this application;
FIG. 12c is still another schematic structural diagram of a measurement request message according to an embodiment of this application;
FIG. 12d is yet another schematic structural diagram of a measurement request message according to an embodiment of this application;
FIG. 12e is still yet another schematic structural diagram of a measurement request message according to an embodiment of this application;
FIG. 13a is a further schematic structural diagram of a measurement request message according to an embodiment of this application;
FIG. 13b is still further schematic structural diagram of a measurement request message according to an embodiment of this application;
FIG. 14a is a schematic structural diagram of a measurement structure indication message according to an embodiment of this application;
FIG. 14b is another schematic structural diagram of a measurement structure indication message according to an embodiment of this application;
FIG. 14c is still another schematic structural diagram of a measurement structure indication message according to an embodiment of this application;
FIG. 15 is a schematic flowchart of a transmission scheduling method according to an embodiment of this application;
FIG. 16a is a schematic structural diagram of a scheduling request message according to an embodiment of this application;
FIG. 16b is another schematic structural diagram of a scheduling request message according to an embodiment of this application;
FIG. 17a is a schematic structural diagram of information about a scheduling set according to an embodiment of this application;
FIG. 17b is another schematic structural diagram of information about a scheduling set according to an embodiment of this application;
FIG. 17c is still another schematic structural diagram of information about a scheduling set according to an embodiment of this application;
FIG. 17d is yet another schematic structural diagram of information about a scheduling set according to an embodiment of this application;
FIG. 17e is still yet another schematic structural diagram of information about a scheduling set according to an embodiment of this application;
FIG. 18 is still another schematic structural diagram of a scheduling request message according to an embodiment of this application;
FIG. 19A to FIG. 19C are a schematic timing diagram of setup of a station group that is based on a definition 1 according to an embodiment of this application;
FIG. 20A to FIG. 20D are a schematic timing diagram of update of a station group according to an embodiment of this application;
FIG. 21 is a schematic timing diagram of centralized station group scheduling according to an embodiment of this application;
FIG. 22A to FIG. 22D are a schematic timing diagram of setup and update of a station group that is based on a definition 2 according to an embodiment of this application;
FIG. 23 is another schematic timing diagram of centralized station group scheduling according to an embodiment of this application;
FIG. 24 is a schematic flowchart of a non-centralized scheduling method according to an embodiment of this application;
FIG. 25a is a schematic structural diagram of a scheduling indication message according to an embodiment of this application;
FIG. 25b is another schematic structural diagram of a scheduling indication message according to an embodiment of this application;
FIG. 26a is a schematic timing diagram of a non-centralized scheduling method based on a definition 1 according to an embodiment of this application;
FIG. 26b is a schematic timing diagram of a non-centralized scheduling method based on a definition 2 according to an embodiment of this application;
FIG. 27 is a schematic flowchart of a non-centralized station group setup method according to an embodiment of this application;
FIG. 28 is a schematic timing diagram of a non-centralized station group scheduling method according to an embodiment of this application;
FIG. 29 is a schematic diagram of an apparatus applied to a first access point AP side according to an embodiment of this application;
FIG. 30 is a schematic diagram of an apparatus applied to a first access point AP side according to an embodiment of this application;
FIG. 31 is a schematic diagram of an apparatus applied to a second access point AP side according to an embodiment of this application; and
FIG. 32 is a schematic diagram of an apparatus applied to a second access point AP side according to an embodiment of this application.

### DESCRIPTION OF EMBODIMENTS

Terms used in DESCRIPTION OF EMBODIMENTS of this application are only used to explain specific embodiments of this application, and are not intended to limit this application.

Some terms in this application are first described, to help a person skilled in the art have a better understanding.
(1) A station is a device that has a wireless connection function and that can provide voice and/or data connectivity for a user, and may also be referred to as a terminal device, user equipment (user equipment, UE), a mobile station (mobile station, MS), a mobile terminal (mobile terminal, MT), or the like. Currently, some examples of the station include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a vehicle-mounted device, and the like.
(2) An access point is a device that connects a station to a wireless network in a communications system, and may also be referred to as a radio access network (radio access network, RAN) node (or device), a base station, or the like. Currently, some examples of the access point are a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home Node B, HNB), a baseband unit (base band unit, BBU), a Wi-Fi access point, and another interface device that can work in a wireless environment.
   In addition, in a network structure, the access point may include a centralized unit (centralized unit, CU) node and a distributed unit (distributed unit, DU) node. In this structure, protocol layers of an eNB in a long term evolution (long term evolution, LTE) system are separated. Functions of some protocol layers are centrally controlled by a CU, and functions of some or all of remaining protocol layers are distributed in DUs. The DUs are centrally controlled by the CU.
(3) Personal basic service set (personal basic service set, PBSS) control point (control point)/access point (access point) clustering, referred to as PCP/AP clustering for short, includes one synchronization AP (S-PCP/AP: synchronization PCP/AP) and at least one member AP, and is a mechanism defined in the 802.11ad standard for communication between the synchronization AP and the member AP, to implement spatial sharing and interference mitigation. All APs in a cluster are coordinated by one synchronization AP, to improve spatial sharing efficiency and mitigate interference among a plurality of BSSs in a same channel. The PCP/AP clustering includes centralized clustering and non-centralized clustering.
(4) Virtual AP: A plurality of APs are coordinated and aggregated into a cluster, where the cluster is also referred to as a virtual AP (V-PCP/AP: virtual PCP/AP). A virtual AP seems to be an independent AP that provides association, authentication, and communication scheduling services for STAs, and is managed by a centralized coordination AP. Based on a spatial sharing technology, a plurality of APs in a virtual AP serve a plurality of STAs at the same time, to increase a system capacity. It may be understood that the virtual AP may have another name. This is not specifically limited in the embodiments of this application.
(5) Beacon interval (beacon interval): A beacon interval is set for synchronization between a station and an access point in a communications system, and is used for communication scheduling of each device in the communications system. A beacon interval is divided into a plurality of access periods, and each period has a different objective and access mechanism.

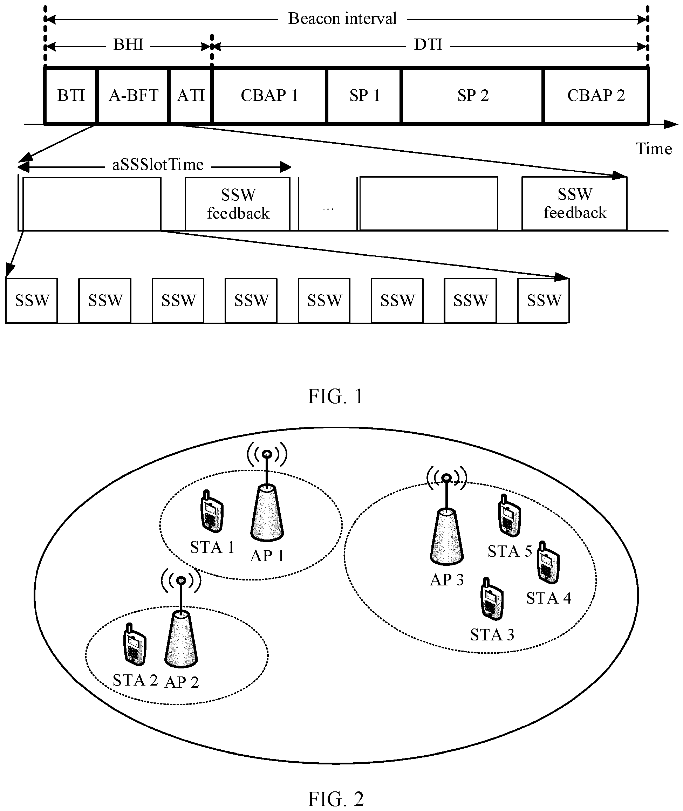

A beacon interval in a Wi-Fi system in the 802.11ad standard is used as an example below to briefly describe an access period in the beacon interval. Referring to a schematic structural diagram of a beacon interval shown in FIG. 1, the beacon interval includes a beacon header interval (beacon header interval, BHI) and a data transfer interval (data transfer interval, DTI).

The BHI includes the following three intervals: a beacon transmission interval (beacon transmission interval, BTI), an association-beamforming training (association-beamforming training, A-BFT) interval, and an announcement transmission interval (announcement transmission interval, ATI).

In the BTI, an access point may broadcast one or more beacon frames. The access point may send these beacon frames in different sector directions, and each beacon frame carries an antenna identifier (identifier, ID) and a sector identifier that are used when the access point sends the beacon frame. The 802.11ad standard stipulates that an access point cannot change, within one BTI, an antenna that is used to send a beacon frame.

The A-BFT interval is used to implement an A-BFT process. The A-BFT process includes a beam direction training process and a beam feedback process. In the A-BFT process, a station may sweep transmit beam sectors and antennas in different directions, and the access point may sweep omnidirectional receive beam sectors and antennas. Alternatively, a station may sweep a transmit beam sector and an antenna in a fixed direction, and the access point may sweep transmit beam sectors and antennas in different directions.

One A-BFT process includes one or more sector sweep slots (sector sweep Slot, SSW Slot), and a length of one SSW slot is an SSW slot. In each A-BFT process, a station randomly selects one SSW slot to send a sector sweep frame (SSW Frame). The station may send at least one SSW frame to an access point in each SSW slot. A quantity of SSW frames sent by the station in one SSW slot cannot exceed a quantity indicated by the access point. The access point indicates, by using a beacon frame, a quantity of SSW frames that are allowed to be sent by the station to the access point in one SSW slot. If the SSW frames that need to be sent by the station cannot be sent in one SSW slot, the station may continue to send the SSW frames in a next SSW slot. After the station sends one or more SSW frames in one SSW slot, the access point replies with a sector sweep feedback frame (SSW-Feedback Frame) to the station based on an SSW frame detection result. At an end of the SSW slot, a time in which the access point replies with the SSW-feedback frame needs to ensure that the station can send a maximum quantity of SSW frames.

The DTI includes any quantity of service periods (service period, SP) in any order and any quantity of contention-based access periods (contention based access period, CBAP) in any order.

Any SP is an access period allocated to a specified pair of stations. During this period, only the pair of stations can communicate with each other, and other stations cannot preempt channels.

Any CBAP is an access period allocated to all stations (a plurality of specified stations). During this period, a station needs to access a channel through contention.

(5) An average noise plus interference power indicator (average noise plus interference power indicator, ANIPI) refers to an average noise plus interference power measured on a channel on which a station does not send a frame and does not receive a frame sent to the station.

(6) Centralized scheduling: In an access point cluster, a centralized coordination AP or a synchronization AP determines a scheduling type, a scheduling time range, and a corresponding STA or STA group for transmission. The centralized coordination AP sends a STA scheduling request to a member AP. The member AP schedules a STA of the member AP based on indicated content.

(7) Distributed scheduling: In an access point cluster, each AP independently determines a scheduling type, a scheduling time range, and a corresponding STA or STA group for transmission. The AP sends a STA scheduling indication message to another AP. After receiving the message, the another AP may schedule a STA of the another AP by using content of the message as an indication (for example, to avoid interference or perform spatial sharing).

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

The following describes the embodiments of this application in detail with reference to the accompanying drawings.

FIG. 2 is an architecture diagram of a possible communications system 200 according to an embodiment of this application. In the communications system, a high frequency band is used for communication. Referring to FIG. 2, the communications system 200 includes an access point AP 1, an access point AP 2, and an access point AP 3, and further includes a station STA 1 that is served by the access point AP 1, a station STA 2 that is served by the access point AP 2, and stations STA 3, STA 4, and STA 5 that are served by the access point AP 3. The AP 1, the AP 2, and the AP 3 may form a cluster, and the AP 1, the AP 2, and the AP 3 may simultaneously serve a plurality of stations in the system, to increase a system capacity.

It should be noted that the communications system shown in FIG. 2 does not constitute a limitation on a communications system to which the embodiments of this application are applicable. Therefore, the method provided in the embodiments of this application is applicable to various communications systems in which a high frequency band or a low frequency band is used for communication, such as a Wi-Fi system, a 5th generation (5th generation, 5G) communications system, or various future mobile communication systems. This is not limited in this application. Optionally, in the communications system, a PCP/AP clustering technology (for example, non-centralized PCP/AP clustering or centralized clustering) in the 802.11ad standard, or clustering of a virtual AP in the foregoing descriptions may be used. In this way, spatial sharing efficiency is improved and interference is mitigated. Therefore, it may be understood that the cluster including the AP 1, the AP 2, and the AP 3 may be a PCP/AP cluster defined in 802.11ad, or may be a virtual AP defined in the foregoing descriptions.

For example, if the cluster including the AP 1, the AP 2, and the AP 3 is a PCP/AP cluster defined in 802.11ad, the access point AP 1 may be a synchronization AP, to synchronize and coordinate member APs, namely, the AP 2 and the AP 3. For another example, if the cluster including the AP 1, the AP 2, and the AP 3 is a virtual AP in the foregoing descriptions, the access point AP 1 may be a coordination AP, to manage and coordinate with other APs (the AP 2 and the AP 3).

In a solution in the current technology, because an access point AP in an AP cluster schedules each STA independently, spatial sharing and joint transmission are not fully implemented. Consequently, efficiency of scheduling transmission and communication is relatively low.

In the technical solutions provided in the embodiments of this application, a station grouping (STA grouping) mechanism is defined in an AP cluster, so that efficiency of scheduling and communication between APs is improved. When any two station group members included in a station group can be scheduled or may perform communication at the same time, an AP in the AP cluster schedules the station group to perform communication, to improve a spatial sharing efficiency, improve efficiency of communication and transmission, and increase a system capacity. When any two station group members included in a station group cannot be scheduled or perform communication at the same time, and when an AP in the AP cluster schedules any station group member in the station group to perform communication, another AP does not schedule another member in the station group to perform communication, to prevent station group members in the station group from interfering with each other during communication, thereby mitigating interference.

The following further describes the solutions in the embodiments of this application with reference to more accompanying drawings.

Embodiment 1 provides a station group setup method. In the station group setup method, a centralized manner is used. To be specific, a coordination AP determines setup of a station group. In this embodiment of this application, for ease of description, an AP 1 shown in FIG. 2 is used as a coordination AP or a synchronization AP, an AP 2 and an AP 3 are used as member APs or managed APs for description. The coordination AP or the synchronization AP is also referred to as a first access point AP, and the member AP or the managed AP is also referred to as a second access point AP.

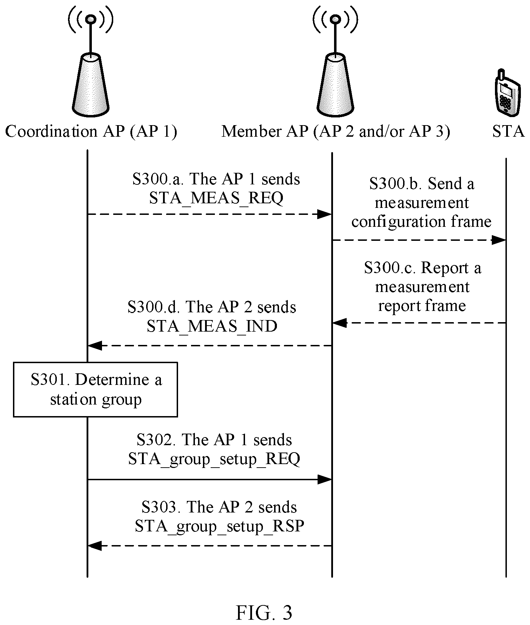

FIG. 3 is a schematic flowchart of interaction in a station group setup method according to an embodiment of this application. The method includes the following steps.

S301. A first access point AP determines a station group.

In this embodiment, the station group is set up in a centralized manner, and a coordination AP determines setup of the station group. Therefore, the first access point AP is the coordination AP or a synchronization AP. In step S301, the synchronization AP or the coordination AP (an AP 1) determines setup of the station group, and member APs (an AP 2 and an AP 3) need to report an interference situation (a STA measurement result) to the coordination AP (the AP 1). The synchronization AP or the coordination AP determines the station group based on the measurement result.

Optionally, before step S301, member APs (an AP 2 and an AP 3) need to report an interference situation (a STA measurement result) to the coordination AP (an AP 1). The synchronization AP or the coordination AP determines the station group based on the measurement result. That is, before the coordination AP determines the station group, a station needs to feed back the measurement result to access points (the member APs) that serves the station, and then the member APs (the AP 2 and the AP 3) report the interference measurement result to the AP 1. For example, when joining a PCP/AP cluster or a virtual AP, a STA 2 performs beam training with a plurality of APs (antennas), to obtain sector sweep results for the station and the plurality of APs. The sector sweep results may be sent, by using a sector sweep feedback (SSW Feedback) frame, to the AP 2 that serves the station, or may be sent, in another frame such as an association request of the STA 2, to the AP 2 that serves the station. Then, the AP 2 reports the interference measurement result to the AP 1.

As shown in FIG. 3, before the station reports the measurement result to the access point serving the station, the method may further include step S300.b: The access point AP sends a measurement configuration frame to the station STA.

The access point may adjust, by sending a measurement configuration frame (measurement configuration frame) to the station, a parameter used by the STA to perform interference measurement and measurement report, and the like.

Optionally, as shown in FIG. 3, the method may further include S300.c: The station sends a measurement report frame to the access point AP.

Based on a measurement request of the AP, the STA may perform measurement of a plurality of measurement types and report a measurement report frame. The measurement configuration frame sent by the AP to the STA may be based on a local policy or a request of the coordination AP. A measurement type included in the measurement configuration frame may be used to indicate a type of a time range in which the STA performs interference measurement, and the measurement parameter included in the measurement configuration frame may be used to indicate a condition for the STA to perform interference measurement or interference report. For example, the type of the time range indicated by the measurement type may be A-BFT. That is, the measurement type may be used to indicate that the STA performs interference measurement in an A-BFT interval.

Optionally, as shown in FIG. 3, before the AP sends the measurement configuration frame to the STA, the method may further include step S300.a: That is, the coordination AP (the AP 1) may send a STA measurement request message (station measurement request, STA_MEAS_REQ) to the member APs (the AP 2 and the AP 3), to indicate one or more STAs to perform measurement, as shown in step S300.a in FIG. 3. The coordination AP may balance load (load balancing) in an entire cluster in this manner, or evaluate validity of a STA group in this manner. The AP that serves the STA may summarize sector sweep results and/or measurement reports of the STA and a plurality of APs. Therefore, optionally, the method may further include step S300.d: The member APs send a measurement result indication message, that is, sends the measurement result to the coordination AP by using a STA measurement indication message (station measurement indication, STA_MEAS_IND).

Based on the received STA measurement result indication message STA_MEAS_IND and an existing STA group context, the coordination AP may determine to set up a new station group (STA group), modify an existing STA group, or release an existing STA group.

There may be a plurality of cases for the STA group context in this embodiment of this application.

Case 1: The STA group context is empty. That is, no station group is set up before the coordination AP receives the station measurement result indication message.

Case 2: The STA group context is not empty, and there is at least one determined station group. That is, the coordination AP has determined at least one station group before receiving the measurement result of the station.

In this embodiment of this application, the case 1 in which the STA group context is empty and the measurement result indication message is used to indicate that the coordination AP can set up a new station group is used as an example for description. In this case, the coordination AP generates a station group setup request message. The station group setup request message includes information about a newly setup station group.

S302. The first access point AP sends the station group setup request message (station group setup request, STA_group_setup_REQ) to at least one second access point AP.

The first AP generates the station group setup request message STA_group_setup_REQ, where the station group setup request message STA_group_setup_REQ is used by the at least one AP 2 to determine a station group context (STA group context).

The station group setup request message includes IDs of N station groups and N pieces of station group information, and the IDs of the N station groups are in a one-to-one correspondence with the N pieces of station group information. N is an integer greater than or equal to 1, and any one of the N station groups includes at least one station group member.

Correspondingly, one piece of station group information is used to indicate at least one station group member included in one station group, any piece of station group information includes at least one station group element field, and one station group element field is used to indicate one station group member.

It may be understood that the newly setup station group determined in step S301 may include the N station groups included in the station group setup request message.

There are a plurality of types of station group members in the station group, including but not limited to a station pair (a pair of STAs, a STA pair), a station and a specified direction (a STA and a specified direction of the STA), and a station (a STA).

In an example, when a type of a station group member in a station group is a station pair, a station group element field corresponding to the station group member includes identifiers of two stations included in the station pair.

In another example, when a type of a station group member in a station group is a station and a specified direction, a station group element field corresponding to the station group member includes: an identifier of the station, and an antenna identifier and/or a sector identifier of the station. That is, in a first example, the station group element field may include the identifier of the station and the antenna identifier of the station. In a second example, the station group element field may include the identifier of the station and the sector identifier of the station. In a third example, the station group element field may include the identifier of the station, the antenna identifier of the station, and the sector identifier of the station.

In still another example, when a type of a station group member in a station group is a station, a station group element field corresponding to the station group member includes an identifier of the station.

For example, the station group setup request message includes two station group IDs: a station group 1 and a station group 2. The station group 1 includes three station group members: a station (a STA 1), a station and a specified direction (a STA 2, an antenna 2, and a sector 2), and a station pair (the AP 3 and a STA 3). Correspondingly, information about the station group 1 includes three station group element fields. A first station group element field includes an identifier of the STA 1. A second station group element field includes an identifier of the STA 2, an identifier of the antenna 2, and an identifier of the sector 2. A third station group element field includes an identifier of the AP 3 and an identifier of the STA 3. The station group 2 includes two station group members: a station pair (a STA 4 and a STA 5), and a station and a specified direction (the AP 1, an antenna 1, and a sector 1). Correspondingly, information about the station group 2 includes two station group element fields. A first station group element field includes an identifier of the STA 4 and an identifier of the STA 5. A second station group element field includes an identifier of the AP 1, an identifier of the antenna 1, and an identifier of the sector 1.

It should be noted that an identifier of a station may be an association identifier (Association identifier, AID) of the station, a medium access control (medium access control, MAC) address of the station, or an ID of the station.

An identifier of an access point may be an AID of the access point AP, a MAC address of the access point, or an ID of the access point in a virtual AP or a PCP/AP cluster.

An identifier of an antenna may be an ID of the antenna, and an identifier of a sector may be an ID of the sector.

Optionally, the station group information further includes:
a station group element field quantity identifier, used to indicate a quantity of station group element fields included in the station group information. For example, if a station group 1 includes two station group members, information about the station group 1 includes two station group element fields, and a station group element field quantity identifier indicates that a quantity of station group element fields is 2.

Optionally, a station group element field further includes one or a combination of the following:
a station group element identifier, used to indicate a station group member corresponding to the station group element field, where in an example, the station group element identifier may be a sequence number of the station group member, for example, the station group setup request message includes two station group IDs: a station group 1 and a station group 2, where the station group 1 includes three station group members that are numbered 11, 12, and 13, and the station group 2 includes two station group members that are numbered 21 and 22; in this case, information about the station group 1 includes three station group element fields, where a station group element identifier in a first station group element field may be a sequence number 11 of a member 1 in the station group 1, a station group element identifier in a second station group element field may be a sequence number 12 of a member 2 in the station group 1, and so on, and details are not described again; and
a station group element type identifier: used to indicate a type of a station group member indicated by the station group element field. For example, when a value of the station group element type identifier is 00, it can be used to indicate that the type of the station group member is a station. When a value of the station group element type identifier is 01, it can be used to indicate that the type of the station group member is a station pair. If a value of the station group element type is 10, it can be used to indicate that the type of the station group member is a station and a specified direction of the station. If a value of the station group element type is 11, it can be used to indicate that the type of the station group member is another type. It may be understood that the value of the station group element type identifier and the type that is of the station group member and that corresponds to the value of the station group element type identifier may be changed.

Optionally, STA_group_setup_REQ may further include one or a combination of the following:
a station group quantity identifier, used to indicate a quantity of station groups included in the station group setup request message;
N station group definition identifiers, where the N station group definition identifiers are in a one-to-one correspondence with the N station groups, and the station group definition identifier is used to indicate a definition manner of a corresponding station group; it may be understood that, if the first AP and the second AP agree by default or agree that only one station group definition manner is used, for example, the AP 1 and the AP 2 agree that the N station groups indicated in the station group setup request message are determined by a definition 1, the station group setup request message may not include the station group definition identifiers; and
a message type field, used to indicate a type of the station group setup request message, where the message type field may be used to indicate that a type of the message is a station group setup request message.

A definition manner of a station group indicates a relationship between station group members, and the definition manner of the station group includes a first definition and/or a second definition.

When a station group corresponding to a station group definition identifier includes at least two station group members,
the first definition indicates that a station group member in the station group corresponding to the station group definition identifier satisfies a condition of being scheduled for simultaneous communication, and
the second definition indicates that a station group member in the station group corresponding to the station group definition identifier does not satisfy a condition of being scheduled for simultaneous communication.

Optionally, the station group setup request message may further include:
a transmit end address, which may be a MAC address or an association ID AID of the first access point AP, an ID defined in the PCP/AP cluster or the virtual AP, or the like; and
a receive end address, which may be a MAC address or an association ID AID of one or more second APs, an ID defined in the PCP/AP cluster or the virtual AP, or the like, or may be a broadcast address or a broadcast AID (broadcast sending), an AP group address or a group ID (multi-point sending), or the like.

It should be noted that the AP 1 may send STA_group_setup_REQ to a member AP, for example, the AP 2 in FIG. 2. The IDs of the N station groups and the N pieces of station group information in the message may be sent to the AP 2 in parallel in one frame, or may be sent to the AP 2 in serial for a plurality of times, where an ID or IDs of one or more station groups and station group information corresponding to the one or more station groups are sent each time. The AP 1 may further send STA_grou_setup_REQ to a plurality of member APs, for example, may further send STA_group_setup_REQ to the AP 3 in addition to the AP 2. It may be understood that, in a manner, STA_group_setup_REQ to be sent to the plurality of member APs may be carried in one frame and sent to the plurality of member APs in parallel, which is similar to a downlink multi-user multiple-input multiple-output (Downlink Multi-user Multiple Input and Multiple Output, DL MU-MIMO) manner. In another manner, STA_group_setup_REQ of the plurality of member APs may be carried in different frames and sent to the member APs in sequence, or sent to the member APs in parallel (similar to the DL MU-MIMO manner).

S303. The at least one second access point AP sends a station group setup response message (station group setup response, STA_group_setup_RSP)

The at least one second access point AP determines the station group context of the at least one second access point AP based on the received station group setup request message.

The second access point AP may maintain all station group information, that is, not only maintain station group information of a station group that is served by the second access point AP, but also maintain station group information of a station group that is not served by the second access point AP. Alternatively, the second access point AP may maintain only information about a station group that is served by the second access point. When the second access point maintains only the information about the station group that is served by the second access point, the determining the station group context of the second access point may include:

In a case, if at least one station group member of at least one station group in the N station groups indicated in the station group setup request message is served by the second access point, the station group is successfully set up. The second access point AP may determine the station group context of the second access point AP. The station group context may include an ID of the station group that is successfully set up and that is served by the second access point, and station group information corresponding to the station group that is successfully set up.

In another case, if none of station group members in a station group in the N station groups indicated in the station group setup request message is served by the second access point, the second access point AP may determine that the station group is unsuccessfully set up. In this case, the station group context may not include an ID of the station group that is unsuccessfully set up, and station group information corresponding to the station group that is unsuccessfully set up.

When the second access point AP may maintain all station group information, that is, not only maintain station group information of a station group that is served by the second access point AP, but also maintain station group information of a station group that is not served by the second access point AP, the determining the station group context of the second access point AP may include:

In a case, when a station group in the N station groups indicated in the station group setup request message is added to the station group context of the second access point, a context is correct, and there is no repeated information about the station group. For example, if the station group context of the second access point originally does not include the station group, the station group is successfully set up. The second access point AP may determine the station group context of the second access point AP. The station group context may include an ID of the station group that is successfully set up, and station group information corresponding to the station group that is successfully set up.

In another case, when a station group in the N station groups indicated in the station group setup request message is added to the station group context of the second access point, a context is wrong, and station group information is unsuccessfully added. For example, a station group with a same station group ID already exists. In this case, the second access point AP may determine that the station group is unsuccessfully set up. In this case, the station group context may not include an ID of the station group that is unsuccessfully set up, and station group information corresponding to the station group that is unsuccessfully set up.

In still another case, when a station group in the N station groups indicated in the station group setup request message is added to the station group context of the second access point, there is a syntax error. In this case, the second access point AP may determine that the station group is unsuccessfully set up.

It may be understood that, in the N station groups, N1 station groups may be successfully set up, and N2 station groups may be unsuccessfully set up. In a possible implementation, the station group context includes IDs of the N1 station groups that are successfully set up, and N1 pieces of station group information corresponding to the N1 station groups that are successfully set up. N1 is an integer greater than or equal to 0 and less than or equal to N, N2 is an integer greater than or equal to 0 and less than or equal to N, and a sum of N1 and N2 is equal to N.

After receiving the station group setup request message, the member AP determines whether the station group is successfully set up, and feeds back a station group setup result to the coordination AP.

The station group setup response message STA_group_setup_RSP is sent by the second access point AP (for example, the AP 2 and/or the AP 3) to the first access point AP (the AP 1).

In an example, the setup response message includes result identifiers of the N station groups, and the result identifier is used to indicate whether a corresponding station group is successfully set up. For example, there are two result identifiers, where a first result identifier is used to indicate whether a station group 1 is successfully set up, and a second result is used to indicate whether a station group 2 is successfully set up.

In still another example, the setup response message further includes IDs of M station groups and result identifiers of the M station groups, and the M result identifiers are in a one-to-one correspondence with the IDs of the M station groups. It may be understood that setup results of the N station groups included in the station group setup request message may be carried in a same station group setup response message for feedback, or may be carried in different station group setup response messages for feedback. Therefore, it may be understood that M may be equal to N, or may not be equal to N. When M=N, the IDs of the M station groups may be the N station groups indicated in the station group setup request message. When M is not equal to N, for example, when M is less than N, setup results of remaining N-M station groups may be carried in another station group setup response message and sent to the coordination AP. When M is greater than N, in addition to the setup results of the N station groups in the station group setup request message, the station group setup response message may further include setup results of M-N station groups in other station group setup request messages.

In another example, the station group setup response message includes an ID of a station group that is successfully set up and that is in the N1 station groups, or an ID of a station group that is unsuccessfully set up and that is in the N2 station groups. For example, in the N station groups, N1 station groups may be successfully set up, and N2 station groups may be unsuccessfully set up. In a first implementation, the station group setup response message may include IDs of N1 station groups that are successfully established. In a second implementation, the station group setup response message may include IDs of the N2 station groups that are unsuccessfully set up. In this case, an ID of a station group that is successfully set up is implicitly indicated to the first AP. It may be understood that, when a quantity of station groups that are successfully set up is far greater than a quantity of station groups that are unsuccessfully set up, the second implementation may be used, to reduce signaling overheads. When a quantity of station groups that are successfully set up is far less than a quantity of station groups that are unsuccessfully set up, the first implementation may be used, to reduce signaling overheads.

The station group setup response message further includes a transmit end identifier, where the transmit end identifier is used to indicate the second AP, and may be a MAC address or an association ID AID of the second AP, an ID defined in the PCP/AP cluster or the virtual AP, or the like.

Optionally, the station group setup response message may further include a receive end identifier, where the receive end identifier is used to indicate the first AP, and may be a MAC address or an association ID AID of the first AP, an ID defined in the PCP/AP cluster or the virtual AP, or the like.

### Definition of a station group

In this embodiment of this application, the station group may be defined in a plurality of manners, and the coordination AP may determine the station group based on different station group definition manners. This embodiment of this application describes two types of definitions of the station group in detail.
(1) Definition 1: A station group member in a station group determined by using the definition 1 satisfies a condition of being scheduled for simultaneous communication.

In an example, when a station group includes at least two station group members, that a station group member satisfies a condition of being scheduled for simultaneous communication may be interference between any two station group members included in the station group is less than or equal to a first preset value.

It should be noted that, that interference between two station group members is less than or equal to a first preset value means: When a first station group member performs communication, interference caused to a second station group member is less than or equal to the first preset value, which may be understood as that when the first station group member performs communication, the interference caused to the second station group member is relatively small; when the second station group member performs communication, interference caused to the first station group member is less than or equal to the first preset value, which may be understood that when the second station group member performs communication, interference caused to the first station group member is relatively small. The first preset value is an indicator for evaluating an interference magnitude, and may be flexibly set according to a channel state or a scheduling requirement. This is not specifically limited in the embodiments of this application.

A type of the station group member in the definition 1 may be as follows:
a. Station pair (STA pair): when a type of a station group member in a station group is a station pair, a corresponding station group element field includes identifiers of two stations in the station pair.

A station in the STA pair may be a common station, or may be an access point AP.

FIG. 2 is used as an example. If a station group member in a station group is a station pair <STA 1, AP 1>, a station group element field corresponding to the station pair includes <STA 1 identifier, AP 1 identifier>. If a station group member in a station group is a station pair <STA 3, STA 4>, a station group element field corresponding to the station pair is <STA 3 identifier, STA 4 identifier>.
b. Station and a specified direction of the station: When a type of a station group member in a station group is a station and a specified direction of the station, a corresponding station group element field includes information used to indicate the station and the specified direction, where the information used to indicate the station and the specified direction includes an identifier of the station, and an antenna identifier and/or a sector identifier of the station. FIG. 2 is used as an example. If a type of a station group member in a station group is the AP 2 and a direction corresponding to an antenna 1 of the station group member in a sector 1, information used to indicate the station and the specified direction of the station may include <AP 2 identifier, antenna 1, sector 1>.
c. Single station: When a type of a station group member in a station group is a single station, a station group element field corresponding to the station group member includes an identifier of the single station.

In a first example in which FIG. 2 is used as an example, when the STA 1 communicates with the AP 1, interference to <STA 2, AP 2> is relatively small. When the STA 2 communicates with the AP 2, interference to <STA 1, AP 1> is relatively small. In addition, when device to device (device to device, D2D) communication is performed between the STA 3 and the STA 4, interference to <STA 1, AP 1> and <STA 5, AP 3> is relatively small. When the STA 1 communicates with the AP 1, interference to <STA 3, STA 4> and <STA 5, AP 3> is relatively small. When the STA 5 communicates with the AP 3, interference to <STA 1, AP 1> and <STA 3, STA 4> is relatively small. In this scenario, if the definition 1 is used, the following two station groups can be determined:
STA group 1: <STA 1, AP 1>, <STA 3, STA 4>, <STA 5, AP 3>

The station group includes station group members <STA 1, AP 1>, <STA 3, STA 4>, and <STA 5, AP 3>. Therefore, information about the station group includes three station group element fields. A first station group element field includes an identifier of the STA 1 and an identifier of the AP 1. A second station group element field includes an identifier of the STA 3 and an identifier of the STA 4. A third station group element field includes an identifier of the STA 5 and an identifier of the AP 3.
STA group 2: <STA 1, AP 1>, <STA 2, AP 2>

The station group includes station group members <STA 1, AP 1> and <STA 2, AP 2>. Therefore, information about the station group includes two station group element fields. A first station group element field includes an identifier of the STA 1 and an identifier of the AP 1. A second station group element field includes an identifier of the STA 2 and an identifier of the AP 2.

(2) Definition 2: A station group member in a station group determined by using the definition 2 does not satisfy a condition of being scheduled for simultaneous communication.

In an example, when a station group includes at least two station group members, that a station group member does not satisfy a condition of being scheduled for simultaneous communication may be interference between any two station group elements is greater than or equal to a second preset value, that is, the two station group members cannot be simultaneously scheduled or cannot simultaneously perform communication.

It should be noted that, that interference between two station group members is greater than or equal to a second preset value means: When a first station group member performs communication, interference caused to a second station group member is greater than or equal to the second preset value, which may be understood as that when the first station group member performs communication, the interference caused to the second station group member is relatively large; when the second station group member performs communication, interference caused to the first station group member is greater than or equal to the second preset value, which may be understood that when the second station group member performs communication, interference caused to the first station group member is relatively large. Because interference is strong when station group members in the station group are simultaneously scheduled or simultaneously perform communication, the station group members in the station group cannot be simultaneously scheduled or simultaneously perform communication. The second preset value is an indicator for evaluating an interference magnitude, and may be flexibly set according to a channel state or a scheduling requirement. This is not specifically limited in the embodiments of this application.

A type of the station group member in the definition 2 may be as follows:
a. Station pair (STA pair): when a type of a station group member in a station group is a station pair, a station group element field corresponding to the station group member includes identifiers of stations included in the station pair.
   A station in the STA pair may be a common station, or may be an AP.
b. Station and a specified direction of the station: When a type of a station group member in a station group is a station and a specified direction of the station, a station group element field corresponding to the station group member includes an identifier of the station, and an antenna identifier and/or a sector identifier of the station. FIG. 2 is used as an example. If a type of a station group member in a station group is the AP 2 and a direction corresponding to an antenna 1 of the station group member in a sector 1, a corresponding station group element field includes an identifier of the AP 2, an identifier of the antenna 1, and an identifier of the sector 1.
c. Single station: When a type of a station group member in a station group is a station, a station group element field corresponding to the station group member includes an identifier of the station.

FIG. 2 is used as an example. If a station group member in a station group is the STA 1, information used to indicate the station is an identifier of the STA 1.

In a second example of FIG. 2, if D2D communication between the STA 3 and the STA 4 causes interference to the STA 2, a sector direction (an antenna 1, a sector 1) of the AP 1 also causes interference to the STA 2. In this scenario, the following STA groups may be generated (the definition 2):
- STA group 1: <STA 2>, <STA 3, STA 4>
- STA group 2: <STA 2>, <AP 1, antenna 1, sector 1>

It should be noted that the identifier of the STA or the AP mentioned above may be a media access control (media access control, MAC) address of the STA or the AP, or may be an association identifier (association identifier, AID) of the STA or the AP.

The coordination AP may determine the station group and the corresponding station group element by using the foregoing definition 1 and definition 2. In this embodiment, the coordination AP determines the station group, which is a centralized manner. Therefore, a STA group ID is global, that is, is commonly used by APs in a cluster formed by a plurality of access points, and a STA group ID of each station group is unique in a cluster.

In the centralized manner, the coordination AP and the member AP may maintain the station group context in a plurality of manners:
In a first manner, the member AP stores, as a station group context of the member AP, all station group information sent by the coordination AP. In this case, the member AP also stores all the station group information and all station group IDs. The member AP may be configured as a coordination AP in a scheduling phase, to schedule other APs in a centralized manner. Alternatively, when a station group context of the coordination AP is lost or damaged, the coordination AP may obtain the station group context from another member AP.

In a second manner, the member AP stores, as a station group context of the member AP, only information that is in all station groups information sent by the coordination AP and that is about a station group to which a station group member served by the member AP belongs. In this case, the member AP stores only a part of station group information and a part of station group IDs, thereby saving memory resources of the member AP, and reducing storage space overheads.

In a third manner, the member AP stores only information about a station group member that is in a station group related to the member AP and that is served by the member AP and ID information of a station group to which the station group member belongs, where the information and the ID information are in all station group information sent by the coordination AP. In this case, the member AP stores only a part of the station group information, thereby saving memory resources of the member AP and reducing storage space overheads.

For example, in the first example in which FIG. 2 is used as an example, the station group information determined by the AP 1 by using the definition 1 may be shown in the following Table 1:

**Table 1**

| Station group ID | Station group member |
|---|---|
| 1 | <STA 1, AP 1>, <STA 3, STA 4>, <STA 5, AP 3> |
| 2 | <STA 1, AP 1>, <STA 2, AP 2> |

In a possible implementation, the AP 1 broadcasts the station group information shown in Table 1. When the AP 2 receives the station group information sent by the AP 1, the AP 2 maintains the station group context in the second manner. For example, in the first example in which FIG. 2 is used as an example, after receiving the station group information shown in Table 1, the AP 2 determines the station group context information of the AP 2, as shown in the following Table 2:

**Table 2**

| Station group ID | Station group member |
|---|---|
| 2 | <STA 1, AP 1>, <STA 2, AP 2> |

In another possible implementation, the AP 1 may send only the station group information shown in Table 2 to the AP 2.

It may be understood that after receiving the station group information shown in Table 1 or Table 2, the AP 2 may alternatively maintain the station group context in the first manner and the third manner.

In a second example in which FIG. 2 is used as an example, the station group information determined by the AP 1 by using the definition 2 is shown in the following Table 3:

**Table 3**

| Station group ID | Station group member |
|---|---|
| 1 | <STA 2>, <STA 3, STA 4> |
| 2 | <STA 2>, <AP 1, antenna 1, sector 1> |

In a possible implementation, the AP 1 broadcasts the station group information shown in Table 3. When the AP 3 receives the station group information sent by the AP 1, the AP 3 maintains the station group context in the second manner. In the second example in which FIG. 2 is used as an example, after receiving the station group information shown in Table 3, the member AP (the AP 3) determines that the station group context information of the member AP is shown in the following Table 4:

**Table 4**

| Station group ID | Station group member |
|---|---|
| 1 | <STA 2>, <STA 3, STA 4> |

In another possible implementation, the AP 1 may send only the station group information shown in Table 4 to the AP 2. It may be understood that after receiving the station group information shown in Table 3 or Table 4, the AP 3 may alternatively maintain the station group context in the first manner and the third manner.

It may be understood that strength of interference between any two station group elements may be measured in the foregoing step S300.a to step S300.d.

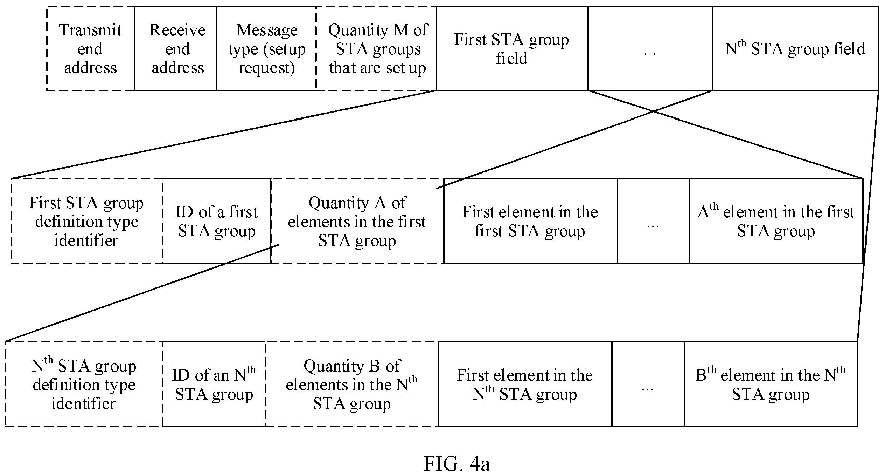

An example structure of the station group setup request message may be shown in FIG. 4a. The station group setup request message may include N STA group fields, where each station group (STA group) field may include an ID of a STA group, used to indicate the STA group, and may further include a plurality of STA group element fields, where each STA group element field includes information used to indicate one STA group member. Each STA group field may further include a STA group definition type identifier, used to indicate a definition manner used by the STA group. For example, it is assumed that two definition types are included: a definition 1 and a definition 2. In an example, a value of the definition type being 0 indicates that a station group member in the station group satisfies the definition 1, and the value being 1 indicates that a station group member in the station group satisfies the definition 2. It may be understood that a definition manner corresponding to the value of the definition type is replaceable, and this is not specifically limited in the embodiments of this application.

Optionally, the station group field may further include a quantity of station group element fields.

Each STA group element field includes information used to indicate one station group member, and may include but is not limited to one or a combination of the following:
a STA group element identifier, which may be used to indicate a station group member, and may be a sequence number of the station group member; and
a STA group element type, where the STA group element type may be used to indicate a station group member type, and the station group member type may be a value such as STA_PAIR (one STA pair), STA_DIRECT (a STA and a specified direction of the STA), and STA (one STA). For example, when the value of the STA group member type is 0, it may indicate that the STA group member type is a STA pair; when the value of the STA group member type is 1, it may indicate that the STA group member type is STA DIRECT; when the value of the STA group member type is 2, it indicates that the STA group member type is a station; when the value of the STA group member type is 3, it may indicate that the STA group member type is another type. In addition, only three typical station group member types are provided herein. In practice, one or more of the three station group member types may be used, or more other element types may be obtained through extension.

According to different STA group element types, each STA group element field includes different information for indicating station group members.

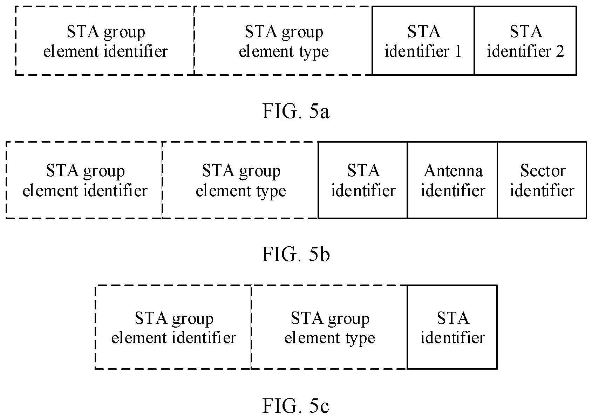

When the STA group member type is a station pair, the STA group element field includes an identifier of each station in the station pair. For example, if the STA group element is <STA 1, AP 1>, the STA group element field includes an identifier of the STA 1 and an identifier of the AP 1. An example structure of the STA group element field is shown in FIG. 5a.

When the STA group member type is a station and a specified direction, the STA group element field includes an identifier of the station, and an antenna identifier and/or a sector identifier. For example, if the STA group member is <AP 1, antenna 1, sector 1>, the STA group element field includes an identifier of the AP 1, an identifier of the antenna 1, and an identifier of the sector 1. An example structure of the STA group element field is shown in FIG. 5b.

When the STA group member type is a station, the STA group element field includes an identifier of the station. For example, if the STA group element is <STA 1>, the STA group element field includes an identifier of the STA 1. An example structure of the STA group element field is shown in FIG. 5c.

When the coordination AP indicates a station setup request message to each member AP, the coordination AP indicates STA group content to each member AP (for example, the AP 2 and the AP 3) (instead of performing joint indication).

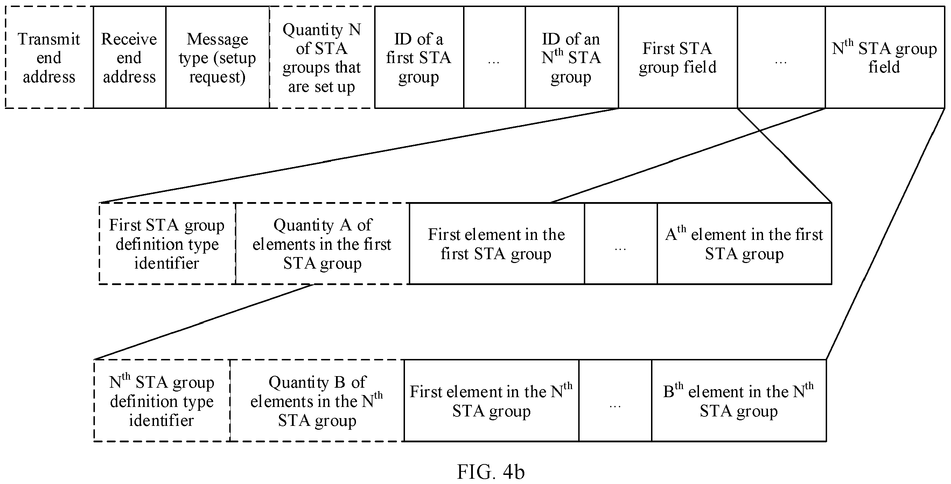

When the coordination AP sends the station group setup request message to one member AP, the station group setup request message may use the structures shown in FIG. 4a and FIG. 4b, where a receive end address field may include an identifier of the member AP, used to indicate the member AP. The station group request message may include information to be sent to the member AP.

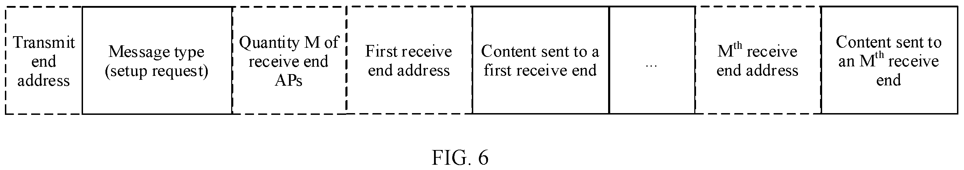

When the coordination AP needs to send the station group information to a plurality of member APs, in a possible implementation, the coordination AP may separately send, by using a plurality of station group setup request messages, station group information of the member APs to the member APs in serial or in sequence in parallel (similar to a DL MU-MIMO manner). The station group setup request message may use the structures shown in FIG. 4a and FIG. 4b. In another possible implementation, alternatively, the coordination AP may combine station group information of the member APs and send the combined station group information to the plurality of member APs by using one station group request message. The station group setup request message may also use the structures shown in FIG. 4a and FIG. 4b, and receiver addresses of the plurality of member APs are all carried in a receive end address. The receiver addresses may separately include identifiers of the plurality of member APs, and the receive end address may also be a broadcast address. The station group setup request message may alternatively use a structure shown in FIG. 6. That is, the receiver addresses of the member APs are scattered around their respective receive end content, and the receive end content corresponds to the receive end address. For example, the station group setup request message may include content to be sent to M member APs, and optionally, may further include receiver addresses that are of the member APs and that correspond to the content of the M member APs, and a quantity of the member APs, where the content of the M member APs is in a one-to-one correspondence with the M receiver addresses. Content of each member AP may include information about K STA group fields that needs to be sent to the member AP. A structure of the STA group field may use a structure of a STA group field shown in FIG. 4a, a structure of a STA group field shown in FIG. 4b, or another structure. This is not specifically limited in the embodiments of this application.

For example, the station group determined by the coordination AP (the AP 1) in FIG. 2 is shown in Table 1, and the structure of a station group setup request message is shown in FIG. 4a. The station setup request message sent by the AP 1 to the AP 2 includes two STA group fields. A STA group definition type identifier indicated by a first STA group field indicates that the STA group 1 satisfies the definition 1, a STA group ID indicated by a first STA group ID field is 1, and a quantity of STA group elements indicated by a first STA group element quantity field is 3. A first element of the first STA group may include an identifier of the STA 1 and an identifier of the AP 1. A second element of the first STA group may include an identifier of the STA 3 and an identifier of the STA 4. A third element of the first STA group may include an identifier of the STA 5 and an identifier of the AP 3. A STA group definition type identifier of a second STA group field indicates that the STA group 2 satisfies the definition 1, a STA group ID indicated by a second STA group ID field is 2, and a quantity of STA group elements indicated by a second STA group element quantity field is 2. A first element of the second STA group may include an identifier of the STA 1 and an identifier of the AP 1. A second element of the second STA group may include an identifier of the STA 2 and an identifier of the AP 2.

For example, the station group determined by the AP 1 in FIG. 2 is shown in Table 3. The AP 1 sends information shown in Table 3 to the AP 2, and the station setup request message sent to the AP 2 may include two STA group fields. A STA group definition type identifier in a first STA group field indicates that the STA group 1 satisfies the definition 2, a STA group ID indicated by a first STA group ID field is 1, and a quantity of STA group elements indicated by a first STA group element quantity field is 2. A first element of the first STA group may include an identifier of the STA 2. A second element of the first STA group may include an identifier of the STA 3 and an identifier of the STA 4. A STA group definition type identifier in a second STA group field indicates that the STA group 2 satisfies the definition 2, a STA group ID indicated by a second STA group ID field is 2, and a quantity of STA group elements indicated by a second STA group element quantity field is 2. A first element of the second STA group may include an identifier of the STA 2. A second element of the second STA group may include an identifier of the AP 1, an identifier of the antenna 1, and an identifier of the sector 1.

It may be understood that the plurality of station groups included in the station group setup request message may be separately defined in different definition manners, or may be defined in a same definition manner.

In addition, it may be understood that a sequence of some fields in the station group setup request message may be changed. For example, the STA group element quantity field is before all station group element fields. A sequence of other fields is not limited.

### Structure of the station group setup response message

In step S303, in a possible implementation, the station setup response message STA_group_setup_RSP fed back by the at least one second AP includes the result identifiers of the N station groups. The result identifiers of the N station groups are in a one-to-one correspondence with the IDs of the N station groups included in the station setup request message, and the result identifier is used to indicate whether a corresponding station group is successfully set up. The result identifiers of the N STA groups are in a one-to-one correspondence with positions of the N STA groups included in STA_group_setup_REQ sent by the coordination AP.

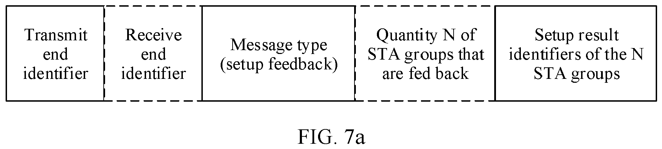

In an example, a bitmap may be used for the setup result identifiers of the N STA groups. The bitmap includes N bits, and an i^{th} bit indicates a setup result of an i^{th} STA group in STA_group_setup_REQ. An example structure of the station setup response message STA_group_setup_RSP sent by the member AP is shown in FIG. 7a.

In another example, optionally, the station setup response message STA_group_setup_RSP may include the IDs of the M station groups and the setup result identifiers of the M station groups, and the IDs of the M station groups are in a one-to-one correspondence with the setup result identifiers of the M station groups.

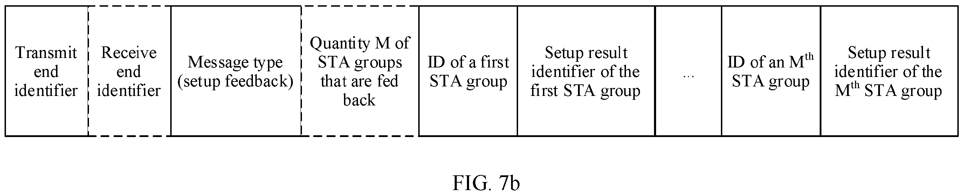

In a possible implementation, an example structure of the station setup response message STA_group_setup_RSP sent by the at least one second AP is shown in FIG. 7b. In FIG. 7b, the setup result identifiers of the M STA groups are indicated in a distributed manner. A setup result identifier of an i^{th} STA group is used to indicate a setup result of the i^{th} STA group, where i is an integer greater than or equal to 1 and less than or equal to M. In an implementation, the setup result identifier of the i^{th} STA group may be indicated by using one bit. For example, when a value of the setup result of the i^{th} STA group is 0, it indicates that the i^{th} STA group is unsuccessfully set up. When the value of the setup result of the i^{th} STA group is 1, it indicates that the i^{th} STA group is successfully set up.

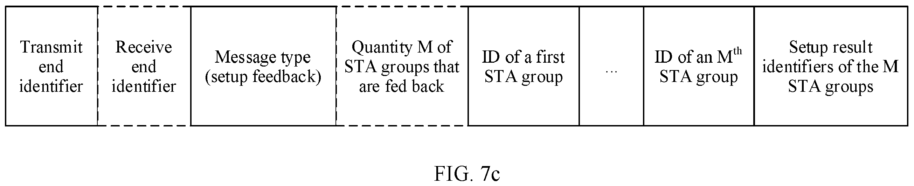

In another possible implementation, another example structure of the station setup response message STA_group_setup_RSP sent by the at least one second AP is shown in FIG. 7c. In FIG. 7c, the setup result identifiers of the M STA groups are indicated in a centralized manner. The setup result identifiers of the M STA groups may be in a form of a bitmap. The bitmap may include M bits, and a value of an i^{th} bit corresponds to a result indicating whether an i^{th} STA group is successfully set up. For example, the member AP feeds back setup results of four STA groups. In this case, when a value of a bitmap is 1100, it may indicate that a STA group 1 and a STA group 2 are successfully set up, and a STA group 3 and a STA group 4 are unsuccessfully set up.

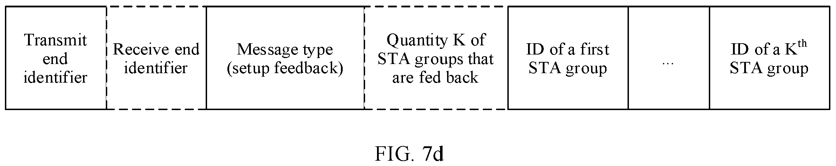

In still another possible implementation, the at least one second AP may feed back only an ID of a STA group that is successfully set up, and does not feed back an ID of a STA group that is unsuccessfully set up. In this case, still another example structure of the station setup response message STA_group_setup_RSP sent by the second AP is shown in FIG. 7d. The station setup response message STA_group_setup_RSP shown in FIG. 7d includes IDs of k STA groups that are successfully set up and that are in the N STA groups, to indicate that the k STA groups are successfully set up, and implicitly indicate that remaining N-k STA groups are unsuccessfully set up, or that remaining N-k STA groups that are unsuccessfully set up are fed back in subsequent STA_group_setup_RSP, where k is greater than or equal to 0 and less than or equal to N.

In another possible implementation, the at least one second AP may feed back only an ID of a STA group that is unsuccessfully set up, and does not feed back an ID of a STA group that is successfully set up. In this case, still another example structure of the station setup response message STA_group_setup_RSP sent by the second AP may also be shown in FIG. 7d. The station setup response message STA_group_setup_RSP shown in FIG. 7d includes IDs of k STA groups that are unsuccessfully set up and that are in the N STA groups, to indicate that the k STA groups are unsuccessfully set up, and implicitly indicate that remaining N-k STA groups are successfully set up, where k is greater than or equal to 0 and less than or equal to N.

It should be noted that, when a plurality of member APs, for example, the AP 2 and the AP 3, all need to feed back a station setup response message, the plurality of member APs may perform feedback in parallel or in sequence in serial.

According to the method in this embodiment of this application, the AP in the access point cluster may set up the station group by using the station group setup request message and the station group setup response message, and a plurality of APs may align station group information in a timely manner. In this way, the plurality of APs may perform scheduling and transmission per station group, thereby improving efficiency of scheduling and communication between the plurality of APs.

Embodiment 2 provides a station group update method.

Different from Embodiment 1, Embodiment 2 is described by using an example of the case 2 in which a context of a STA group, that is, the STA group context, is not empty, that is, the coordination AP has determined at least one station group before receiving the measurement result of the station group, and the measurement result indication message is used to indicate that the coordination AP can modify the setup station group. In this case, the coordination AP may send a station group update request message (station group update request, STA_group_update_REQ). The station group modification request message may include an ID of a station group that needs to be updated and information about a station group element to be added to or deleted from the station group that needs to be updated, to modify or update information about a station group that has been set up.

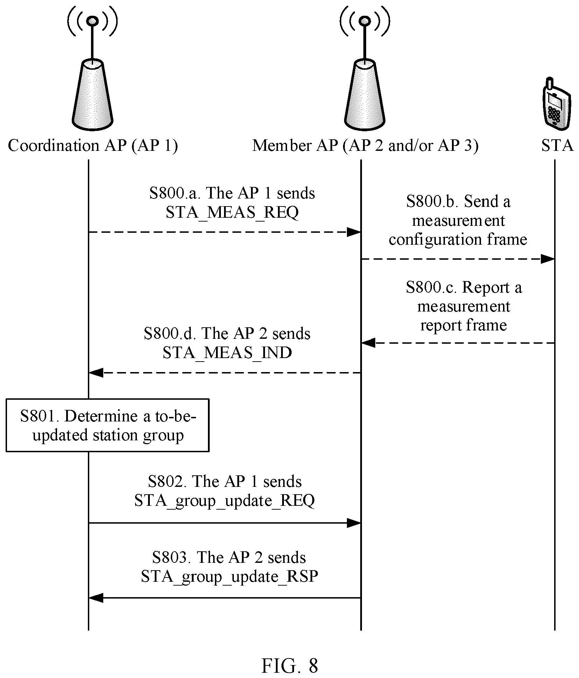

FIG. 8 is a schematic flowchart of interaction in a station group update method according to an embodiment of this application. In this embodiment of this application, an AP 1 is used as a coordination AP or a synchronization AP to perform central control, to update a station group and station group information.

S801. The coordination AP determines a to-be-updated station group.

Similar to step S301, before the synchronization AP or the coordination AP (the AP 1) determines a station group whose information is to be updated, member APs (an AP 2 and an AP 3) also need to report an interference status (a STA measurement result) to the coordination AP (the AP 1). Similar to step S301, the coordination AP may also use step S800.a to step S800.d to implement coordination control on interference measurement, and obtain an interference measurement result. This is not described herein again. Further, the synchronization AP or the coordination AP determines, based on the measurement result, the to-be-updated station group and the to-be-updated station group information of the to-be-updated station group.

Based on a received STA measurement result indication message STA_MEAS_IND and an existing STA group context, the coordination AP may determine a station group member in the to-be-updated STA group, the station group member in the to-be-updated station group may include: an existing station group member to be deleted from the station group, and/or a new station group member to be added to the station group. A station group update request message is generated based on the to-be-updated station group and the station group member in the to-be-updated station group.

For example, in a third example, the coordination AP determines a station group by using the foregoing definition 1, and STA group context information includes a station group list shown in Table 1. After step S800.a to step S800.d, the interference measurement result obtained by the coordination AP shows that, when the AP 3 and the STA 5 communicate with each other, interference caused to the STA group 1 in Table 1 is greater than or equal to a first preset value. In addition, when the AP 3 communicates with the STA 3, interference caused to the STA group 2 is less than or equal to the first preset value. When a station group element in the STA group 2 performs communication, interference caused to the STA 3 is also less than or equal to the first preset value. In this case, the coordination AP may determine that a station group member, which is specifically <STA 5, AP 3>, may be deleted from the STA group 1 in Table 1, and a station group member <STA 3, AP 3> may be added to the STA group 2 in Table 1. Then, the station group context information updated by the coordination AP is shown in Table 5.

**Table 5**

| Station group ID | Station group member |
|---|---|
| 1 | <STA 1, AP 1>, |
| | <STA3, STA 4> |
| 2 | <STA 1, AP 1>, |
| | <STA 2, AP 2>, |
| | <STA 3, AP 3> |

In a fourth example, the coordination AP determines the station group by using the foregoing definition 2, and the STA group context information includes a station group list shown in Table 3. After step S800.a to step S800.d, the interference measurement result obtained by the coordination AP shows that, when the AP 3 and the STA 5 communicate with each other, interference to the STA group 1 in Table 3 is greater than a second preset value. That is, when the AP 3 and the STA 5 communicate with each other, interference to the STA group 1 in Table 3 is relatively large. Alternatively, when elements in the STA group 1 communicate with each other, interference to communication between the AP 3 and the STA 5 is greater than a second preset value. In this case, the coordination AP may determine that a new element, which is specifically <STA 5, AP 3>, may be added to the STA group 1 in Table 3. Then, the coordination AP updates Table 3, and an update result is shown in the following Table 6:

**Table 6**

| Station group ID | Station group member |
|---|---|
| 1 | <STA 2, AP 2>, |
| | <STA 3, STA 4>, |
| | <STA 5, AP 3> |
| 2 | <STA 2, AP 2>, |
| | <AP 1, antenna 1, sector 1> |

For a definition of the station group, refer to the foregoing step S302. Details are not described herein again.

S802. The coordination AP sends the station group update request message (station group update request, STA_group_update_REQ).

The first AP sends the station group modification request message to at least one second access point AP, where the station group modification request message is used to indicate the at least one second AP to update a station group context.

The message is sent by the coordination AP to the member APs, and is used to indicate the member APs to update one or more STA groups. The station group modification request message sent by the coordination AP (the AP 1) includes IDs of M to-be-updated station groups and at least one station group element field corresponding to the to-be-updated station groups. The station group element field is used to indicate a to-be-updated station group member, and the at least one station group element field includes at least one first station group element field and/or at least one second station group element field. The first station group element field is used to indicate a station group member to be added to the to-be-updated station group. The second station group element field is used to indicate a station group member to be deleted from the to-be-updated station group.

Optionally, the station group update request message STA_group_update_REQ may further include but is not limited to one or a combination of the following:
a transmit end address, used to indicate an address of an AP that sends STA_group_update_REQ, where for example, the transmit end address may be a MAC address or an association ID AID of the AP 1, an ID defined in a virtual AP or a PCP/AP cluster, or the like;
a receive end address, used to indicate a member AP that receives STA_group_update_REQ, where the receive end address may be a MAC address or an association ID AID of one or more APs 2, an ID defined in the virtual AP or the PCP/AP cluster, or the like, or may be a broadcast address or a broadcast AID (broadcast sending), an AP group address or a group ID (multi-point sending), or the like; it may be understood that, when the coordination AP specifies that the station group update request message is to be sent to one member AP, for example, the AP 2, the receive end address may be a MAC address or an association identifier AID of the AP 2, or an ID defined in the virtual AP or the PCP/AP cluster, or the like; when the coordination AP specifies that the station group update request message is to be sent to a plurality of member APs, the receive end address field may include addresses of the plurality of member APs; when the coordination AP broadcasts the station group update request message, the receiver address is a broadcast address;
a station group quantity identifier, used to indicate a quantity of to-be-updated station groups included in the station group update request message;
M first station group element field quantity identifiers, where the first station group element field quantity identifier is used to indicate a quantity of station group element fields to be added to a corresponding to-be-updated station group, and the M first station group element field quantity identifiers are in a one-to-one correspondence with the IDs of the M station groups whose station group members are to be modified; and
M second station group element field quantity identifiers, where the second station group element field quantity identifier is used to indicate a quantity of station group element fields to be deleted from a corresponding to-be-updated station group, and the M second station group element field quantity identifiers are in a one-to-one correspondence with the IDs of the M to-be-updated station groups.

Similar to Embodiment 1, there are a plurality of types of to-be-added station group members. For example, a type of a station group member may be a station, a station and a specified direction, or a station pair.

If the type of the station group member is a station, the first station group element field includes an identifier of the station.

If the type of the station group member is a station pair, the first station group element field includes identifiers of two stations included in the station pair.

If the type of the station group member is a station and a specified direction, the first station group element field includes an identifier of the station, and an antenna identifier and/or a sector identifier of the station.

A station group member indicated by the second station group element field is a to-be-deleted station group member, and there may be a plurality of types of to-be-deleted station group members. For example, a type of a to-be-deleted station group member may be a station, a station and a specified direction of the station, or a station pair. It may be understood that, the second station group element field may also use a format the same as that of the first station group element field to indicate the to-be-deleted station group member. Optionally, the second station group element field may further include a station group element identifier of the to-be-deleted station group member.

Optionally, the second station group element field may further include only a station group element identifier of the to-be-deleted station group member, for example, a sequence number of the to-be-deleted station group member, but does not include specific information of the station group member. For example, the second station group element field may include an identifier of the to-be-deleted station group element, used to indicate a to-be-deleted station group member corresponding to the station group element field. It may be understood that, in a station group setup phase, the member AP may obtain a station group element identifier of the station group member by using the station group setup request message. Therefore, in a station group update phase, a station group member may be deleted by including only a station group element identifier that has been previously stored. Signaling overheads are reduced.

It may be understood that the first station group element field may further include an identifier of a to-be-added station group element, used to indicate a sequence number of a to-be-added station group member corresponding to the station group element field. Optionally, if the identifier of the to-be-added station group element is the same as a station group element identifier previously configured for the STA group, a receive end may replace an existing station group member with the new station group member, and the station group element identifier remains unchanged. For example, if a station group 1 includes two station group members numbered as a member 1 and a member 2, and the member 1 is <STA 1, AP 1>, and if the station group modification request message indicates that a to-be-modified member in the station group 1 is the member 1 and the member 1 is <STA 2, AP 2>, the second AP may update the member 1 in the station group 1, and replace <STA 1, AP 1> with <STA 2, AP 2>, with no need to add a new sequence number of a station group member.

It may be understood that the first station group element field and the second station group element field each may further include:
a station group element type identifier, used to indicate a type of a station group member indicated by the station group element field.

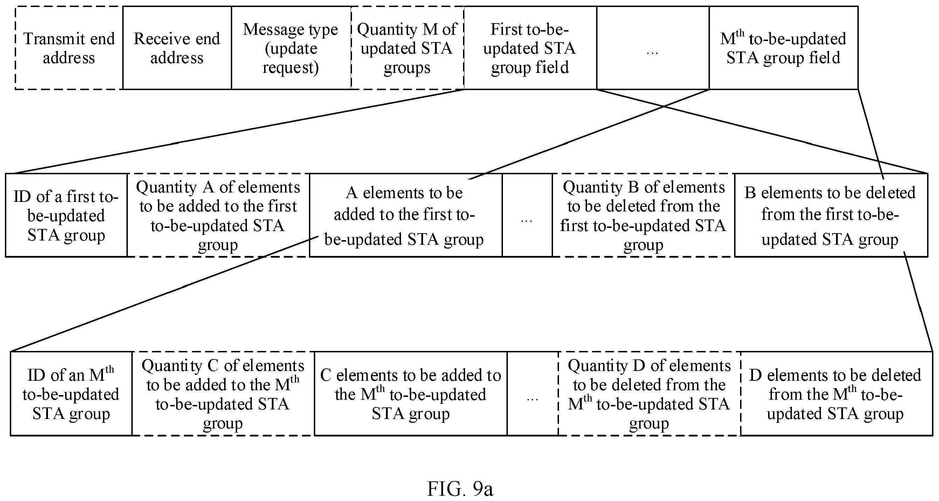

In an example, an example structure of the station group update request message is shown in FIG. 9a. An i^{th} to-be-modified STA group field includes an ID of an i^{th} to-be-updated STA group, and further includes at least one station group element field used to indicate at least one station group member to be added to the STA group i, and/or at least one station group element field used to indicate at least one station group member to be deleted from the i^{th} STA group. Optionally, the i^{th} to-be-updated STA group field may further include a quantity of station group members (also a quantity of station group element fields corresponding to the to-be-added station group members) to be added to the i^{th} to-be-updated STA group, and/or a quantity of station group elements (also a quantity of station group element fields corresponding to to-be-deleted station group members) to be deleted from the i^{th} to-be-updated STA group. It should be noted that, in an example, a definition and a structure of the station group element have been described in detail in Embodiment 1, and the station group element field may use the structures shown in FIG. 5a to FIG. 5c. Details are not described herein again. In another example, the station group element field corresponding to the to-be-deleted station group member may include only a station group element identifier of the to-be-deleted station group member. Using the foregoing third example as an example, the station group update request message sent by the coordination AP includes two to-be-updated STA group fields. A first to-be-updated STA group field includes an ID of the first STA group and a station group member <STA 5, AP 3> to be deleted from the first STA group. A second to-be-updated STA group field includes an ID of the second STA group and a station group element <STA 3, AP 3> to be added to the second STA group.

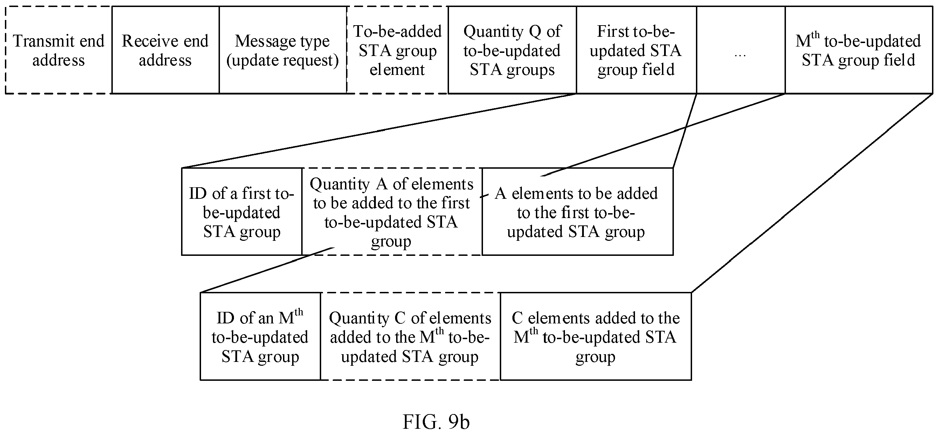

In another example, different from the station group update request message shown in FIG. 9a, the coordination AP may separately send, to member APs by using two station group update request messages, a station group element that needs to be deleted and a station group element that needs to be modified. Another example structure of the station group update request message is shown in FIG. 9b, where only a station group element that needs to be added is included, and a station group element that needs to be deleted is not included. It may be understood that, in another station group update request message, alternatively, only a station group element that needs to be deleted may be included. Using the third example as an example, the coordination AP may send two station group update request messages. A first station group update request message includes information about a station group element <STA 5, AP 3> that needs to be deleted from the STA group 1. A second station group update request message includes information about a station group element <STA 3, AP 3> that needs to be added to the STA group 2.

It may be understood that, specially, another definition of the station group update request message STA_group_update_REQ may be reconfiguring a station group context or station group contexts of one or more STA groups. That is, the coordination AP may send an updated station group context to a member AP in a format of the station group setup request STA_GROUP_SETUP_REQ message. For example, the coordination AP may send all of the updated station group information to the member APs by using the structure shown in FIG. 4a or FIG. 4b, so that the member APs reconfigure the station groups. Details are not described herein.

It should be noted that, similar to sending of the station group setup request message in Embodiment 1, when the coordination AP (the AP 1) sends the message to a plurality of member APs (for example, the AP 2 and the AP 3), the sending may be performed separately, sequentially, or in parallel. This is not specifically limited in this embodiment of this application.

S803. The member AP sends a station group update response message (station group update response, STA_group_update_RSP) to the coordination AP.

After receiving the station group update request message, the member AP determines whether a station group is successfully updated, and feeds back a station group update result to the coordination AP.

Similar to S302 in the foregoing embodiment, the member AP may store all of the station group information, that is, not only store station group information of a station group that is served by the member AP, but also store station group information of a station group that is not served by the member AP. Alternatively, the member AP may store only information about a station group that is served by the second access point. When the second access point maintains only the information about the station group that is served by the second access point, the determining a station group context of the second access point may include:

In a case, if an ID that is of a station group in the to-be-updated station group and that is included in the station group update request message is different from all IDs that are of station groups and that are stored in the member AP, the station group is unsuccessfully updated. Alternatively, if an ID that is of a station group in the to-be-updated station group and that is included in the station group update request message is the same as an ID that is of a station group in station groups and that is stored in the member AP, but a to-be-deleted station group element field corresponding to the to-be-updated station group does not match content of a station group element field stored in the member AP or station group information stored in the member AP does not include a to-be-deleted station group element field, the station group is unsuccessfully updated.

In a case, if an ID that is of a station group in the to-be-updated station group and that is included in the station group update request message is the same as an ID that is of a station group in station groups and that is stored in the member AP, and if a to-be-deleted station group element field corresponding to the to-be-updated station group matches content of a station group element field stored in the member AP, the station group is successfully updated.

When the member AP stores all the station group information, that is, not only stores station group information of a station group that is served by the member AP, but also stores station group information of a station group that is not served by the member AP, after receiving the station group update request message sent by the coordination AP, the process of updating the station group context of the member AP includes:

In a case, if an ID that is of a station group in the to-be-updated station group and that is included in the station group update request message is the same as an ID that is of the station group and that is stored in the member AP, but a to-be-deleted station group element field corresponding to the to-be-updated station group does not match content of a station group element field stored in the member AP, for example, if station group element identifiers are the same but station identifiers are different, the member AP does not update station group member information of the station group, and the station group is unsuccessfully updated.

In another case, if an ID that is of a station group in the to-be-updated station group and that is included in the station group update request message is the same as an ID that is of the station group and that is stored in the member AP, and a context is correct, the member AP updates station group member information of the station group, and the station group is successfully updated.

Specifically, the member AP sends the station group update response message to the coordination AP, where the station group update response message includes at least one result identifier, and the at least one result identifier is in a one-to-one correspondence with the at least one station group in the station group update request message.

The result identifier of the to-be-updated station group is used to indicate whether the to-be-updated station group is successfully updated.

It may be understood that, a result identifier of a to-be-updated station group to which a station group member needs to be added is used to indicate whether the to-be-added station group member is successfully added, and a result identifier of a to-be-updated station group from which a station group member needs to be deleted is used to indicate whether the to-be-deleted station group member is successfully deleted.

It should be noted that the station group update response message may use a structure the same as that of the station group setup response message, for example, as shown in FIG. 7a to FIG. 7d. Likewise, a modification result may be indicated in either a centralized manner or a distributed manner. Details are not described herein again. A difference between the station group update response message and the station group setup response message lies in that a message type field in the station group update response message indicates that the message is a station group update response message, and a message type field in the station group setup response message indicates that the message is a station group setup response message. For example, if the coordination AP feeds back the station group modification result in the third example by using the structure shown in FIG. 7a, a message type field in FIG. 7a indicates that the message is a station group update response message, and a value of a STA group quantity field fed back is 2. A result field identifier includes two bits, where a first bit indicates an update result of the STA group 1, and a second bit indicates an update result of the STA group 2.

According to the method in this embodiment of this application, the AP in the access point cluster may update and modify the station group information by using the station group update request message and the station group update response message, and a plurality of APs may align station group information in a timely manner. This prevents expired station group information from occupying buffer space of the APs. In addition, in the centralized manner, the coordination AP or the synchronization AP may also manage station group information of another AP.

Embodiment 3 provides a station group release method.

Different from Embodiment 1, Embodiment 3 is described by using an example of the case 2 in which a context of a STA group, that is, the STA group context, is not empty, that is, the coordination AP has determined at least one station group before receiving the measurement result of the station group, and the measurement result indication message is used by the coordination AP to determine that a setup station group can be released. In this case, the coordination AP may send a station group release request message (station group release request, STA_group_release_REQ), and the station group release request message may include an ID of a station group that needs to be released, to release the station group that has been set up.

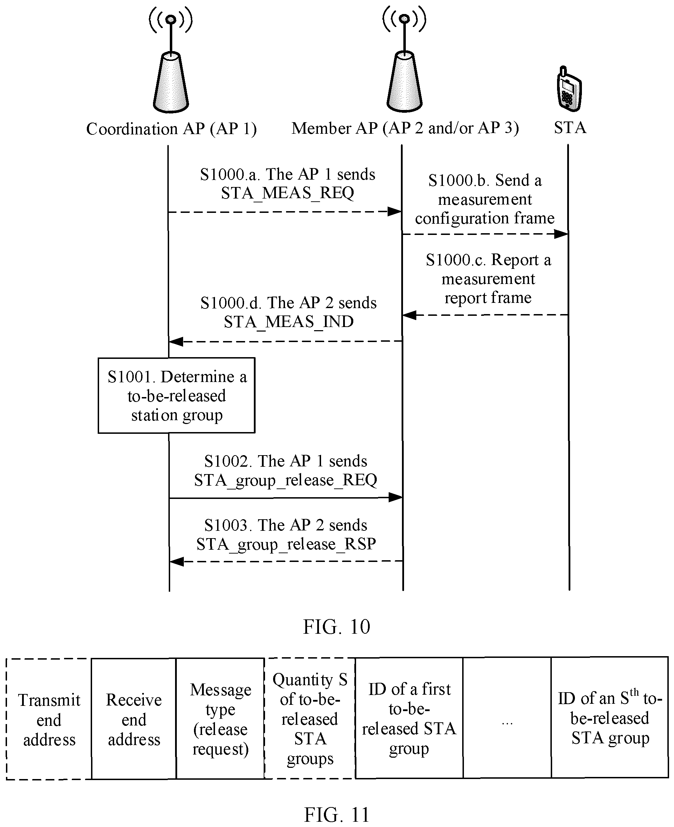

FIG. 10 is a schematic flowchart of interaction in a station group release method according to an embodiment of this application.

S1001. An AP 1 determines a to-be-released station group.

In some cases, for example, a change in a location of a station causes a change in a channel state, so that strong interference is generated between station group members of a station group, or interference between station group members becomes relatively small. In this case, a station group that has been set up does not satisfy a definition 1 or a definition 2. The station group that has been set up needs to be released. Similar to step S801, before the synchronization AP or the coordination AP (the AP 1) determines to release the station group, member APs (an AP 2 and an AP 3) also need to report an interference status (a STA measurement result) to the coordination AP (the AP 1). Similar to step S301, the coordination AP may also use step S 1000.a to step S1000.d to implement coordination control on interference measurement, and obtain an interference measurement result. This is not described herein again. Further, the synchronization AP or the coordination AP determines, based on the measurement result, the to-be-released station group. Therefore, based on a received STA measurement result indication message STA_MEAS_IND and an existing STA group context, the coordination AP may determine to release the existing STA group, to generate a station group release request message.

In a fifth example, the coordination AP determines a station group by using the foregoing definition 1, and the STA group context is shown in the foregoing Table 5. After step S1000.a to step S1000.d, the interference measurement result obtained by the coordination AP shows that, when the AP 1 communicates with a STA 1, interference to D2D communication between a STA 3 and a STA 4 is greater than a second preset value. Therefore, the coordination AP needs to release a STA group 1 in Table 5.

In some other cases, for example, if the coordination AP needs to initialize STA group context information, the coordination AP may release one or more station groups that have been set up. In a sixth example, the coordination AP releases all station groups shown in Table 5, including the STA group 1 and a STA group 2.

S1002. The coordination AP sends the station group release request message (station group release request, STA_group_release_REQ) to a member AP.

The message is sent by the AP 1 to the AP 2, and is used to indicate the member AP (for example, the AP 2 or the AP 3) to release one or more STA groups. The station group release request message includes an ID of at least one to-be-released station group.

Optionally, the station group release request message may further include:
a receive end address, used to indicate a member AP that receives STA_group_release_REQ, where the receive end address may be a MAC address or an association ID AID of one or more APs 2, an ID defined in a virtual AP or a PCP/AP cluster, or the like, or may be a broadcast address or a broadcast AID (broadcast sending), an AP group address or a group ID (multi-point sending), or the like.

Optionally, the station group release request message STA_group_release_REQ may further include but is not limited to one or a combination of the following:
a transmit end address, used to indicate an address of an AP that sends STA_group_release_REQ, where for example, the transmit end address may be a MAC address or an association ID AID of the AP 1, an ID defined in a virtual AP or a PCP/AP cluster, or the like; and
a message type, used to indicate that a type of the message is a station group release request message.

In an example, an example structure of the station group release request message is shown in FIG. 11. The message includes IDs of S to-be-released STA groups, where S is an integer greater than or equal to 1.

When the coordination AP sends the message to a plurality of member APs, the sending may be performed separately, sequentially, or in parallel (similar to a DL MU-MIMO manner).

S1003. The AP 2 sends a station group release response message (station group release response, STA_group_release_RSP) to the AP 1.

After receiving the station group release request message, the member AP determines whether to release a station group, and feeds back a station group release result to the coordination AP.

In a case, when an ID that is of a station group in the at least one station group and that is included in the station group release request message is the same as an ID that is of the station group and that is stored in the member AP, the member AP may release the station group, and the station group is successfully released.

In another case, when an ID that is of a station group in the at least one station group and that is included in the station group release request message is different from IDs that are of all station groups and that are stored in the member AP, the member AP may not release the station group, and the station group is unsuccessfully released.

Specifically, the member AP sends the station group release response message to the coordination AP, where the station group release response message includes a result identifier of the at least one to-be-released station group, the result identifier of the at least one to-be-released station group is in a one-to-one correspondence with a station group indicated by a station group ID in the station group release request message.

The result identifier of the to-be-released station group is used to indicate whether the to-be-released station group is successfully released.

It should be noted that the station group release response message may use a structure the same as that of the station group setup response message, for example, as shown in FIG. 7a to FIG. 7d. Likewise, an update result may be indicated in either a centralized manner or a distributed manner. Details are not described herein again. A difference between the station group release response message and the station group setup response message lies in that a message type field in the station group release response message indicates that the message is a station group release response message, and a message type field in the station group setup response message indicates that the message is a station group setup response message. For example, if the coordination AP feeds back the station group release result in the fifth example by using the structure shown in FIG. 7a, a message type field in FIG. 7a indicates that the message is a station group release response message, and a value of a STA group quantity field fed back is 1, indicating that one station group is released. A result identifier field includes one bit, to indicate whether the station group is successfully released.

According to the method in this embodiment of this application, the AP in the access point cluster may release the station group information by using the station group release request message and the station group release response message, and a plurality of APs may align station group information in a timely manner. This prevents expired station group information from occupying buffer space of the APs. In addition, in the centralized manner, the coordination AP or the synchronization AP may also manage station group information of another AP.

It should be noted that, the station group setup request message, the station group setup response message, the station group update request message, the station group update response message, the station group release request message, and the station group release response message that are mentioned in the embodiments of this application may be used not only to exchange station group information between the coordination AP and the member APs, but also to exchange the station group information between the member APs, and may further be used to exchange station group information between common APs.

The station group setup request message mentioned in Embodiment 1, the station group update request message mentioned in Embodiment 2, and the station group release request message mentioned in Embodiment 3 are sent by the coordination AP to the at least one member AP. Several cases are described by using an example in which the coordination AP sends the station group setup request message.

In a first case, the coordination AP sends the station group setup request message to only one member AP, and a receiver address field of the station group setup request message may be a MAC address or an association identifier AID of the member AP, an ID defined in a virtual AP or a PCP/AP cluster, or the like. In an example, the station group setup request message includes only station group information corresponding to a station group member served by the member AP. For example, it is assumed that station group context information included in the coordination AP is shown in Table 1, but the coordination AP sends only station group information corresponding to a station group member served by a member AP 2 to the AP 2, for example, sends a station group setup request message carrying only the station group information shown in Table 2 to the AP 2. In still another example, the station group setup request message includes station group context information determined by the coordination AP, as shown in Table 1. For example, it is assumed that the station group context information included in the coordination AP is shown in Table 1, and the coordination AP includes all the station group information shown in Table 1 in the station group setup request message, and sends the station group setup request message to the AP 2.

In a second case, the coordination AP sends the station group setup request message to a plurality of member APs, where the plurality of member APs are included in a virtual AP or a PCP/AP cluster, but may not be all APs in the virtual AP or the PCP/AP cluster. In this case, a receiver address field in the station group setup request message may indicate the plurality of member APs. For example, the receiver address field may include a plurality of address subfields, each address subfield is used to indicate one member AP, and the address field may be a MAC address or an association identifier AID of the member AP, an ID defined in a virtual AP or a PCP/AP cluster, or the like. In an example, the station group setup request message includes station group information corresponding to a station group member served by each of the plurality of member APs. In another example, the station group setup request message includes all station group context information.

In a third case, the coordination AP broadcasts the station group setup request message, and a receiver address field in the station group setup request message may be a broadcast address or a broadcast AID (broadcast sending), an AP group address or a group ID (multi-point sending), or the like. The coordination AP may include all station group context information in the station group setup request message, and broadcast the station group setup request message.

A member AP that receives the station group setup request message maintains context information of the member AP also in a plurality of cases:

In a first case, if the station group setup request message includes only station group information corresponding to a station group member served by the member AP, the member AP may store the station group information in the station group setup request message.

In a second case, if the station group setup request message includes station group information corresponding to a station group member not served by the member AP in addition to station group information corresponding to a station group member served by the member AP, the member AP may use a plurality of processing manners. In a first processing manner, the member AP may store only the station group information corresponding to the station group member served by the member AP. In a second processing manner, the member AP may not only store the station group information corresponding to the station group member served by the member AP, but also store the station group information corresponding to the station group member not served by the member AP.

Similar to the station group setup request message, the station group update request message and the station group release request message may also be applicable to the foregoing several cases, and details are not described herein again.

Embodiment 4 provides an interference measurement scheduling method and a measurement result obtaining method. Interaction processes of the interference measurement scheduling method and the measurement result obtaining method include steps S300.a to S300.d in the foregoing Embodiment 1, steps S800.a to S800.d in the foregoing Embodiment 2, or step S1000.a to step S1000.d in the foregoing Embodiment 3.

### Interference measurement scheduling: measurement request message (station measurement request, STA_meas_REQ)

In the foregoing Embodiment 1, Embodiment 2, and Embodiment 3, the measurement request message mentioned in interference measurement scheduling is sent by the coordination AP to the member AP. The measurement request message may include H measurement sets and H measurement time types that are in a one-to-one correspondence with the H measurement sets, H measurement configurations that are in a one-to-one correspondence with the H measurement sets, and a receive end identifier, where H is an integer greater than or equal to 1. The measurement time type is used to indicate a type of an interference measurement period in which a member AP schedules a measurement element in a measurement set to perform interference measurement. The measurement configuration includes a measurement parameter, and the measurement parameter may be used to indicate a condition for performing interference measurement or a condition for reporting interference by the measurement element in the measurement set when the member AP schedules the measurement element in the measurement set to perform interference measurement. The receive end identifier is used to indicate one or more member APs. The receive end identifier may be a MAC address or an association ID AID of the one or more member APs, an ID defined in a virtual AP or a PCP/AP, or the like, or may be a broadcast address or a broadcast AID (broadcast sending), an AP group address or a group ID (multi-point sending), or the like.

Each measurement set may include at least one measurement element. In this embodiment of this application, the measurement element includes but is not limited to the following forms:
First form: The measurement element is a station. That is, the measurement set includes one or more stations. In this case, the measurement request message is used to indicate that the member AP schedules one or more stations included in the measurement set to perform interference measurement. Optionally, the measurement request message may further include a quantity of stations in the measurement set.

Second form: The measurement element is a station pair. That is, the measurement set includes one or more station pairs. In this case, the measurement request message is used to indicate that the member AP schedules one or more station pairs included in the measurement set to perform interference measurement. Optionally, the measurement request message may further include a quantity of station groups in the measurement set.

It may be understood that, in the first example in which FIG. 2 is used as an example, to set up the STA group 1 shown in Table 1, the measurement request message sent by the coordination AP is used to indicate the member AP (the AP 3) to send a measurement configuration frame, to schedule the station STA 5 to perform interference measurement during communication between the STA 1 and the AP 1, and to schedule the stations STA 3 and STA 4 to perform interference measurement during communication between the STA 1 and the AP 1. It may be understood that a type of a measurement element of a measurement set included in the measurement request message sent by the coordination AP is a station group. Further, the coordination AP (the AP 1) may further send a measurement configuration frame, to schedule the station STA 1 to perform interference measurement during communication between the STA 5 and the AP 3, to obtain an interference measurement result.

It may be understood that, in a third example, to update the STA group 2 shown in Table 1 to obtain the STA group 2 shown in Table 5, the measurement request message sent by the coordination AP to the AP 2 is used to indicate the AP 2 to send a measurement configuration frame, to schedule the STA 2 in the STA group 2 in the scheduling table 1 to perform interference measurement during communication between the AP 3 and the STA 3. The measurement request message sent to the AP 3 is further used to schedule the AP 3 to send a measurement configuration frame, to indicate the STA 3 to perform interference measurement when a station group element in the STA group 2 performs transmission or communication. In addition, the AP 1 also sends a measurement configuration frame to the STA 1, to schedule the STA 1 in the STA group 2 in the scheduling table 1 to perform interference measurement during communication between the AP 3 and the STA 3. Therefore, it may be understood that a type of a measurement element in a measurement set included in the measurement request message sent by the coordination AP to the AP 2 may be a station.

Optionally, the measurement request message may further include a measurement element type. For example, the measurement element type may be used to indicate whether a type of a measurement element is a station or a station group.

Optionally, the measurement request message may further include a transmit end identifier, used to indicate the AP that sends the measurement request message. For example, the transmit end identifier may be a MAC address or an association ID AID of the coordination AP, an ID defined in a virtual AP or a PCP/AP, or the like.

Optionally, the measurement request message may further include a scheduling time of the member AP, used to indicate a time range in which the member AP sends a measurement configuration frame.

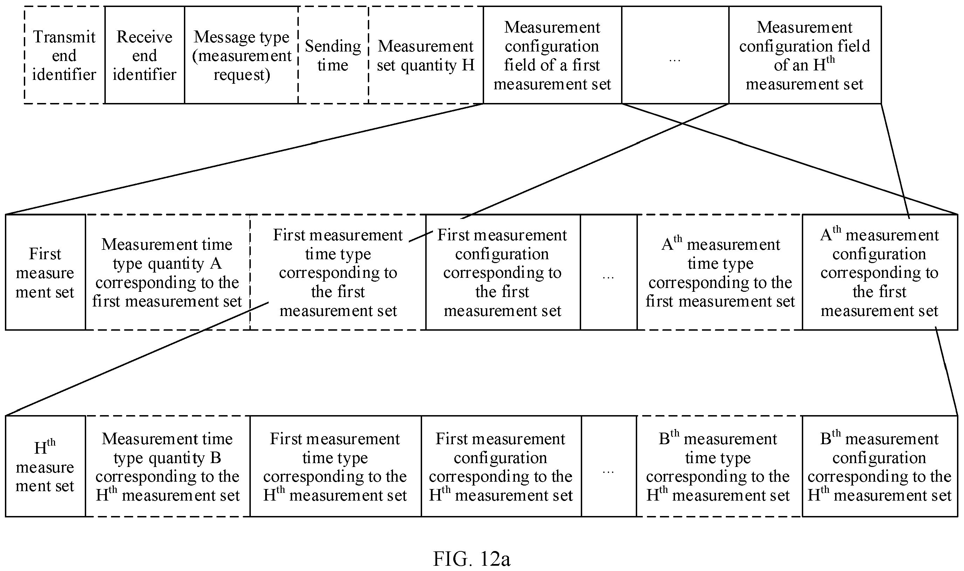

In an example, when a member AP combines information about M measurement sets that need to be scheduled, and sends the information in one measurement configuration frame, the measurement request message may include one scheduling time range, and the scheduling time range is used to indicate a time range in which the measurement configuration frame is sent. In an example, an example structure of the measurement request message is shown in FIG. 12a. A measurement configuration field of one measurement set includes the measurement set, further includes at least one corresponding measurement time type and at least one measurement configuration in the measurement set, and optionally, further includes a measurement time type quantity. Optionally, the measurement request message may further include a measurement set quantity, used to indicate a quantity of measurement sets, or a quantity of measurement configuration fields of measurement sets. Alternatively, the measurement request message may not include a measurement set quantity, but includes an identifier field i before or after an i^{th} measurement configuration field. The identifier field i is used to indicate whether an (i+1)^{th} measurement configuration field is further included after the i^{th} measurement configuration field, where i is an integer greater than or equal to 1 and less than or equal to H. The measurement request message may further include M scheduling time ranges, and the M scheduling time ranges are in a one-to-one correspondence with the M scheduling sets. In an example, an example structure of the measurement request message is also shown in FIG. 12a. A sending time field includes M sending time subfields, and one sending time subfield is associated with one scheduling set, to indicate a time range in which a measurement configuration frame for scheduling the measurement set is sent.

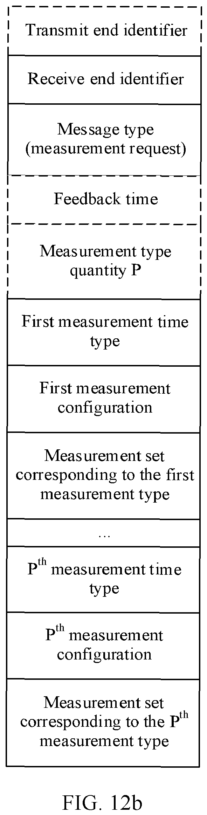

In another example, an example structure of the measurement request message is shown in FIG. 12b. Measurement configuration information is indicated to a member AP by specifying a corresponding measurement set for each measurement time type and measurement configuration. Optionally, the measurement request message may further include a measurement time type quantity, used to indicate a quantity of measurement time types. Likewise, alternatively, the measurement request message may not include the measurement time type quantity, but may further include an identifier field after each measurement time type field or measurement set field, used to indicate whether another measurement time type field is further included after the measurement time type field. For example, an i^{th} identifier field indicates whether an (i+1)^{th} measurement time type field is further included after an i^{th} measurement time type field, where i is an integer greater than or equal to 1 and less than or equal to P.

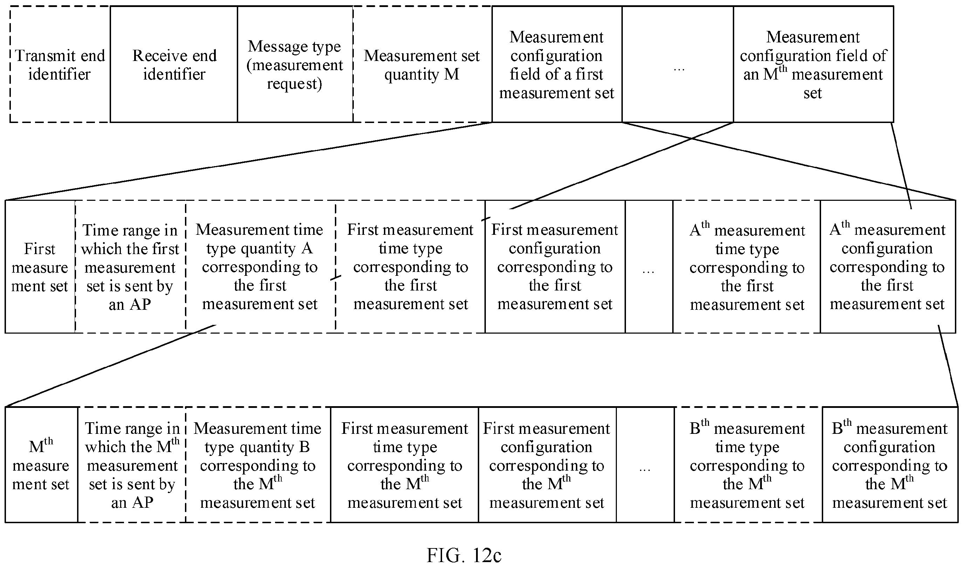

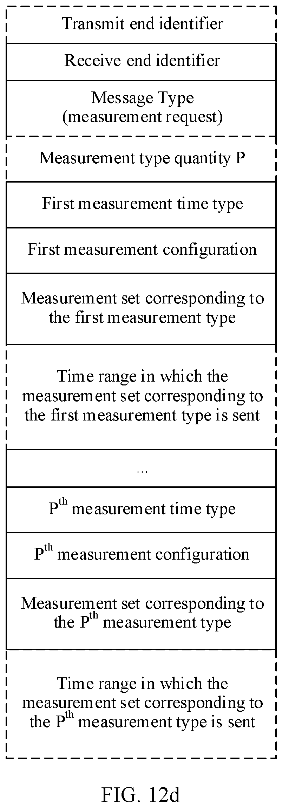

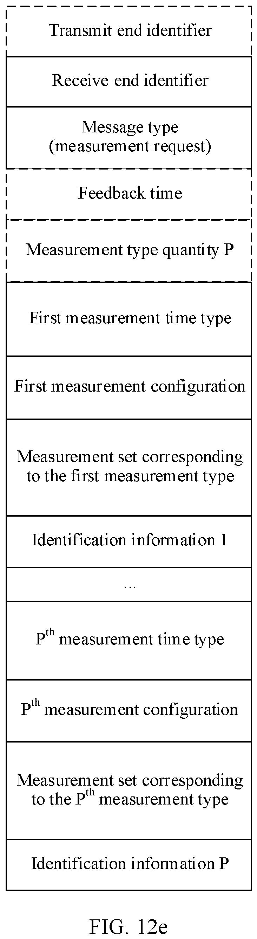

In another example, when a member AP separately sends, by using M measurement configuration frames, information about M measurement sets that need to be scheduled, the measurement request message may include M scheduling time ranges, and the M scheduling time ranges are in a one-to-one correspondence with the M measurement configuration frames, an i^{th} scheduling time range indicates a time range in which an i^{th} measurement configuration frame is sent. Another example structure of the measurement request message is shown in FIG. 12c. Similarly, alternatively, the measurement request message may not include a measurement set quantity, but includes an identifier field i before or after an i^{th} measurement configuration field. The identifier field i is used to indicate whether an (i+1)^{tn} measurement configuration field is further included after the i^{th} measurement configuration field. Still another example structure of the measurement request message is shown in FIG. 12d. Optionally, the measurement request message may further include a measurement time type quantity, used to indicate a quantity of measurement time types. Likewise, alternatively, the measurement request message may not include the measurement time type quantity, but may further include an identifier field after each measurement time type field or measurement set field, used to indicate whether another measurement time type field is further included after the measurement time type, for example, as shown in FIG. 12e. For example, a first identifier field indicates whether a second measurement time type is further included after the first measurement time type.

When the coordination AP needs to send a measurement request message to a plurality of member APs, to schedule the plurality of member APs to send a measurement configuration frame, the coordination AP may separately indicate (instead of combining) measurement request content of each member AP. It should be noted that types of messages sent to different receive ends may be the same or may be different.

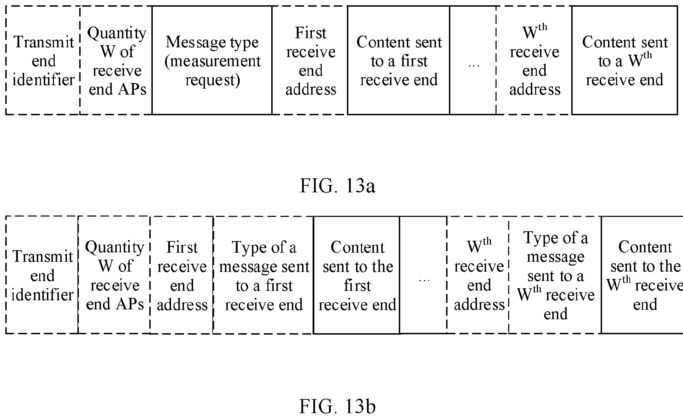

In an example, when types of messages sent to different member APs are the same, a message format shown in FIG. 13a may be used. For example, if types of messages received by a first receive end (the AP 2) and a second receive end (the AP 3) are both measurement request messages, content received by the first receive end (the AP 2) and content received by the second receive end (the AP 3) may both use the structures shown in FIG. 12a to FIG. 12e. Details are not described herein again.

In an example, when types of messages sent to different member APs are different, a message format shown in FIG. 13b may be used. For example, if a type of message received by the first receive end (the AP 2) is a measurement request message, for content received by the first receive end, refer to the structures in FIG. 12a to FIG. 12e. If a type of a message received by a second receive end (the AP 3) is a station group setup request message, content received by the second receive end may use the structure shown in FIG. 4a or FIG. 4b. Details are not described herein again.

Reporting of an interference measurement result: measurement result indication message (station measurement indication, STA_MEAS_IND)

In the foregoing Embodiment 1, Embodiment 2, and Embodiment 3, the measurement result indication message involved in the feedback of the interference measurement result is fed back by the member AP that receives the measurement request message to the coordination AP.

In an example, the measurement result indication message specifies, for each STA, a measurement type and a measurement result that correspond to the STA. The measurement result indication message includes measurement results corresponding to X STAs, where X is an integer greater than or equal to 1.

The measurement result may be a measurement result of a STA that performs interference measurement. For example, the measurement result of the STA that performs interference measurement may be power, average interference noise power, or the like of an interference signal measured by the STA. Alternatively, the measurement result may be another indicator that can reflect interference strength. This is not specifically limited in the embodiments of this application.

The measurement result indication message may further include a transmit end identifier, used to indicate an access point that sends the measurement result indication message. For example, if the AP 2 sends the measurement result indication message to the coordination AP, the transmit end identifier may be a MAC address or an association ID AID of the AP 2, an ID defined in a virtual AP or a PCP/AP, or the like.

Optionally, the measurement result indication message may further include but is not limited to one or a combination of the following:
a receive end identifier, which is an optional parameter, and may be used to indicate the coordination AP (the AP 1), for example, a MAC address or an association ID AID of the AP 1, an ID defined in the virtual AP or the PCP/AP, or the like; and
a message type, used to indicate that the message is a measurement result indication message.

For measurement result information of each STA, the measurement result indication message may include but is not limited to:
a STA identifier, used to indicate a STA that performs interference measurement, where the STA identifier may be a MAC address or an association ID AID of the STA, or the like; and
a measurement time type, which may be a type of a period of time in which the STA performs interference measurement. For example, if the STA measures interference in an association-beamforming training interval, a period of time indicated by the measurement time type is the association beam training interval. It may be understood that the measurement time type is an optional parameter in some scenarios. In an example, if measurement results fed back are of a same measurement time type, the measurement time type may be omitted. For example, it may be agreed that the member AP feeds back only interference strength measured in an association beam training interval. In this case, the measurement time type may also be omitted. In another example, if the member AP feeds back measurement results according to an agreed sequence of measurement time types, the measurement time types may also be omitted. For example, the member AP and the central AP agree to sequentially report all measurement results of several measurement time types. In this case, the measurement time type may also be omitted.

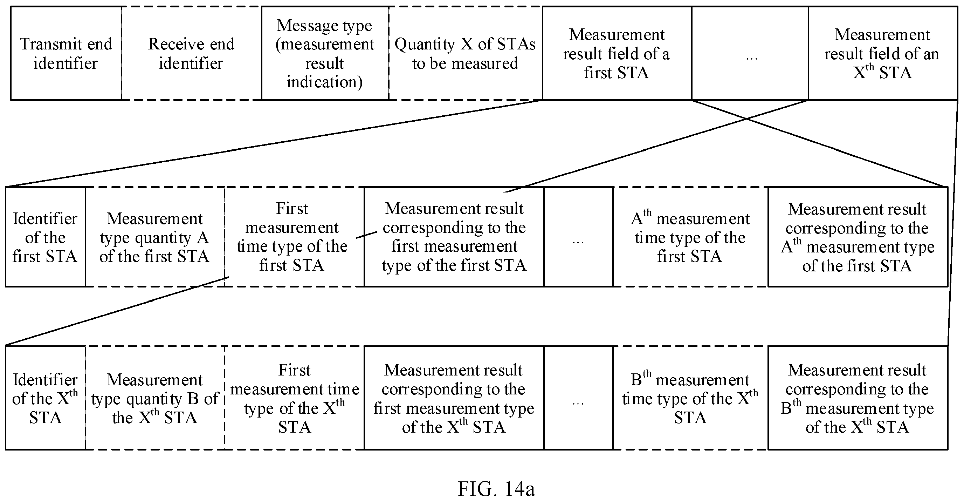

An example format of the measurement result indication message is shown in FIG. 14a. Measurement results of a plurality of measurement STAs in the measurement result indication message are simultaneously fed back to the coordination AP. The measurement result indication message includes X measurement result fields, corresponding to X measurement STAs. An i^{th} measurement result field includes an identifier of an i^{th} STA and a measurement result of the STA. Optionally, the measurement result indication message may further include a quantity A of measurement time types. In this case, the measurement result field further includes A measurement results, and the A measurement results are in a one-to-one correspondence with the A measurement time types.

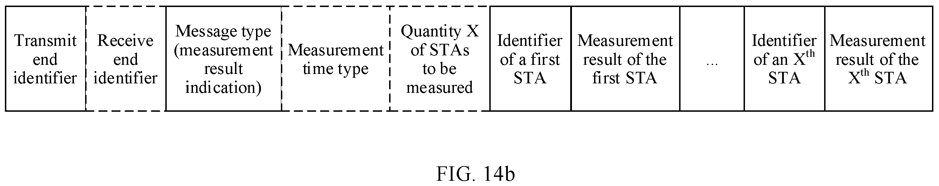

Specially, when the member AP (the AP 2 or the AP 3) feeds back a measurement result corresponding to only one measurement time type in each measurement result indication message, a structure shown in FIG. 14b may be used. Measurement time types of the X STAs are the same.

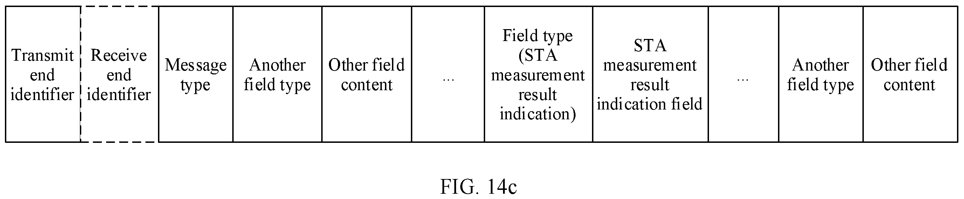

Specially, content of the STA measurement result indication message STA_MEAS_IND may also be nested in another message sent by the AP 2 to the AP 1 (for example, a message exchanged between APs during initial access of a STA). For example, a field after the "message type field (STA measurement result indication)" in FIG. 14b or FIG. 14a may be encapsulated into a STA measurement result indication field, and then the STA measurement result indication field is nested in a message. In an example, a message shown in FIG. 14c includes a plurality of field types and field content. The member AP may encapsulate a measurement result indication field in one of the fields, and set a field type corresponding to the field as the measurement result indication field.

Before an AP sends a measurement request message, the AP may further obtain a measurement capability of another AP, and the another AP may send a measurement capability element to the AP, to determine an exchanged measurement type that can be executed by the another AP. When a plurality of APs send measurement capability elements to the AP, the plurality of APs may send the measurement capability elements separately, sequentially, or in parallel (similar to a UL MU-MIMO manner).

For example, a common scenario is that the AP 2 is the member AP, the AP 1 is the coordination AP, and there may be two manners of measurement capability interaction between the AP 1 and the AP 2.

First manner: The AP 2 actively reports a measurement capability element. For example, when the AP 2 joins an AP cluster, the AP 2 may include the measurement capability element (measurement capacity element, meas_capab_element) in a request for joining the AP cluster.

Second manner: The AP 2 passively reports a measurement capability element (through query). For example, the AP 1 may send a measurement capability query frame to the AP 2 to query a measurement capability of the AP 2, and then the AP 2 feeds back a measurement capability frame to the AP 1, where the measurement capability frame includes the measurement capability element. The measurement capability query frame may be a newly defined frame (including a measurement capability query element) or a measurement capability query element added to an existing frame. The measurement capability frame may be a newly defined frame (including a measurement capability element) or a measurement capability element that may be added to an existing frame.

The measurement capability element is used to indicate a measurement capability of an AP.

An implementation of the measurement capability element is a bitmap (bitmap). One bit (bit) represents one measurement type. If a bit value is 1, it indicates that such measurement is supported. If a bit value is 0, it indicates that such measurement is not supported. For example, if the measurement time interval indicated by the measurement type includes a BTI interval, an A-BFT, an SP, a periodicity interval, and a user-selected time interval, the measurement capability element needs only five bits, first five bits of one byte, or last five bits of one byte. The five bits represent BTI measurement, A-BFT measurement, SP measurement, periodicity measurement, and optional measurement. For example, if a corresponding bit value is equal to 1, it indicates that the AP supports corresponding measurement, and if a corresponding bit value is equal to 0, it indicates that the AP does not support corresponding measurement. Another measurement type may alternatively be used. A definition of the measurement capability element is similar. Details are not described herein.

Another implementation of the measurement capability element is to define a sub-element for each measurement type, where each sub-element includes a variable for indicating whether the AP supports such measurement. Optionally, each sub-element may further include another variable. For example, for the foregoing five measurement types, the measurement capability element may include five sub-elements: a BTI measurement capability sub-element, an A-BFT measurement capability sub-element, an SP measurement capability sub-element, a periodicity measurement capability sub-element, and a user-selected measurement capability sub-element. Each sub-element includes one variable for indicating whether the AP supports such measurement. If a value of the variable is 1, it indicates that the AP supports corresponding measurement. If a value of the variable is 0, it indicates that the AP does not support corresponding measurement. Optionally, each sub-element may further include another variable.

The measurement capability query element is used to indicate the AP to query a measurement capability of another AP.

In an implementation, the element is empty (there is only one element type) and does not include other parameters.

In another implementation, the element includes a query variable. When the query variable is equal to 1, it indicates that a measurement capability is queried. When the query variable is equal to 0 or another value, it indicates another meaning (for example, a reserved bit).

According to the method in this embodiment of this application, the AP in the access point cluster may aggregate interference measurement information by using the measurement request message and the measurement result indication message, so that the AP in the access point cluster may determine the station group by using the interference measurement result. In a centralized manner, the coordination AP or the synchronization AP may also manage and control interference measurement of another AP.

Embodiment 5 provides a centrally-controlled coordinated scheduling method. In this method, a coordination AP determines a scheduling set and a transmission time identifier of a corresponding scheduling set, and the coordination AP may further determine a scheduling type and the like.

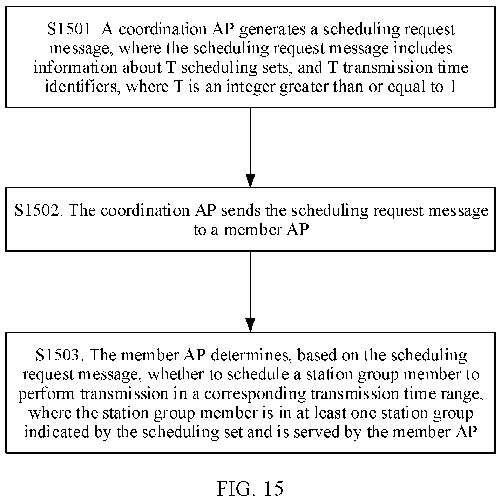

FIG. 15 shows a centrally-controlled coordinated scheduling method according to an embodiment of this application. The method includes the following steps.

S1501. A first access point AP generates a scheduling request message, where the scheduling request message includes information about T scheduling sets and T transmission time identifiers, T is an integer greater than or equal to 1, the scheduling set includes at least one scheduling set element, and the information about the scheduling set is used to indicate the scheduling set, the transmission time identifier is used to indicate a time range in which a scheduling set element indicated by a scheduling set is scheduled for transmission. The T transmission time identifiers are in a one-to-one correspondence with the T scheduling sets.

The first access point AP may be a coordination AP or a synchronization AP. Herein, an example in which the first access point AP is the coordination AP is used for description.

Any one of the T scheduling sets includes at least one scheduling set element, the information about the scheduling set includes at least one scheduling set subfield, one scheduling set subfield is used to indicate one scheduling set element, and the at least one scheduling set subfield is in a one-to-one correspondence with the at least one scheduling set element.

The scheduling request message (station scheduling request, STA_SCHD_REQ) may further include a receive end identifier, used to indicate one or more member APs (for example, an AP 2 and an AP 3), and may be a MAC address or an association ID AID of the one or more member APs, an ID defined in a virtual AP or a PCP/AP, or the like, or may be a broadcast address or a broadcast AID (broadcast sending), an AP group address or a group ID (multi-point sending), or the like.

S1502. The first AP sends the scheduling request message to at least one second AP, so that the at least one second AP determines, based on the scheduling request message, whether to schedule a scheduling set element, served by the at least one second AP, in the at least one scheduling set element indicated in the scheduling set to perform transmission in a corresponding transmission time range.

The second access point AP herein may be a member AP.

S1503. The member AP determines, based on the scheduling request message, whether to schedule a scheduling set element to perform transmission in a corresponding transmission time range, where the scheduling set element is in the at least one scheduling set indicated by the scheduling set and is served by the member AP

The scheduling request message is sent by the coordination AP to the at least one member AP, to indicate a member AP indicated by a receive end address to schedule the scheduling set based on content indicated in the scheduling request message.

In this embodiment of this application, there may be a plurality of types of scheduling set elements:
In a first form, if a type of the scheduling set element is a station, a scheduling set subfield corresponding to the scheduling set element includes an identifier of the station.

In a second form, if a type of the scheduling set element is a station pair, a scheduling set subfield corresponding to the scheduling set element includes identifiers of two stations of the station pair.

In a third form, if a type of the scheduling set element is a station group, a scheduling set subfield corresponding to the scheduling set element includes an ID of the station group. For example, if a type of a scheduling set element in a scheduling set 3 is a station group, and the scheduling set 3 includes one station group, where the station group is a STA group 2 shown in Table 1, information about the scheduling set is an ID of the STA group. It may be understood that, the ID of the station group may be a global ID, is an ID globally used by all stations in an access point cluster, and is unique in the access point cluster. The ID of the station group may alternatively be a local ID, is used by some access points in an access point cluster, may be unique or may not be unique in the access point cluster. For a case of a local ID, details are specifically described in a subsequent paragraph in the embodiments of this application. It should be noted that, in this embodiment, when the type of the scheduling set element is a station group, the scheduling set element may be a station group determined based on a definition 1, or may be a station group determined based on a definition 2. Therefore, a scheduling set subfield corresponding to the scheduling set element may further include a station group definition type indication. For detailed descriptions of determining the station group by using the definition 1 and the definition 2, refer to Embodiment 1. Details are not described herein again.

Optionally, the information about the scheduling set may further include a quantity of scheduling set elements.

Optionally, the information about the scheduling set may further include a scheduling set element type identifier, used to indicate a type of a scheduling set element included in the scheduling set. It may be understood that the scheduling set may include one scheduling set element, or may include a plurality of scheduling set elements. When one scheduling set element is included, the scheduling set element type identifier may indicate a type of the scheduling set element. When a plurality of scheduling set elements are included, types of the plurality of scheduling set elements may be the same or may be different. When the types of the plurality of scheduling set elements are the same, the scheduling set element type identifier may be used to indicate the types of the plurality of scheduling set elements. When the types of the plurality of scheduling set elements are different, a plurality of scheduling set element type identifiers may be included, and each scheduling set element type identifier indicates a type of one scheduling set element.

The transmission time identifier included in the message is used to indicate a time range in which a scheduling set scheduled by a member AP performs transmission. In an example, the transmission time identifier includes a transmission start time and transmission duration. In another example, the transmission time identifier includes a transmission start time and a transmission end time. For example, if a scheduling set 1 is scheduled for transmission in a service period SP 1, the transmission time identifier may include a start time of the SP 1 and duration of the SP 1. Alternatively, the transmission time identifier may include a start time of the SP 1 and an end time of the SP 1.

Optionally, the scheduling request message may further include but is not limited to one or a combination of the following:
a transmit end identifier, used to indicate the coordination AP 1, and may be a MAC address or an association ID AID of the AP 1, an ID defined in a virtual AP or a PCP/AP, or the like;
a scheduling set quantity, used to indicate a quantity of scheduling sets in the scheduling request message; and
a transmission period type, used to indicate a transmission period, where the period may be an ordered service period (ORDER_SP), a regular service period (REGULAR_SP), a contention-based access period (CBAP), or another value. Alternatively, another type may be added or some types may be used. It may be understood that, if the scheduling request message includes only one transmission period type, or the coordination AP or the member AP does not pay attention to the transmission period type when performing scheduling, the parameter may not be required.

REGULAR_SP is a service period SP defined in the 802.11ad/ay standard, and the CBAP is a CBAP defined in the 802.1111ad/ay standard. In ORDER_SP, a scheduled STA needs to receive and send data in a corresponding transmission time. Even if no data at an application layer needs to be sent, padding data needs to be sent for another STA to perform measurement. In REGULAR_SP, if a scheduled STA has data to send, data is transmitted and received in the transmission time. If no data needs to be sent, other data may not be sent (same as 11ad/ay).

The scheduling request message may further include a scheduling time identifier, used to indicate a scheduling time range in which one or more member APs schedule a STA served by the member APs. This parameter may provide a spatial sharing/interference reduction option for the AP 1 (especially in a scenario in which the AP 1 is the coordination AP). To be specific, the coordination AP 1 may control a time range in which a member AP (for example, the AP 2 or the AP 3) sends an air interface message to a STA served by the member AP, thereby preventing interference between a plurality of member APs.

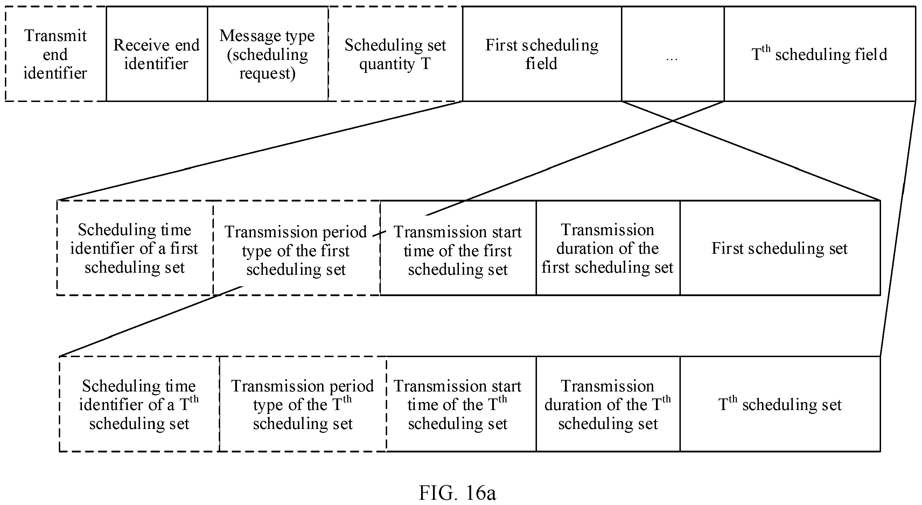

In an example, the scheduling time identifier may be separately indicated for each scheduling set, to be specific, one scheduling time identifier indicates a time range in which a member AP sends a scheduling frame to one measurement set. FIG. 16a shows an example structure of the scheduling request message. A message type indicates that the message is a scheduling request message, and the scheduling request message includes T scheduling fields. An i^{th} scheduling field includes a scheduling time identifier corresponding to an i^{th} scheduling set, and a transmission time identifier corresponding to the i^{th} scheduling set, for example, includes a transmission start time and transmission duration, and further includes information used to indicate the i^{th} scheduling set. For example, it is assumed that the coordination AP needs to indicate, in parallel, the member APs to schedule three scheduling sets, a time for scheduling a first scheduling set is a time 1, a time for scheduling a second scheduling set is a time 2, and a time for scheduling a third scheduling set is a time 3. In this case, the coordination AP may send a combined scheduling request message, and the message may use the structure shown in FIG. 16a.

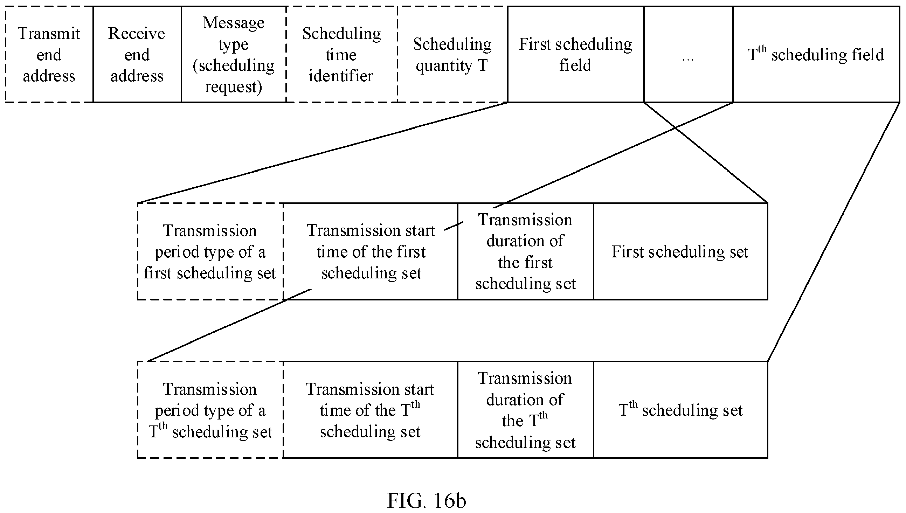

In another example, the scheduling time identifier may be separately indicated for each scheduling set, to be specific, one scheduling time identifier indicates a time range in which a member AP sends a scheduling frame to one scheduling set. Scheduling time identifiers of a plurality of scheduling sets may be all carried in one scheduling time field, and the scheduling time field includes a plurality of scheduling time identifiers. For example, as shown in FIG. 16b, an AP scheduling time identifier field may include T subfields (not shown in FIG. 16b), and one subfield is one scheduling time identifier and corresponds to one scheduling set.

In still another example, the scheduling time identifier may be commonly indicated for a plurality of scheduling set, to be specific, one scheduling time identifier indicates a time range in which a member AP sends a scheduling frame to a plurality of measurement sets. It may be understood that, when the coordination AP schedules a member AP to schedule a plurality of scheduling sets in parallel, one scheduling time identifier may be used to indicate scheduling time ranges of a plurality of measurement sets. For example, FIG. 16b shows another example structure of the scheduling request message. Different from the scheduling request message shown in FIG. 16a, a scheduling time identifier in the scheduling request message shown in FIG. 16b indicates a scheduling time range common to T scheduling sets. For example, it is assumed that the coordination AP needs to indicate, in parallel, the member APs to schedule three scheduling sets, a time for scheduling a first scheduling set is a time 1, a time for scheduling a second scheduling set is the time 1, and a time for scheduling a third scheduling set is the time 1. In this case, the coordination AP may send a combined scheduling request message, and the message may use the structure shown in FIG. 16b.

It may be understood that the coordination AP may further indicate, in serial, the member APs to schedule the three scheduling sets. That is, the coordination AP may send three scheduling request messages. A first scheduling request message indicates a member AP to schedule a scheduling set 1 in the SP 1. A second scheduling request message indicates a member AP to schedule a scheduling set 2 in an SP 2. A third scheduling request message indicates a member AP to schedule a scheduling set 3 in an SP 3. Any one of the three scheduling request messages may use the structure shown in FIG. 16a or the structure shown in FIG. 16b.

The member AP may determine, based on the scheduling request message, whether to schedule a scheduling set element, served by the member AP, in the at least one scheduling set element in the scheduling set to perform transmission in the transmission time range.

When the scheduling set in the scheduling request message includes a station group, a station group member in the station group is served by the member AP, and the station group is determined based on the definition 1, the member AP determines that the station group member can be scheduled to perform transmission in a corresponding transmission time range.

When the scheduling set in the scheduling request message includes a station group, a station group member in the station group is served by the member AP, and the station group is determined based on the definition 2, the member AP determines that the station group member cannot be scheduled to perform transmission in a corresponding transmission time range.

The scheduling set in FIG. 16a and FIG. 16b includes at least one scheduling set element. Content included in the information about the scheduling set varies with different types of scheduling set elements.

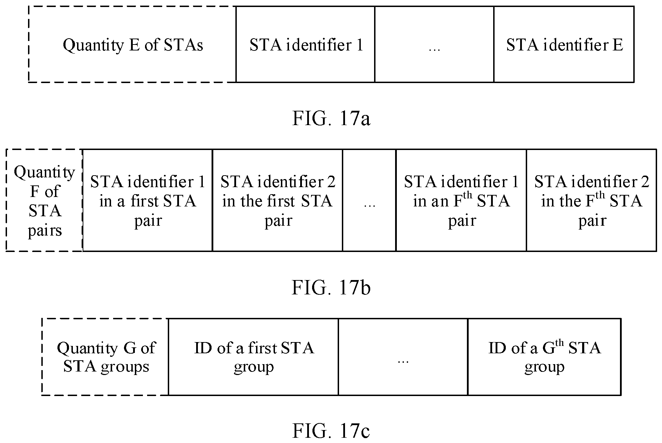

In an example, when a type of the scheduling set element included in the scheduling set is a station, the information about the scheduling set may use a structure shown in FIG. 17a.

In another example, when a type of the scheduling set element included in the scheduling set is a station pair, the information about the scheduling set may use a structure shown in FIG. 17b.

In still another example, when a type of the scheduling set element included in the scheduling set is a station group, the information about the scheduling set may use a structure shown in FIG. 17c.

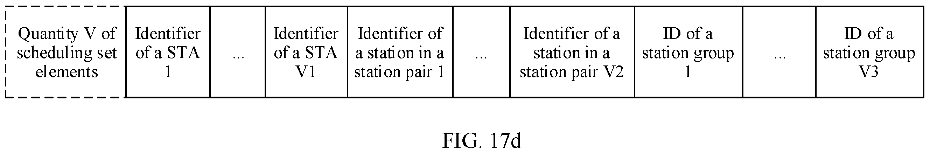

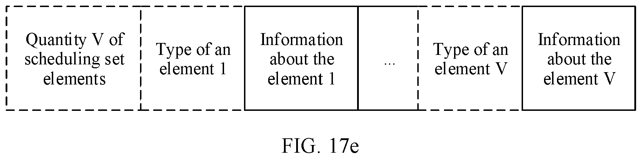

When types of a plurality of scheduling set elements included in the scheduling set are different, for example, the scheduling set includes a station, a station pair, and a station group, the information about the scheduling set may use a structure shown in FIG. 17d. The information about the scheduling set may further use a structure shown in FIG. 17e.

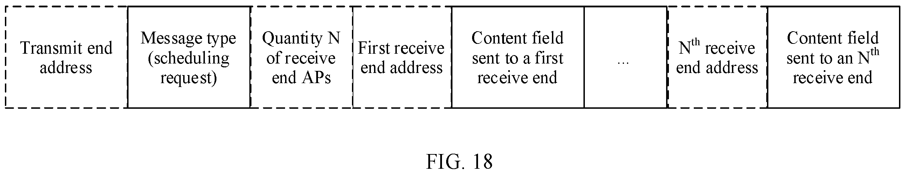

Still another example structure of the scheduling request message proposed in this embodiment of this application is shown in FIG. 18. Different from the scheduling request message shown in FIG. 16a and FIG. 16b, the scheduling request message shown in FIG. 18 is separately indicated to each member AP (instead of being combined as shown in FIG. 16a and FIG. 16b). Therefore, the scheduling request message shown in FIG. 18 includes a plurality of receive end content fields that are in a one-to-one correspondence with a plurality of member APs, and may further include receive end addresses of the plurality of member APs. The receive end address of the member AP may be a MAC address or an association ID AID of the member AP, an ID defined in a virtual AP or a PCP/AP, or the like. The receive end content field may be sent by using a format following the message type field in FIG. 16a and FIG. 16b. Details are not described herein again. Optionally, the scheduling request message may further include a quantity of receive end APs.

Based on the method in this embodiment of this application, the coordination AP 1 may control a time range in which a member AP (for example, the AP 2 or the AP 3) sends an air interface message to a STA associated with the member AP, to control scheduling, by the member AP, of a station for transmission, thereby preventing interference between a plurality of member APs. In addition, the coordination AP may control the member AP to schedule a station and a station pair, and may further control the member AP to schedule a station group. The method for scheduling the station group based on the definition 1 can reduce an amount of information exchanged between a plurality of access points APs, reduce overheads, and improve efficiency of communication and scheduling between the plurality of access points APs.

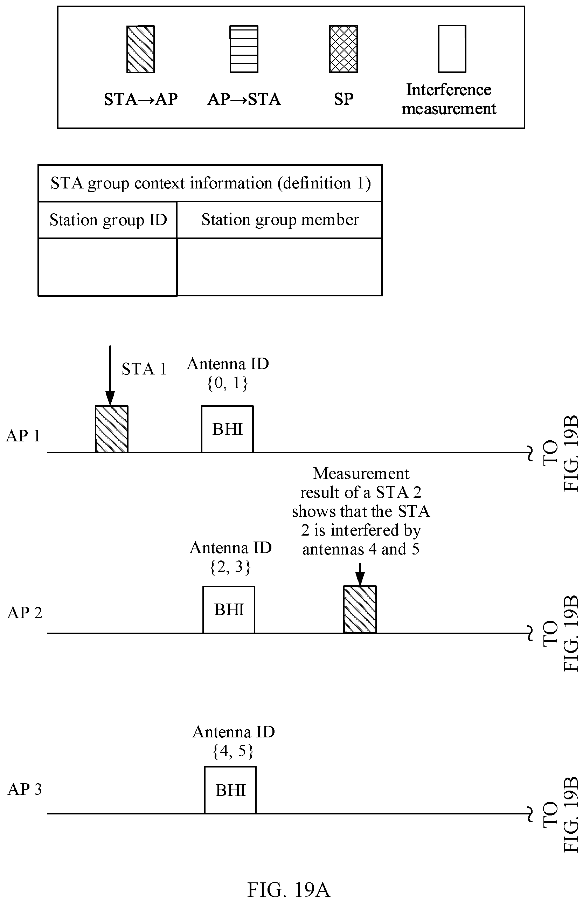

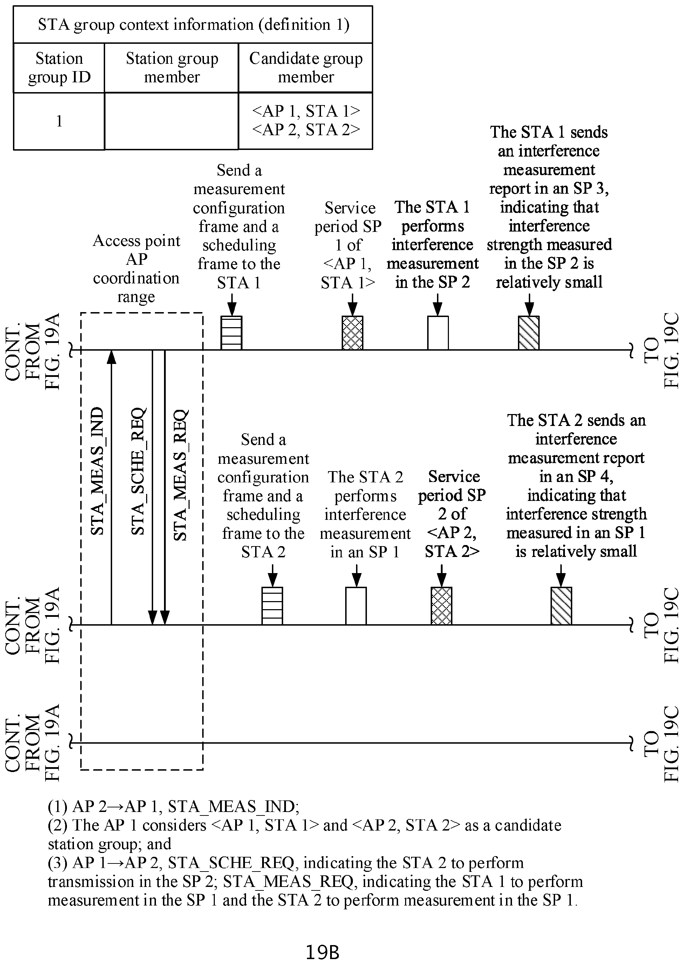

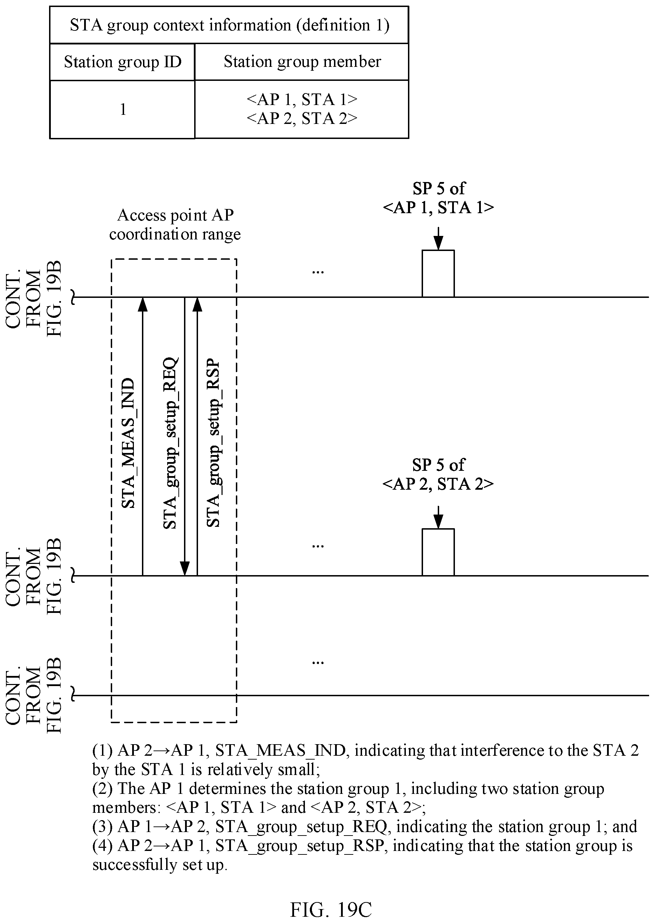

Embodiment 6: FIG. 19A to FIG. 19C are a schematic interaction flowchart of setting up a station group based on a definition 1. Based on the application scenario shown in FIG. 2, an access point AP 1 is used as a centralized AP, which is also referred to as a coordination AP or a synchronization AP. An example in which an access point AP 2 and an access point AP 3 are member APs is used for description.

As shown in FIG. 19A to FIG. 19C, in a first phase, a STA group context determined by the coordination AP indicates that the station group does not include any station, that is, no station group is set up. In this case, a station STA 1 accesses a virtual AP or a PCP/AP cluster including the AP 1, the AP 2, and the AP 3, and is served by the AP 1; a STA 2 accesses the virtual AP or the PCP/AP cluster including the AP 1, the AP 2, and the AP 3, and is served by the AP 2. Then, in a beacon header interval BHI, the AP 1 performs sector sweeping by using an antenna sending beacon frame whose antenna ID is (0, 1), the AP 2 performs sector sweeping by using an antenna sending beacon frame whose antenna ID is (2, 3), and the AP 3 performs sector sweeping by using an antenna sending beacon frame whose antenna ID is (4, 5). The station STA 2 detects interference signals from an antenna 4 and an antenna 5 in the BHI , and feeds back an interference measurement result to the AP 2.

In a second phase, the access point AP 2 may send the interference measurement result to the AP 1 by using a measurement result indication message in this embodiment. The AP 1 that receives the measurement result indication message may determine, based on the interference measurement result, that <STA 2, AP 2> and <STA 1, AP 1> constitute a candidate station group, and update the STA group context.

The AP 1 sends a scheduling request message STA_SCHD_REQ and a measurement request message STA_MEAS_REQ to the AP 2 based on the updated STA group context information. STA_SCHD_REQ is used to indicate the AP 2 to schedule the STA 2 to perform transmission in a service period SP 2, and STA_MEAS_REQ is used to indicate the AP 2 to schedule the STA 2 to perform interference measurement in a service period SP 1. It should be noted that, STA_SCHDREQ and STA MEAS REQ may be sequentially sent in serial, or may be sent in parallel.

It may be understood that, in an example, when STA SCHD REQ and STA MEAS REQ are two separate messages that are sequentially sent in serial, STA_SCHD_REQ may be sent in the formats shown in FIG. 16a and FIG. 16b, and STA_SCHD_REQ includes one scheduling set, and further includes that a transmission time corresponding to the scheduling set 1 is the SP 2. The scheduling set includes one scheduling set element, that is, the STA 2. In this case, the scheduling set may use the format shown in FIG. 17a. STA_MEAS_REQ may use the format shown in FIG. 12a, FIG. 12b, FIG. 12c, FIG. 12d, or FIG. 12e, and STA_MEAS_REQ includes one measurement set, where the measurement set includes one measurement set element, that is, the STA 2. Details are not described herein again. In another example, when STA_SCHD_REQ and STA_MEAS_REQ are encapsulated in a combined message and sent in parallel, the combined message may use the format shown in FIG. 13b. Two receive end content fields are included, where a first content field may be STA_SCHD_REQ, and a second content field may be STA_MEAS_REQ. Details are not described herein again. Optionally, when STA_SCHD_REQ and STA_MEAS_REQ are sent to a same receiving AP, the frame structure shown in FIG. 13b may include only one receive end address, two message types, and corresponding receive end content.

Further, the AP 1 sends a measurement configuration frame and a scheduling frame to the STA 1, where the measurement configuration frame is used to schedule the STA 1 to perform interference measurement in the SP 2, and the scheduling frame is used to schedule the STA 1 to perform transmission in the SP 1. In addition, the AP 2 that receives STA_SCHD_REQ and STA_MEAS_REQ also sends a measurement configuration frame and a scheduling frame to the STA 2, where the measurement configuration frame is used to schedule the STA 2 to perform interference measurement in the SP 1, and the scheduling frame is used to schedule the STA 2 to perform transmission in the SP 2.

The STA 1 that receives the measurement configuration frame and the scheduling frame sent by the AP 1 performs transmission in the SP 1, and performs interference measurement in the SP 2. The STA 2 that receives the measurement configuration frame and the scheduling frame sent by the AP 2 performs interference measurement in the SP 1, and performs transmission in the SP 2.

In an SP 3, the STA 1 feeds back a measurement result obtained through measurement in the SP 2 to the AP 1, where the measurement result indicates that interference strength measured by the STA 1 in the SP 2 is relatively small. The STA 2 feeds back, to the AP 2, a measurement result obtained through measurement in the SP 1, where the measurement result indicates that interference strength measured by the STA 1 in the SP 1 is relatively small.

In a third phase, the AP 2 that receives the measurement result sent by the STA 2 may report the interference measurement result of the STA 2 to the AP 1 by using a format of the measurement result indication message.

The AP 1 may determine, with reference to the interference measurement result of the STA 1 and the measurement result of the STA 2, that interference to <AP 2, STA 2> is relatively small during communication of <AP 1, STA 1>, and that interference to <AP 1, STA 1> is relatively small during communication of <AP 2, STA 2>. In this case, the AP 1 determines that <AP 1, STA 1> and <AP 2, STA 2> constitute a station group 1. Further, the AP 1 sends STA group _setup _REQ to the AP 2, to indicate an ID of the STA group 1 and station group element information to the AP 2. After receiving STA_group_setup_REQ, the AP 2 feeds back STA_group_setup_RSP to the AP 1, to indicate that the STA group 1 is successfully set up.

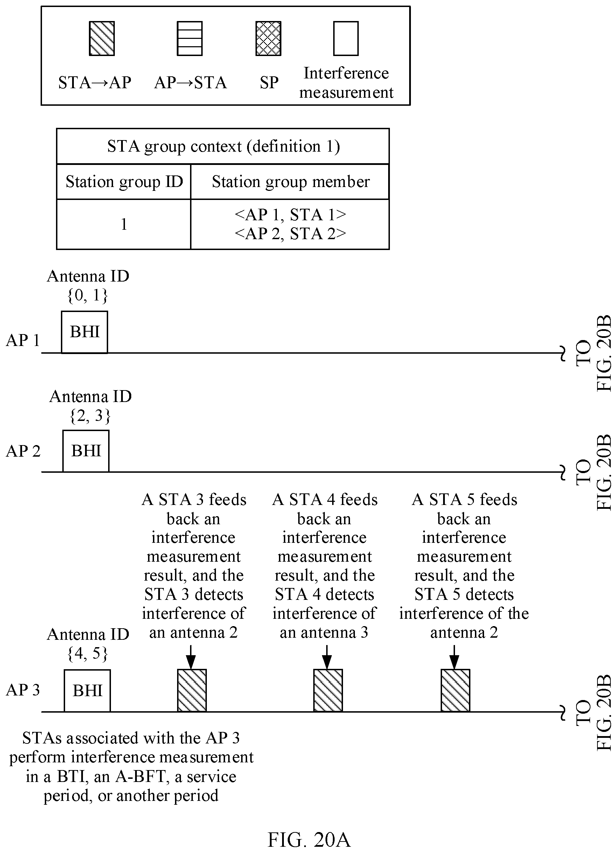

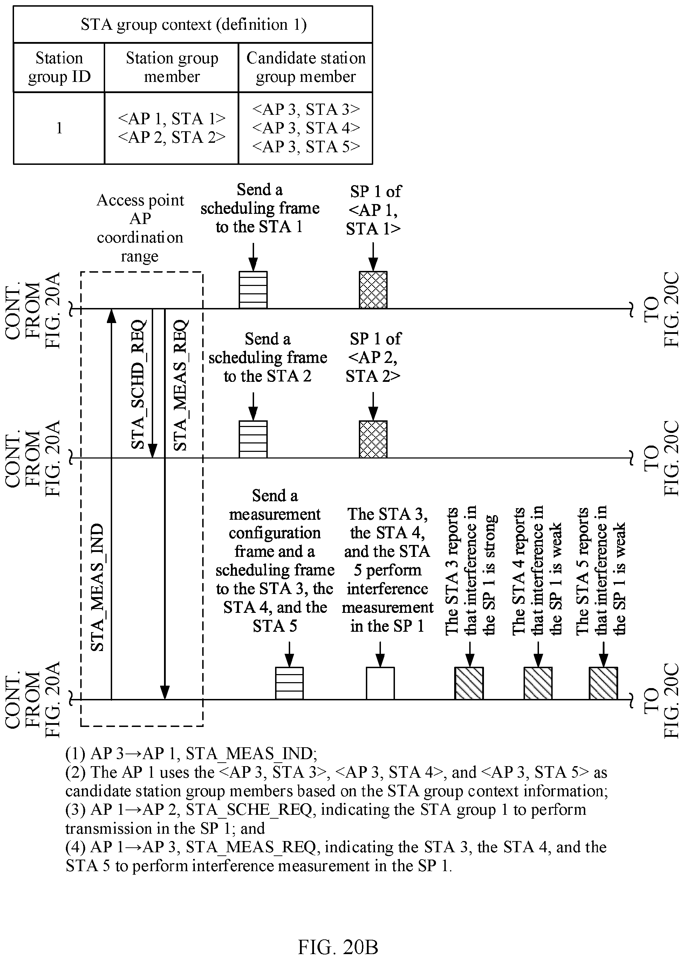

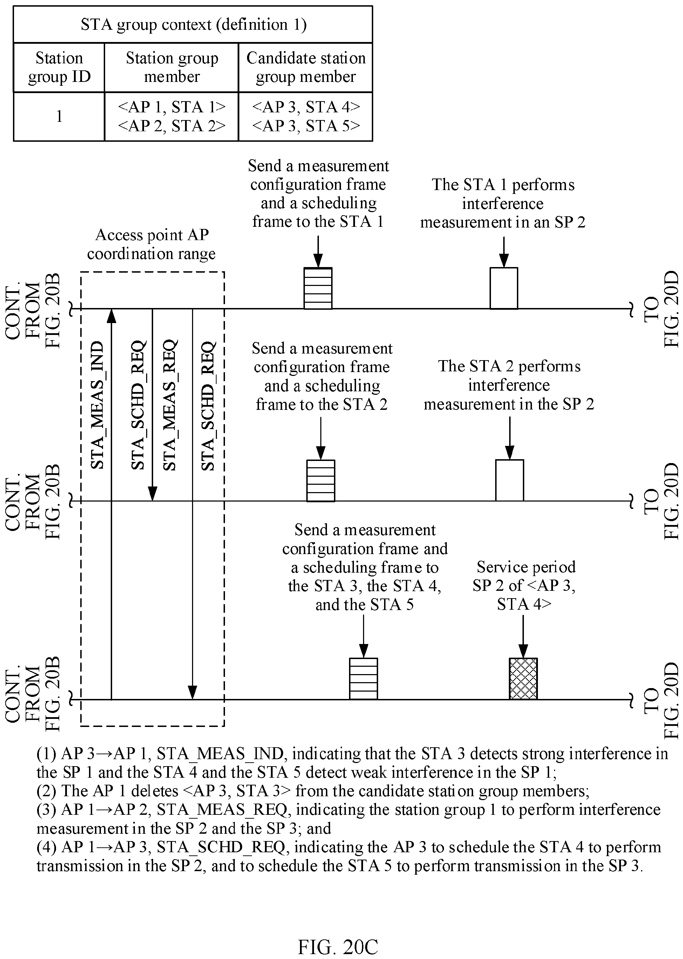

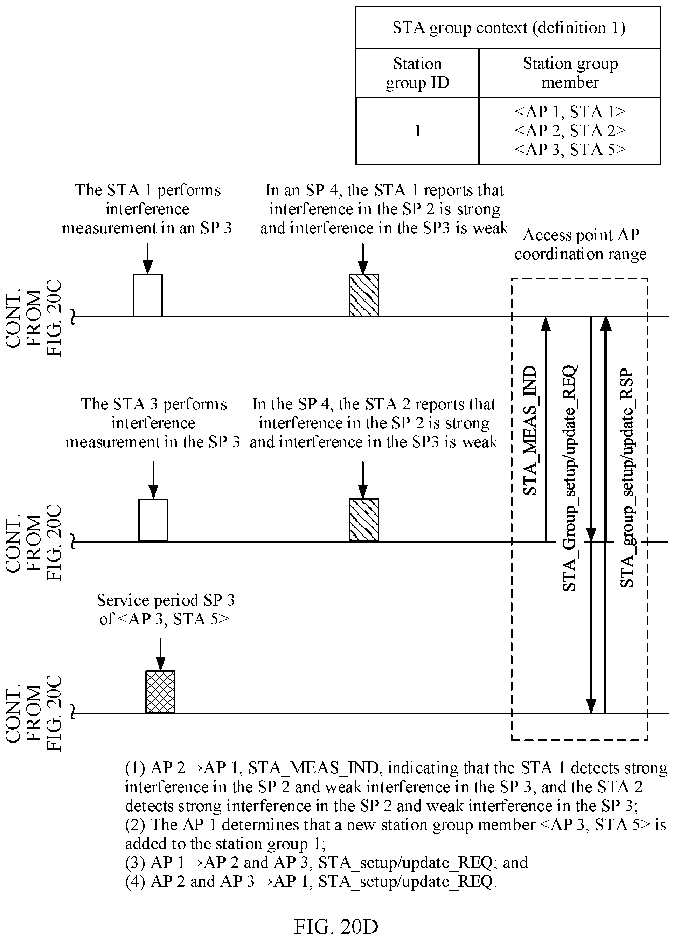

Embodiment 7: FIG. 20A to FIG. 20D are a schematic interaction flowchart of update of a station group that is based on a definition 1 according to an embodiment of this application. Still based on the application scenario shown in FIG. 2, an access point AP 1 is used as a centralized AP, which is also referred to as a coordination AP. An example in which an access point AP 2 and an access point AP 3 are member APs is used for description.

As shown in FIG. 20A to FIG. 20D, in a first phase, a STA group context determined by the coordination AP indicates that a station group STA group 1 is included, and station group members included in the STA group 1 are <AP 1, STA 1> and <AP 2, STA 2>. STAs associated with the AP 3 perform interference measurement in a BTI, an A-BFT, a service period, or another period. In addition, a STA 3, a STA 4, and a STA 5 feed back measurement results to the AP 3. The AP 3 may report the measurement results of the STA 3, the STA 4, and the STA 5 to the AP 1 by using a measurement result indication message STA_MEAS_IND. It may be understood that the measurement results of the three STAs may be sequentially fed back by the AP 3 to the AP 1 in three STA_MEAS_IND messages in serial, or may be fed back by the AP 3 to the AP 1 in one STA_MEAS_IND message in parallel. STA_MEAS_IND may use the structure shown in FIG. 14a, FIG. 14b, or FIG. 14c.

For example, as shown in FIG. 14a, when the AP 3 feeds back measurement results of three stations in parallel in one STA_MEAS_IND message, STA_MEAS_IND may include three measurement result fields. A first measurement result field includes an identifier of the STA 3 and a measurement result of the STA 3. A second measurement result field includes an identifier of the STA 4 and a measurement result of the STA 4. A third measurement result field includes an identifier of the STA 5 and a measurement result of the STA 5.

In a second phase, the AP 1 that receives the measurement result indication message may determine a candidate station group based on an interference measurement result. For example, the AP 1 determines that <AP 3, STA 3>, <AP 3, STA 4>, and <AP 3, STA 5> form the candidate station group STA group 1, and updates the STA group context.

The AP 1 sends a scheduling request message STA_SCHD_REQ to the AP 2 based on the updated STA group context information, where the scheduling request message includes an ID of the STA group 1, and STA_SCHD_REQ is used to indicate a station served by the AP 2 and included in the STA group 1. That is, the STA 2 performs transmission in a service period SP 1, and the AP 1 sends a measurement request message STA_MEAS_REQ to the AP 3, where STA_MEAS_REQ is used to indicate the AP 3 to schedule the STA 3, the STA 4, and the STA 5 to perform interference measurement in the service period SP 1. It should be noted that, STA_SCHDREQ and STA MEAS _REQ may be sequentially sent in serial, or may be sent in parallel.

It may be understood that, in an example, when STA SCHD REQ and STA MEAS REQ are two separate messages that are sequentially sent in serial, STA_ SCHD _REQ may be sent in the formats shown in FIG. 16a and FIG. 16b, and STA_SCHD_REQ includes one scheduling set, and further includes that a transmission time corresponding to the scheduling set 1 is the SP 1. The scheduling set includes one scheduling set element, that is, the station group STA group 1. In this case, information about the scheduling set may use the format shown in FIG. 17c. STA_MEAS_REQ may use the format shown in FIG. 12a, FIG. 12b, FIG. 12c, FIG. 12d, or FIG. 12e, and STA_MEAS_REQ includes one measurement set, where the measurement set includes three measurement set elements, that is, the STA 3, the STA 4, and the STA 5. In another example, when STA_SCHD_REQ and STA_MEAS_REQ may be alternatively encapsulated in a combined message and sent in parallel, the combined message may use the format shown in FIG. 13b, where the combined message includes two receive end content fields. A first content field may be STA_SCHD_REQ, and a second content field may be STA_MEAS_REQ. Details are not described herein again.

Further, the AP 1 sends a scheduling frame to the STA 1, where the scheduling frame is used to schedule the STA 1 to perform transmission in the SP 1. In addition, the AP 2 that receives STA_SCHD_REQ also sends a scheduling frame to the STA 2, where the scheduling frame is used to schedule the STA 2 to perform transmission in the SP 1. That is, station group elements in the station group STA group 1 simultaneously perform transmission in the SP 1. The AP 3 sends a measurement configuration frame and a scheduling frame to the STA 3, the STA 4, and the STA 5, where the measurement configuration frame is used to indicate the STA 3, the STA4, and the STA 5 to perform interference measurement in the SP 1, and the scheduling frame is used to indicate the STA 3, the STA 4, and the STA 5 to feed back interference measurement results to the AP 3 within a specified time.

The STA 1 receiving the schedule frame sent by the AP 1 and the STA 2 receiving the schedule frame sent by the AP 2 perform transmission in the SP 1. The STA 3, the STA 4, and the STA 5 that receive the measurement configuration frame sent by the AP 3 perform interference measurement in the SP 1.

Further, the STA 3, the STA 4, and the STA 5 feed back the measurement results obtained through measurement in the SP 1 to the AP 3, where the measurement result of the STA 3 shows that the interference strength measured by the STA 3 in the SP 1 is relatively large. The measurement results of the STA 4 and the STA 5 show that interference strength measured in the SP 1 is relatively small.

In a third phase, the AP 3 that receives interference measurement results of the STA 3, the STA 4, and the STA 5 may report the interference measurement results of the STA 3, the STA 4, and the STA 5 to the AP 1 by using a format of the measurement result indication message. Based on interference measurement results of the STA 3, the STA 4, and the STA 5 and the STA group context information, the AP 1 determines that the STA 3 receives relatively strong interference, and deletes <STA 3, AP 3> from the candidate station group STA group 1, to obtain an updated STA group context.

The AP 1 sends STA_SCHD_REQ and STA_MEAS_REQ to the AP 2, where STA_MEAS_REQ includes an ID of the station group STA group 1, to indicate the AP 2 to schedule the STA 2 in the STA group 1 to perform interference measurement in the SP 2 and the SP 3. STA_SCHD_REQ indicates the AP 2 to schedule the STA 2 to report an interference measurement result in an SP4. The AP 1 further sends STA_SCHD_REQ to the AP 3, to schedule the STA 4 to perform transmission in the SP 2, and schedule the STA 5 to perform transmission in the SP 3.

Further, the AP 1 sends a measurement configuration frame and a scheduling frame to the STA 1 in the STA group 1, where the measurement configuration frame is used to schedule the STA 1 to perform interference measurement in the SP 2 and the SP 3, and the scheduling frame is used to schedule the STA 1 to feed back an interference measurement result in the SP 4.

In addition, the AP 2 that receives STA_SCHD_REQ and STA_MEAS_REQ sends a measurement configuration frame and a scheduling frame to the STA 2, where the measurement configuration frame is used to schedule the STA 2 to perform interference measurement in the SP 2 and the SP 3, and the scheduling frame is used to schedule the STA 2 to feed back the interference measurement result in the SP 4.

The AP 3 that receives STA_SCHD_REQ sends a scheduling frame to the STA 4 and the STA 5, to schedule the STA 4 to perform transmission in the SP 2, and schedule the STA 5 to perform transmission in the SP 3.

The STA 1 feeds back the measurement results obtained through measurement in the SP 2 and the SP 3 to the AP 1, and the STA 2 feeds back the measurement results obtained through measurement in the SP 2 and the SP 3 to the AP 2, where the measurement result of the STA 1 shows that interference strength measured by the STA 1 in the SP 2 is relatively strong, and interference strength measured in the SP 3 is relatively small. The measurement result of the STA 2 shows that interference strength measured by the STA 2 in the SP 2 is relatively strong, and interference strength measured in the SP 3 is relatively small.

In a fourth phase, the AP 2 that receives the interference measurement result of the STA 2 may report the interference measurement result of the STA 2 to the AP 1 by using a format of the measurement result indication message.

With reference to the interference measurement result of the STA 1 and the measurement result of the STA 2, the AP 1 may determine that, when <AP 1, STA 1> and <AP 2, STA 2> in the STA group 1 communicate at the same time, interference to <AP 3, STA 5> is relatively small. When <AP 3, STA 5> communicate, interference to <AP 1, STA 1> and <AP 2, STA 2> in the STA group 1 is relatively small. Therefore, the AP 1 determines that <AP 3, STA 5> in the candidate station group may be added to the STA group 1. The AP 1 updates the STA group context information.

Further, the AP 1 sends STA_group_update_REQ to the AP 2, to indicate, to the AP 2, that a station group element <AP 3, STA 5 > is added to the STA group 1. The AP 1 may further send STA_group_setup_REQ to the AP 3, to indicate, to the A P3, an ID of the STA group 1 and station group members <AP 1, STA 1>, <AP 2, STA 2>, and <AP 3, STA 5>. It may be understood that STA_group_update_REQ may use the format shown in FIG. 9a or FIG. 9b, and STA_group_setup REQ may use the format shown in FIG. 4a, FIG. 4b, or FIG. 6.

After receiving STA_group_update_REQ, the AP 2 feeds back STA_group_update_RSP to the AP 1, to indicate that the station group member <AP 3, STA 5 > in the STA group 1 is successfully updated. After receiving STA_group_setup_REQ, the AP 3 feeds back STA_group_setup_RSP to the AP 1, to indicate that the STA group 1 is successfully set up.

It may be understood that, when the STA group context information is not empty, that is, includes a station group determined based on the definition 1, the coordination AP may perform scheduling transmission based on the station group in a centralized manner.

For example, in the third phase shown in FIG. 19A to FIG. 19C, the STA group 1 is set up, and the coordination AP may perform scheduling based on the station group STA group 1. Alternatively, in the second phase shown in FIG. 20A to FIG. 20D, the coordination AP may perform scheduling based on the station group STA group 1. Alternatively, in the fourth phase shown in FIG. 20A to FIG. 20D, the station group of the STA group 1 is updated, and the coordination AP may also perform scheduling based on the station group STA group 1.

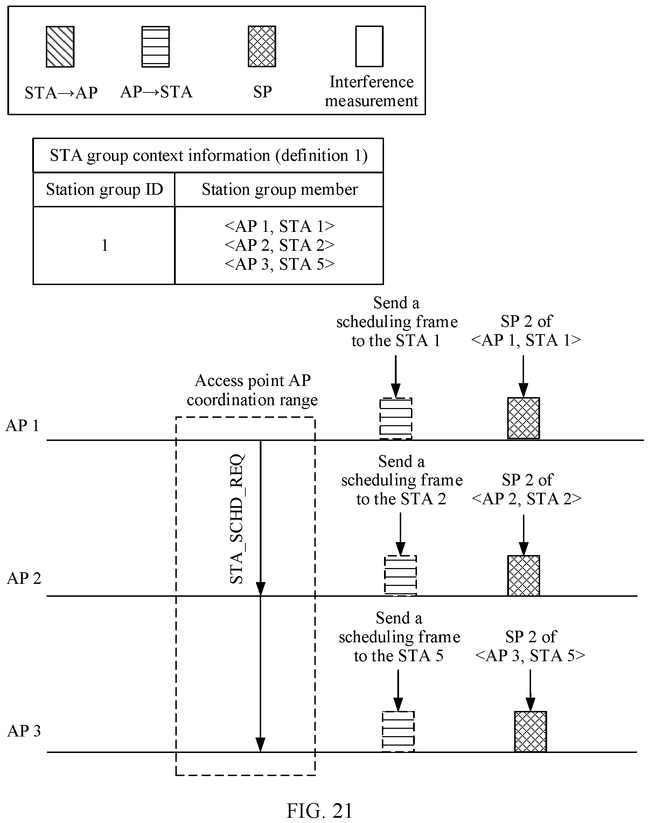

An example in which an updated STA group 1 in the fourth phase in FIG. 20A to FIG. 20D includes station group members <AP 1, STA 1>, <AP 2, STA 2>, and <AP 3, STA 5> is used. FIG. 21 shows an example of an interaction procedure of scheduling based on a station group.

The AP 1 sends a scheduling request message STA_SCHD_REQ to the AP 2 and the AP 3, where STA_SCHD_REQ is used to indicate a member AP to schedule one scheduling set, and a type of a scheduling set element included in the scheduling set is a station group. Therefore, STA_SCHD_REQ includes an ID of a station group 1 and a transmission time range of the station group 1. FIG. 21 is used as an example, and the transmission time range of the station group 1 is an SP 2.

The AP 1 sends a scheduling frame to the STA 1 in an SP 1, to schedule the STA 1 to perform transmission in the SP 2. The AP 2 that receives STA_SCHD_REQ sent by the AP 1 sends a scheduling frame to the STA 2 in the SP 1, to schedule the STA 2 to perform transmission in the SP 2. The AP 3 that receives STA_SCHD _REQ sent by the AP 1 sends a scheduling frame to the STA 5 in the SP 1, to schedule the STA 5 to perform transmission in the SP 2. Because the station group 1 is determined based on the definition 1, station group elements included in the station group 1 may simultaneously perform transmission and communicate. Therefore, a time range in which the AP 1 sends the scheduling frame may be the same as time ranges in which the AP 2 and the AP 3 send the scheduling frames.

The STA 1, the STA 2, and the STA 5 that receive the scheduling frames perform transmission in the SP 2.

It should be noted that, the STA 1, the STA 2, and the STA 5 that receive the scheduling frames may simultaneously perform uplink transmission or downlink transmission in the SP 2. Alternatively, a part of the STA 1, the STA 2, and the STA 5 may perform uplink transmission and the other part of the STA 1, the STA 2, and the STA 5 perform downlink transmission.

For example, the station group members <AP 1, STA 1>, <AP 2, STA 2>, and <AP 3, STA 5>, <AP 1, STA 1> and <AP 3, STA 5> perform uplink transmission, and <AP 2, STA 2> performs downlink transmission. In this case, the scheduling frame sent by the AP 1 to the STA 1 may be specifically used to trigger the STA 1 to send data in the SP 2, and the scheduling frame sent by the AP 3 to the STA 5 may be specifically used to trigger the STA 5 to send data in the SP 2. The scheduling frame sent by the AP 2 to the STA 2 may be specifically used to indicate the STA 2 to receive a data message of the AP 2 in the SP 2.

According to the technical solution in this embodiment of this application, the station group determined based on definition 1 performs coordinated scheduling, so that an amount of information exchanged between a plurality of access points APs in a centralized manner is reduced, overheads are reduced, and efficiency of scheduling between the plurality of access points APs is improved. In addition, a plurality of station group elements in the station group based on the definition 1 may simultaneously perform transmission, thereby improving transmission efficiency, and effectively controlling interference between a plurality of transmission paths during multiplex transmission. Moreover, a plurality of APs participating in coordination may obtain a global station group ID and station group element information, so that any one of the plurality of APs may become a coordination AP when performing scheduling transmission, to control a time for another access point to send an air interface message, and avoid interference between the plurality of APs.

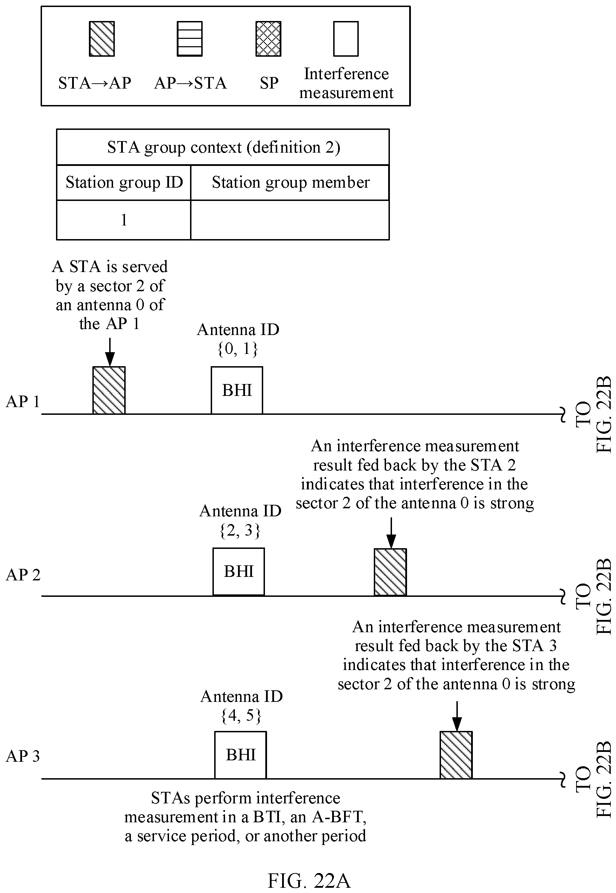

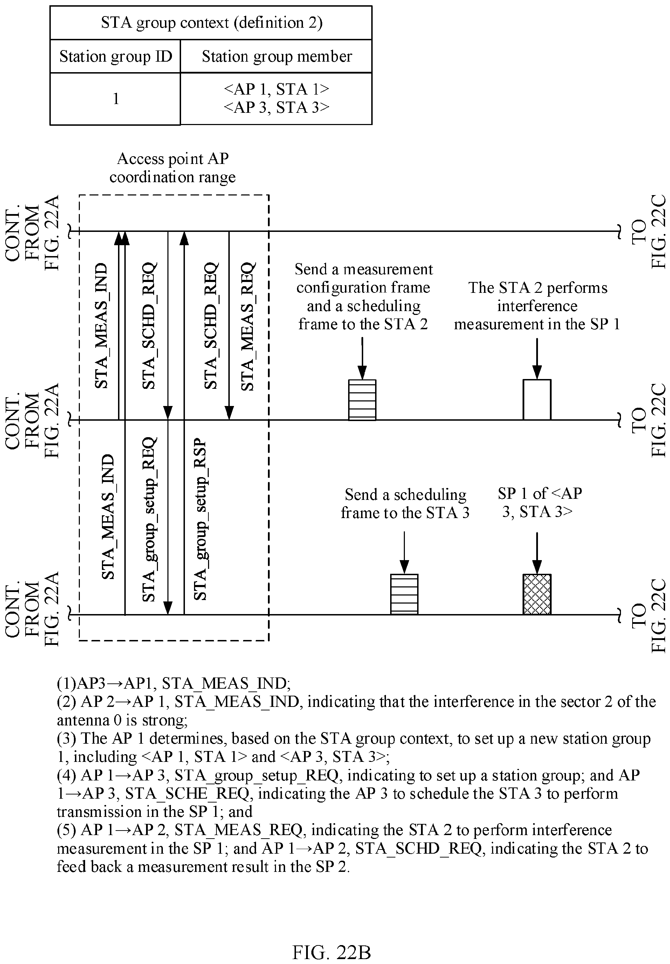

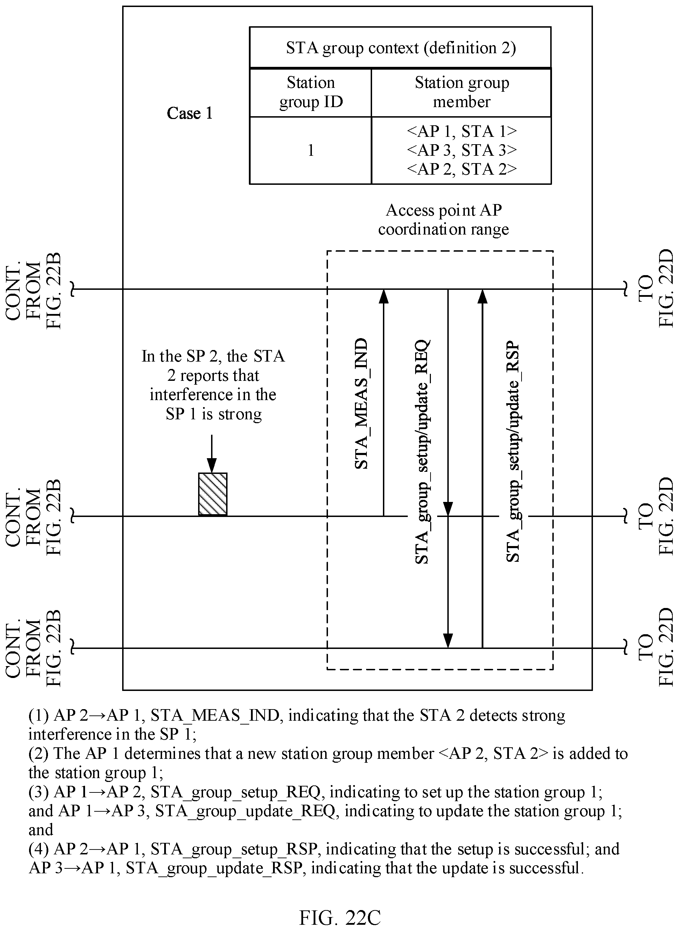

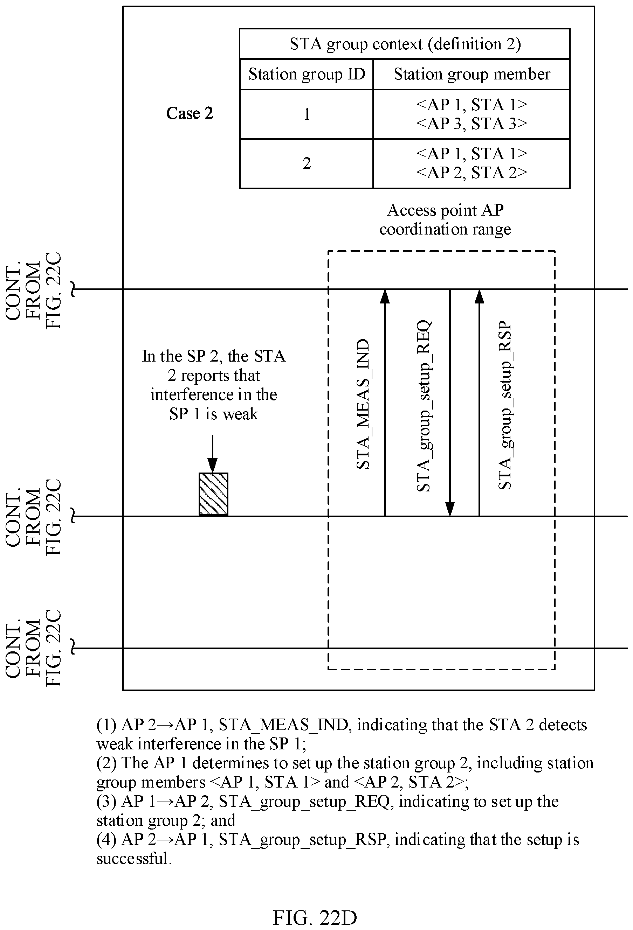

Embodiment 8: FIG. 22A to FIG. 22D are a schematic interaction flowchart of centralized setup and update of a station group that is based on a definition 2 according to an embodiment of this application. Still based on the application scenario shown in FIG. 2, an access point AP 1 is used as a centralized AP, which is also referred to as a coordination AP. An example in which an access point AP 2 and an access point AP 3 are member APs is used for description.

As shown in FIG. 22A to FIG. 22D, in a first phase, a STA group context determined by the coordination AP indicates that the station group does not include any station group, that is, no station group is set up. In this case, stations STA 1, STA 2, and STA 3 access a virtual AP or a PCP/AP cluster formed by the AP 1, the AP 2, and the AP 3. The STA 1 is served by a sector 2 of an antenna 0 of the AP 1, the STA 2 is served by the AP 2, and the STA 3 is served by the AP 3. The stations perform interference measurement in a BTI, an A-BFT, a service period, or another period. The station STA 2 detects an interference signal from a sector 2 of an antenna 0 and sends an interference measurement result to the AP 2. The station STA 3 detects an interference signal from a sector 2 of an antenna 0, and feeds back a measurement result to the AP 3.

In a second phase, the access point AP 2 may send the interference measurement result of the STA 2 to the AP 1 by using a measurement result indication message, and the access point AP 3 may also send the interference measurement result of the STA 3 to the AP 1 by using a measurement result indication message. The AP 1 that receives the measurement result indication messages may determine, based on the definition 2 of the station group, that transmission performed by <AP 1, STA 1> causes relatively strong interference to <AP 3, STA 3>. Therefore, the AP 1 determines <AP 1, STA 1> and <AP 3, STA 3> form a station group 1, and updates a STA group context. Further, the AP 1 sends STA_group_setup_REQ to the AP 3, to indicate an ID of the STA group 1 and station group element information to the AP 3. After receiving STA_group_setup_REQ, the AP 3 feeds back STA_group_setup _RSP to the AP 1, to indicate that the STA group 1 is successfully set up.

The AP 1 further sends a scheduling request message STA_SCHD_REQ and a measurement request message STA_MEAS_REQ to the AP 2. STA_MEAS_REQ is used to indicate the AP 2 to schedule the STA 2 to perform interference measurement in a service period SP 1. STA_SCHD_REQ is used to indicate the AP 2 to schedule the STA 2 to report the interference measurement result in a service period SP 2. It should be noted that, STA_SCHD_REQ and STA_MEAS_REQ may be sequentially sent in serial, or may be sent in parallel. Details are not described herein again.

Further, the AP 2 that receives STA_SCHD_REQ and STA_MEAS_REQ sends a measurement configuration frame and a scheduling frame to the STA 2, where the measurement configuration frame is used to schedule the STA 2 to perform interference measurement in the SP 1, and the scheduling frame is used to schedule the STA 2 to report the measurement result in the SP 2. In addition, the AP 3 that receives STA_SCHD_REQ also sends a scheduling frame to the STA 3, where the scheduling frame is used to schedule the STA 3 to perform transmission in the SP 1.

The STA 2 that receives the measurement configuration frame and the scheduling frame sent by the AP 2 performs interference measurement in the SP 1, and the STA 3 that receives the scheduling frame sent by the AP 3 performs transmission in the SP 1.

In the SP 2, the STA 2 feeds back a measurement result obtained through measurement in the SP 1 to the AP 2.

In a third phase, the AP 2 that receives the measurement result sent by the STA 2 may report the interference measurement result of the STA 2 to the AP 1 by using a format of the measurement result indication message.

In a case 1, if the measurement result of the STA 2 indicates that interference strength measured in the SP 1 is relatively strong, the AP 1 may determine, with reference to the interference measurement result of the STA 2 and the STA group context, that interference to <AP 2, STA 2> is relatively large during communication of <AP 3, STA 3>. Therefore, the AP 1 determines, based on the definition 2, that a station group member <AP 2, STA 2> may be further added to the station group 1. Therefore, the AP 1 updates the station group 1, and an updated station group 1 includes <AP 1, STA 1>, <AP 3, STA 3>, and <AP 2, STA 2>. Further, the AP 1 sends STA_group_setup_REQ to the AP 2, to indicate the ID of the STA group 1 and the station group element information to the AP 2. The AP 1 sends STA_group_update_REQ to the AP 3, to indicate the ID of the STA group 1 and an updated station group member <AP 2, STA 2 > in the STA group 1 to the AP 3. It may be understood that STA_group_setup_REQ sent to the AP 2 and STA_group_update_REQ sent to the AP 3 may be sent in a combined message in parallel, or may be sequentially sent in two messages in serial. Details are not described herein again.

After receiving STA_group_setup_REQ, the AP 2 feeds back STA_group_setup_RSP to the AP 1, to indicate that the STA group 1 is successfully set up.

After receiving STA_group_update_REQ, the AP 3 feeds back STA_group_update_RSP to the AP 1, to indicate that the station group element is successfully added to the STA group 1.

Any two elements in the station group determined based on the definition 2 cannot be simultaneously scheduled, that is, any two elements in the station group cannot simultaneously perform transmission or communicate. When the coordination AP performs scheduling in a centralized manner, the coordination AP sends a scheduling request message STA_SCHD_REQ to the member APs, to indicate that a specified STA or STA group (indicated by a scheduling set) cannot be scheduled within a specified transmission time.

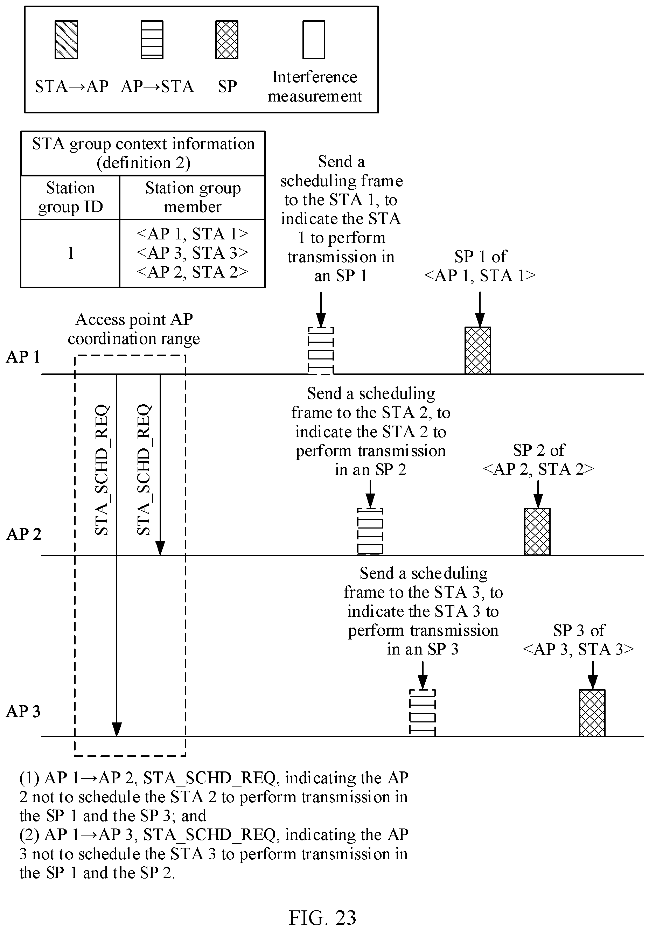

For example, in the case 1 shown in FIG. 22A to FIG. 22D, the STA group context information includes one station group, and the station group includes three station group elements. FIG. 23 shows an example of a station group scheduling method based on the definition 2. The AP 1 sends a scheduling request message STA_SCHD_REQ to the AP 2, where the scheduling request message sent to the AP 2 includes the ID of the station group 1 and the time ranges SP 1 and SP 3 that are corresponding to the station group 1 and in which transmission cannot be performed. In this case, the scheduling request message indicates that the AP 2 cannot schedule the station STA2 in the station group 1 to perform transmission in the SP 1 and the SP 3. A scheduling request message sent to the AP 3 includes the ID of the station group 1 and the time ranges SP 1 and SP 2 that are corresponding to the station group 1 and in which transmission cannot be performed.

Further, the AP 1 sends a scheduling frame to the STA 1, to indicate the STA 1 to perform transmission in the SP 1 (that is, not perform transmission in the SP 2 or the SP 3). The AP 2 sends a scheduling frame to the STA 2, to indicate the STA 2 to perform transmission in the SP 2 (that is, not perform transmission in the SP 1 or the SP 3). The AP 3 sends a scheduling frame to the STA 3, to indicate the STA 3 to perform transmission in the SP 3 (that is, not perform transmission in the SP 1 or the SP 2).

In this case, when the STA 1 sends or receives data in the SP 1, no transmission is performed between the AP 2 and the STA 2, and no transmission is performed between the AP 3 and the STA 3. When the STA 2 sends or receives data in the SP 2, no transmission is performed between the AP 1 and the STA 1, and no transmission is performed between the AP 3 and the STA 3. When the STA 3 sends or receives data in the SP 3, no transmission is performed between the AP 1 and the STA 1, and no transmission is performed between the AP 2 and the STA 2.

The coordination AP may schedule the station group determined based on the definition 2, to control a time for sending an air interface message by a member AP, thereby avoiding interference between a plurality of member APs, so that interference can be effectively controlled.

In a case 2, if the measurement result of the STA 2 indicates that interference strength measured in the SP 1 is relatively weak, the AP 1 may determine, with reference to the interference measurement result of the STA 2 and the STA group context, that when <AP 3, STA 3> performs communication, interference to <AP 2, STA 2> is relatively small. Therefore, the AP 1 may determine based on the definition 2, and may further set up a station group 2, including station group elements <AP 2, STA 2> and <AP 1, STA 1>. Therefore, the AP 1 updates the STA group context information, where updated STA group context information includes two station groups: the station group 1 and the station group 2.

Further, the AP 1 sends STA_group_setup_REQ to the AP 2, to indicate an ID of the STA group 2 and station group element information to the AP 2.

After receiving STA_group_setup_REQ, the AP 2 feeds back STA_group_setup_RSP to the AP 1, to indicate that the STA group 2 is successfully set up.

It can be understood that, in the context information of the STA group set up in the case 2, the coordination AP may also use a centralized manner to control a time of sending an air interface message by a member AP, to avoid interference between a plurality of member APs. Specific examples are not described again. According to the technical solution in this embodiment of this application, based on the station group determined by using the definition 2, a plurality of member APs are controlled in a centralized manner, so that a time for sending an air interface message by the member APs can be effectively controlled, and interference between the plurality of member APs can be avoided. In addition, simultaneous transmission of a plurality of station group members in the station group that is based on the definition 2 can be effectively avoided, and mutual interference between the station group members can be avoided, thereby improving communication quality.

Embodiment 9: This embodiment of this application provides a distributed scheduling method. Descriptions are provided still by using the application scenario shown in FIG. 2 as an example. Different from the centralized scheduling method, in a distributed scheduling method, each AP independently determines a scheduling type, a scheduling time range, and a corresponding STA or STA group for transmission. For example, when an AP 2 schedules an SP/a CBAP for one or more protected STAs, the AP 2 sends a STA scheduling indication message STA_SCHED_IND to one or more other APs, to indicate a scheduling status of the AP 2 in a corresponding period of time to the one or more APs. The SP/CBAP is referred to as a protected period (protected period). After receiving the message, another AP may use content of the message as an indication (for example, to avoid interference or perform spatial sharing) to schedule a STA of the another AP.

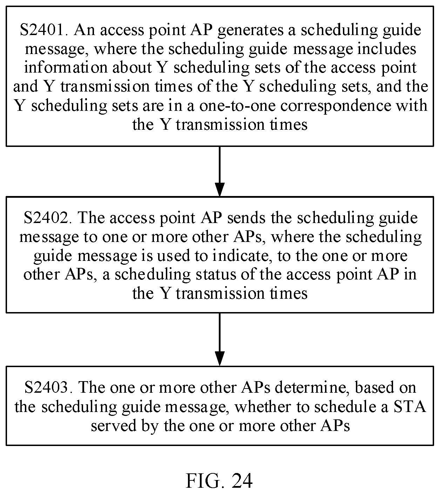

FIG. 24 is a schematic flowchart of a distributed scheduling method. The method includes the following steps.

S2401. A first access point AP generates a scheduling indication message (station scheduling indication, STA_SCHD_IND), where the scheduling indication message includes information about Y scheduling sets and Y transmission time identifiers of the first access point AP, the information about the Y scheduling sets are used to indicate the Y scheduling sets, and the transmission time identifier is used to indicate a time range in which a scheduling set is scheduled by the first access point AP to perform transmission. The Y scheduling sets are in a one-to-one correspondence with Y transmission times, and Y is an integer greater than or equal to 1.

For ease of description, an example in which the access point is an AP 2 and one or more other access points are an AP 3 and/or an AP 1 is used for description herein.

In the distributed scheduling method, the AP 2, rather than a coordination AP, independently determines a scheduling set that needs to be scheduled by the AP 2 and a transmission time corresponding to the scheduling set.

The scheduling indication message includes the information about the Y scheduling sets that is used to indicate the Y scheduling sets of the access point AP, and the Y transmission times of the Y scheduling sets, and the scheduling indication message is used to indicate a scheduling status of the access point AP to one or more other APs.

In an example, the transmission time identifier included in the scheduling set may include a transmission start time and a transmission time length.

In another example, the transmission time identifier included in the scheduling set may include a transmission start time and a transmission end time.

It should be noted that any scheduling set in the scheduling indication message includes at least one scheduling set element,
Similar to a scheduling request message, the scheduling indication message may also include a plurality of types of scheduling set elements. It may be understood that types of a plurality of scheduling set elements included in the scheduling set may be the same or may be different.

When types of a plurality of scheduling set elements included in a scheduling set are the same:
In an example, when types of a plurality of scheduling set elements included in a scheduling set are all stations, information about the scheduling set may include an identifier of one or more stations, and optionally, may further include a quantity of stations. In an implementation, a format of the information about the scheduling set may be the format shown in FIG. 17a.

In another example, when types of a plurality of scheduling set elements included in a scheduling set are all station pairs, information about the scheduling set may include an identifier of each station in one or more station pairs, and optionally, may further include a quantity of station pairs. In an implementation, a format of the information about the scheduling set may be the format shown in FIG. 17b.

In still another example, when types of a plurality of scheduling set elements included in a scheduling set are all station groups, information about the scheduling set may include an ID of each station of one or more station groups, and optionally, may further include a quantity of station groups. In an implementation, a format of the information about the scheduling set may be the format shown in FIG. 17c. Optionally, the information about the scheduling set may further include a definition type identifier of a station group, used to indicate whether the station group satisfies a definition 1 or a definition 2. It may be understood that the ID of the station group may be a global ID or a local ID. This is not limited herein. Optionally, information about each scheduling set may further include a scheduling set element type indication, used to indicate whether a type of a scheduling set element is a station, a station pair, a station group, or another type.

When types of two of a plurality of scheduling set elements included in a scheduling set are different, information about the scheduling set may include information about each scheduling set element. In an implementation, a format of the information about the scheduling set may be the format shown in FIG. 17d. The information about the scheduling set may further include a plurality of scheduling set element types. One scheduling set element type is used to indicate a type of one scheduling set element. The information about the scheduling set may use the format shown in FIG. 17e.

Optionally, the scheduling indication message may further include but is not limited to one or a combination of the following:
a transmit end identifier, used to indicate an access point AP, for example, an AP 2, that sends the scheduling indication message, where the transmit end identifier may be a MAC address or an association ID AID of the AP 2, an ID defined in a virtual AP or a PCP/AP, or the like;
a receive end address, used to indicate an AP that receives the scheduling indication message, where the receive end address may be a MAC address or an association ID AID of the AP, an ID defined in the virtual AP or the PCP/AP, or the like;
a scheduling set quantity, used to indicate a quantity Y of scheduling sets; and
a transmission period type, used to indicate a type of a period in which a scheduling set element in the scheduling set performs transmission, where the period may be a regular service period (REGULAR_SP) or a contention-based access period (CBAP), or another value. Alternatively, another type may be added or some types may be used.

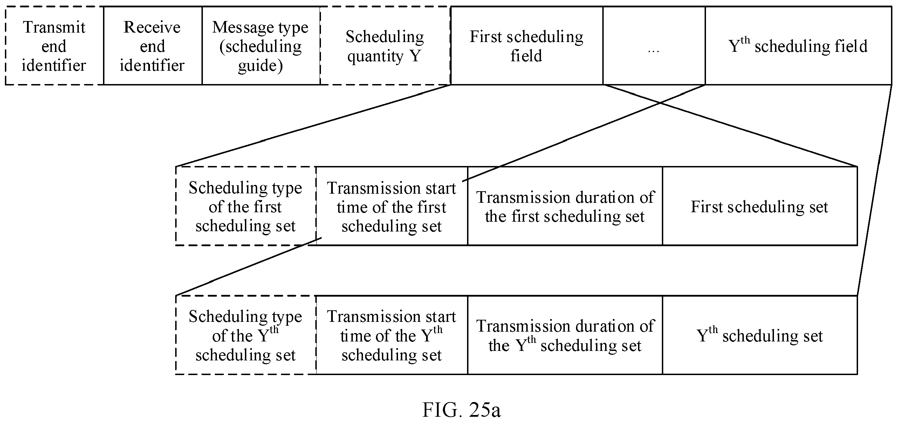

FIG. 25a shows an example structure of the scheduling indication message. Details are not described herein again.

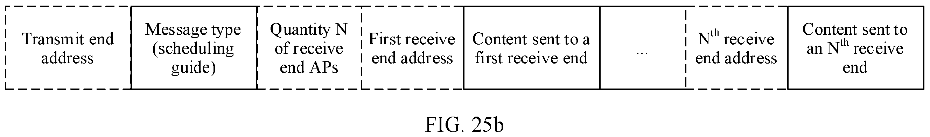

FIG. 25b shows another example structure of the scheduling indication message. A difference from FIG. 25a lies in that, in FIG. 25b, scheduling indication messages to be sent to a plurality of APs are separately indicated. For example, if the AP 2 needs to send scheduling indication messages to two APs (the AP 1 and the AP 3), the scheduling indication message shown in FIG. 25b may include two pieces of receive end content, where a first piece of receive end content may include scheduling status information to be sent to the AP 1, and a second receive end content may include scheduling status information to be sent to the AP 3.

S2402. The access point AP sends the scheduling indication message to one or more other APs, where the scheduling indication message is used to indicate the Y transmission times corresponding to the Y scheduling sets of the access point AP to the one or more other APs.

When the AP 2 sends the scheduling indication message to a plurality of other APs (for example, the AP 1 and the AP 3), the sending may be performed separately, sequentially, or in parallel (similar to a DL MU-MIMO manner).

In addition, a manner in which the AP 2 sends STA_SCHD_IND to another AP may include but is not limited to the following three manners:
(1) The AP 2 may broadcast STA_SCHD_IND to the one or more other APs (for example, the AP 1 and the AP 3).
   i. The AP 2 may further use a unicast manner. For example, the AP 2 may directly send STA_SCHD_IND to the AP 3 (there is a beamforming link between the AP 3 and the AP 2).
   ii. The AP 2 may further use a manner of forwarding through another AP, for example, using the coordination AP as a relay (relay). The AP 2 sends STA_SCHD_IND to the coordination AP, the coordination AP then sends the message to the AP 3 (there may not necessarily be a beamforming link between the AP 2 and the AP 3, but there is a beamforming link between each AP and the coordination AP).

S2403. The one or more other APs receive the scheduling indication message, and determine, based on the scheduling indication message, whether to schedule a STA, served by the one or more other APs, to perform transmission in the transmission time.

It should be noted that, after receiving the message, the one or more other APs may determine, by using content of the message as an indication (for example, to avoid interference or perform spatial sharing), whether to schedule a STA served by the APs.

In an example, when the scheduling set includes a scheduling set element that is a station group, the one or more other APs may determine, based on a definition type of the station group, whether to schedule a STA served by the one or more other APs. The AP that receives the scheduling indication message may obtain information about the definition type of the station group in a plurality of manners. In a possible implementation, the AP sending the scheduling indication message and the AP receiving the scheduling indication message agree on a definition type of a station group in the scheduling indication message sent this time. In another implementation, the AP receiving the scheduling indication message may determine a definition type of a station group based on a station group definition type indication in the scheduling request message. It may be understood that the scheduling request indication message may not only include a station group determined by using the definition 1, but also include a station group determined by using the definition 2.

In an example, if the STA group satisfies the definition 1 (a STA group in which STAs can simultaneously communicate), the STA scheduling indication message STA_SCHD_IND includes information used to notify the one or more other APs of antenna directions of some APs in a specified scheduling time range or notify the one or more other APs that some STAs or a STA group (indicated by a scheduling set) can be scheduled:

Based on the content of the received STA_SCHD_IND message, each AP 2 knows each protected SP/CBAP (protected period) and a corresponding STA or STA group that can be scheduled. The AP 2 may use an indicated interfering antenna and sector direction in a corresponding time, or schedule an indicated STA/STA pair (direction information and STA information are indicated by a scheduling set).

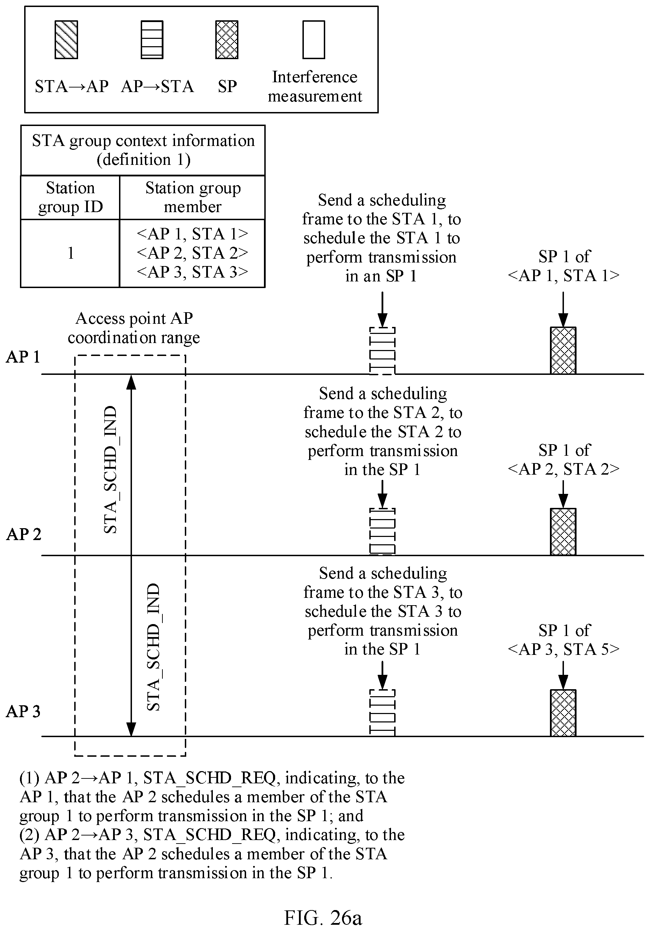

For example, FIG. 26a is a schematic diagram of a distributed scheduling method based on the definition 1.

The AP 2 sends STA_SCHD_IND to the AP 1 and the AP 3, to indicate the scheduling status of the AP 2, where STA_SCHD_IND sent by the AP 2 includes an ID of a station group in which the STA 2 is located, that is, an ID of a STA group 1, and further includes a transmission time SP 1 of the STA group 1. A definition type of the STA group 1 is the definition 1. To be specific, the AP 2 indicates, to the AP 1 and the AP 3, that the AP 2 is to schedule the STA 2 of the AP 2 in the STA group 1 to perform transmission in the SP 1.

The AP 1 that receives STA_SCHD_IND determines that the AP 1 may schedule the STA 1 to perform transmission in the SP 1, where the STA 1 is in the STA group 1 determined based on the definition 1 and is served by the AP 1. Further, the AP 1 further sends a scheduling frame to the STA 1, to schedule the STA 1 to perform transmission in the SP 1.

The AP 3 that receives STA_SCHD_IND determines that the AP 3 may schedule the STA 3 to perform transmission in the SP 1, where the STA 3 is in the STA group 1 determined based on the definition 1 and is served by the AP 3. Further, the AP 3 further sends a scheduling frame to the STA 3, to schedule the STA 3 to perform transmission in the SP 1.

The AP 2 sends a scheduling frame to the STA 2, to schedule the STA 2 to perform transmission in the SP 1.

The STA 1, the STA 2, and the STA 3 that receive the schedule frames perform parallel transmission in the SP 1. It may be understood that, the STA 1, the STA 2, and the STA 3 may send uplink frames to respective APs in parallel, or the AP 1, the AP 2, and the AP 3 may send downlink frames to respective STAs in parallel. Alternatively, some of the STAs may send uplink frames, or some of the APs send downlink frames.

It may be understood that, based on the foregoing distributed scheduling method, transmission between a plurality of access points and stations based on spatial sharing can be implemented, thereby improving transmission efficiency of a system.

In another example, if the STA group satisfies the definition 2 (a STA group in which STAs cannot simultaneously communicate), the scheduling indication message STA_SCHD_IND includes information used to notify the one or more other APs that the AP 2 or the STA of the AP 2 can be interfered with if antenna directions of some APs, or some STAs or a STA group (indicated by a scheduling set) are/is scheduled in a specified scheduling time range:

Based on received STA_SCHD_IND, each of the one or more other APs can determine an SP/a CBAP (protected period) in which a STA of the AP serves as the interference source. The one or more other APs may avoid scheduling an indicated interfering STA/STA interference direction/STA pair in a corresponding time (direction information is indicated by a scheduling set). The one or more other APs may schedule another STA or schedule a non-interference direction of an interfering STA in a corresponding time, to avoid interference to the AP 2.

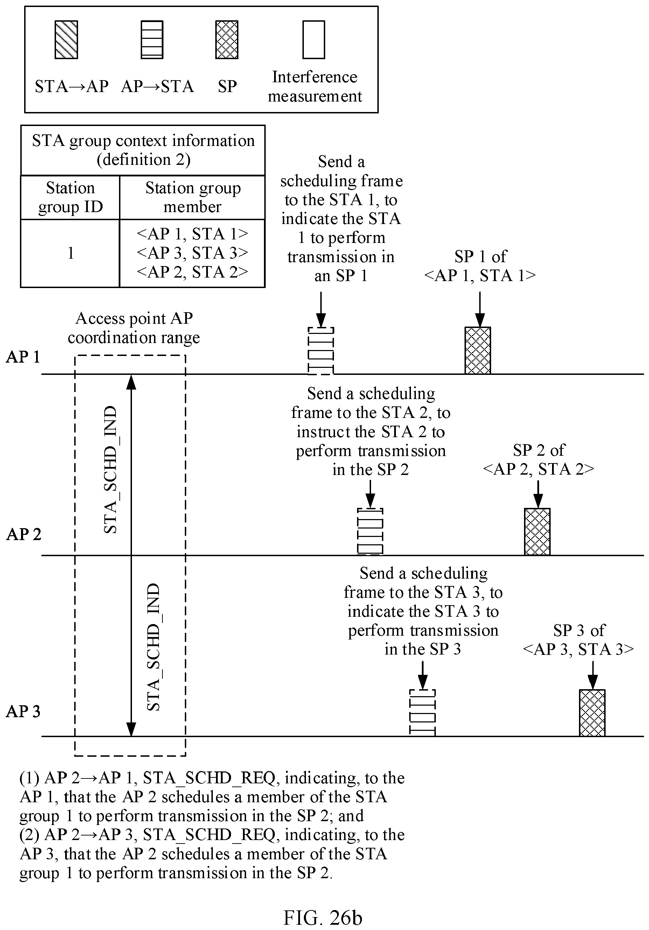

For example, FIG. 26b is a schematic diagram of a distributed scheduling method based on the definition 2.

The AP 2 sends STA_SCHD_IND to the AP 1 and the AP 3, to indicate the scheduling status of the AP 2, where STA_SCHD_IND sent by the AP 2 includes an ID of a station group in which the STA 2 is located, that is, an ID of a STA group 1, and further includes a transmission time SP 1 of the STA group 1. The STA group 1 is determined based on the definition 2. The AP 2 indicates, to the AP 1 and the AP 3, that the AP 2 is to schedule the STA 2 in the STA group 1 to perform transmission in an SP 2.

The AP 1 that receives STA_SCHD_IND determines that the AP 1 cannot schedule the STA 1 to perform transmission in the SP 2, where the STA 1 is served by the AP 1 and is in the STA group 1 determined based on the definition 2. Otherwise, interference is caused to transmission of the STA 2 in the SP 2. Further, the AP 1 may send a scheduling frame to the STA 1, to schedule the STA 1 to perform transmission in the SP 1.

The AP 3 that receives STA_SCHD_IND determines that the AP 3 cannot schedule the STA 3 to perform transmission in the SP 2, where the STA 3 is served by the AP 3 and is in the STA group 1 determined based on the definition 2. Otherwise, interference is caused to transmission of the STA 2 in the SP 2. Further, the AP 3 may send a scheduling frame to the STA 3, to schedule the STA 3 to perform transmission in an SP 3.

The AP 2 sends a scheduling frame to the STA 2, to schedule the STA 2 to perform transmission in the SP 2.

The STA 2 that receives the scheduling frame sent by the AP 2 performs transmission in the SP 2. It may be understood that the STA 2 may send an uplink frame to the AP 2 to perform uplink transmission. Alternatively, the AP 2 may send a downlink frame to the STA 2 to perform downlink transmission.

The STA 1 and the STA 3 that receive the scheduling frames do not perform transmission in the SP 2. The STA 1 performs transmission in the SP 1, and the STA 3 performs transmission in the SP 3.

Based on the solution in this embodiment of this application, in the distributed scheduling method, each AP independently determines the scheduling type, the scheduling time range, and the corresponding STA or STA group for transmission. In addition, based on the foregoing distributed scheduling method, interference between a plurality of access points and stations can be controlled, mutual interference between transmission links between the plurality of access points and stations can be avoided, thereby improving communication quality.

Embodiment 10: An embodiment of this application provides a method for maintaining a station group having a local ID, including setup, modification, and release of the station group. That is, the station group with the local ID is set up and modified by two APs according to an agreement. That is, a STA group ID is local and is used only by two corresponding APs, but a global STA group ID is not maintained and shared by APs in an AP cluster. In this embodiment of this application, an AP 2 and an AP 3 are used as an example for description. The AP 2 and the AP 3 are two same access points, and are in an equal interaction position.

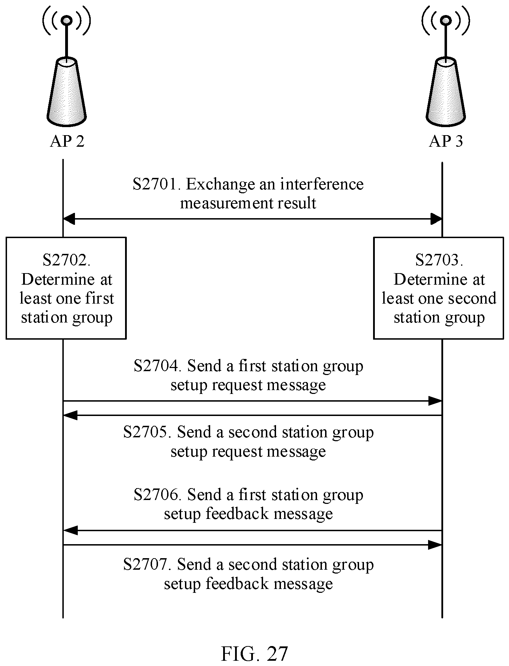

FIG. 27 is a schematic interaction diagram of a distributed station group setup method according to an embodiment of this application.

S2701. Exchange interference measurement results.

It may be understood that in the distributed station group setup method, two APs need to exchange interference measurement results, so that the two APs separately determine a station group based on the measurement results.

It may be understood that before step S2701, a station needs to feed back a measurement result to an access point that serves the station, so that the access point that serves the station sends the measurement result to another AP, and the access points determines a station group. For example, a STA 2 served by the AP 2 needs to feed back an interference measurement result to the AP 2, so that the A P2 sends the measurement result of the STA 2 to the AP 3. Similarly, a STA 3, a STA 4, and a STA 5 served by the AP 3 also need to send interference measurement results to the AP 3, so that the AP 3 sends the measurement results of the STA 3, the STA 4, and the STA 5 to the AP 2. The AP 2 and the AP 3 may determine a station group by exchanging the interference measurement results between the AP 2 and the AP 3.

It may be understood that when feeding back a measurement result, a station may report the measurement result by using a measurement report frame, or may report the measurement result by using another frame structure. This is not specifically limited in this application.

Optionally, before a station reports an interference measurement result, an access point serving the station may further send a measurement parameter, to control the station to perform interference measurement, and control a condition of reporting the measurement result by the station. It may be understood that the access point may use a measurement configuration frame or another frame structure to control station interference measurement. This is not specifically limited in this application.

S2702. The AP 2 determines at least one first station group.

Based on the interference measurement result fed back by the station served by the AP 2 and the interference measurement result that is of the station served by the AP 3 and that is sent by the AP 3, the AP 2 may determine to set up a new station group, modify an existing station group, or release an existing station group.

It may be understood that the access point may determine the station group by using a definition 1, or may determine the station group by using a definition 2. For specific meanings of the definition 1 and the definition 2, refer to Embodiment 1. Details are not described herein again.

S2703. The AP 3 determines at least one second station group.

Based on the interference measurement result fed back by the station served by the AP 3 and the interference measurement result that is of the station served by the AP 2 and that is sent by the AP 2, the AP 3 may determine to set up a new station group, modify an existing station group, or release an existing station group.

It may be understood that the access point may determine the station group by using the definition 1, or may determine the station group by using the definition 2. For specific meanings of the definition 1 and the definition 2, refer to Embodiment 1. Details are not described herein again.

It may be understood that steps S2702 and S2703 may be performed simultaneously, or may be performed successively. A specific sequence is not limited.

S2704. The AP 2 sends a first station group setup request message.

The AP 2 sends the first station group setup request message, where the first station group setup request message includes an ID of the at least one first station group and a station group element used to indicate the at least one first station group.

It may be understood that the first station group setup request message may be similar to the station group setup request in step S302, and details are not described herein again.

A difference lies in that, in this embodiment of this application, the ID of the station group included in the first station group setup request message is a local ID, that is, the ID can be known and used only by an access point that exchanges an interference measurement result.

S2705. The AP 3 sends a second station group setup request message.

The AP 3 sends the second station group setup request message, where the second station group setup request message includes an ID of the at least one second station group and a station group element used to indicate the at least one second station group.

It may be understood that the second station group setup request message may be similar to the station group setup request in Embodiment 1, and details are not described herein again.

A difference lies in that, in this embodiment of this application, the ID of the station group included in the second station group setup request message is a local ID, that is, the ID can be known and used only by an access point that exchanges an interference measurement result.

S2706. The AP 2 sends a station group setup response message.

After receiving the second station group setup request message sent by the AP 3, the AP 2 determines, based on the station group element used to indicate the at least one second station group, whether the second station group is successfully set up.

For the station group element that is included in the second station group setup request message and that is used to indicate the at least one second station group, if the AP 2 can obtain, through query in a station group context of the AP 2, a station indicated by a corresponding station group element, the AP 2 may determine a mapping relationship between the ID of the at least one second station group and the ID of the at least one first station group. In this case, the station group is successfully set up.

If the AP 2 can find none of station group elements used to indicate the second station group and included in the second station group setup request message, the station group is unsuccessfully set up.

The AP 2 sends a second station group setup response message to the AP 3, where the second station group setup response message includes a result identifier of at least one second station group, and the identifier is used to indicate whether the at least one second station group is successfully set up, to feed back a setup result of the at least one second station group to the AP 3.

It may be understood that the second station group setup response message may use a structure the same as that of the station group feedback message in Embodiment 1, and details are not described herein again.

S2707. The AP 3 sends the station group setup response message.

After receiving the first station group setup request message sent by the AP 2, the AP 3 determines, based on the station group element used to indicate the at least one first station group, whether the first station group is successfully set up.

For the station group element used to indicate the at least one first station group and included in the first station group setup request message, if the AP 3 can obtain, through query in a station group context of the AP 3, a station indicated by a corresponding station group element, the AP 3 may determine a mapping relationship between the ID of the at least one first station group and the ID of the at least one second station group. In this case, the station group is successfully set up.

If the AP 3 cannot find none of station group elements used to indicate the first station group and included in the first station group setup request message, the station group is unsuccessfully set up.

The AP 3 sends a first station group setup response message to the AP 2, where the first station group setup response message includes a result identifier of the at least one first station group, and the identifier is used to indicate whether the first station group is successfully set up, to feed back a setup result of the first station group.

It may be understood that the first station group setup response message may use a structure the same as that of the station group feedback message in Embodiment 1, and details are not described herein again.

It may be understood that a sequence of performing step S2704 and step S2705 is not limited, and a sequence of performing step S2706 and step S2707 is not limited. Alternatively, an execution sequence may be S2704, S2706, S2705, and S2707, only (S2704, S2706), or only (S2705, S2707). For example, if only one of the AP 3 and the AP 2 determines that a station group can be set up, either step S2704 and step S2706 or step S2705 and step S2707 can be only included.

For example, based on the interference measurement result, the first station group setup request message sent by the AP 2 includes:
- STA subgroup 5: <AP 2, antenna 2, sector 2>, <STA 3, AP 3>
- STA subgroup 6: <AP 2, STA 2>, <AP 3, antenna 4, sector 4>, <STA 4, STA 5>

Based on the interference measurement result, the second station group setup request message sent by the AP 3 also includes:
- STA subgroup 1: <AP 2, antenna 2, sector 2>, <STA 3, AP 3>
- STA subgroup 2: <AP 2, STA 2>, <AP 3, antenna 4, sector 4>, <STA 4, STA 5>

The AP 2 may establish, based on the second station group setup request message, a mapping relationship shown in Table 7.

**Table 7**

| subgroup ID | Station group member |
|---|---|
| 5 | <AP 2, antenna 2, sector 2> |
| 6 | <AP 2, STA 2> |

| subgroup ID | Corresponding station group information |
|---|---|
| 5 | (AP 3, 1) |
| 6 | (AP 3, 2) |

(AP 3, 1) indicates a subgroup ID 1 of the AP 3. According to the mapping relationship in Table 7, it may be understood that a subgroup ID 5 of the AP 2 corresponds to the subgroup ID 1 of the AP 3, and a subgroup ID 6 of the AP 2 corresponds to a subgroup ID 2 of the AP 3.

The AP 3 may establish, based on the first station group setup request message, a mapping relationship shown in Table 8.

**Table 8**

| subgroup ID | Station group member |
|---|---|
| 1 | <STA 3, AP 3> |
| 2 | <AP 3, antenna 4, sector 4>, <STA 4, STA 5> |

| subgroup ID | Corresponding station group information |
|---|---|
| 1 | (AP 2, 5) |
| 2 | (AP 2, 6) |

According to the mapping relationship in Table 8, it may be understood that a subgroup ID 1 of the AP 3 corresponds to a subgroup ID 5 of the AP 2, and a subgroup ID 2 of the AP 3 corresponds to a subgroup ID 6 of the AP 2.

A station group with a local ID may also be scheduled in a distributed manner. A method for scheduling a station in a distributed manner may be the same as that in the foregoing Embodiment 9. A difference lies in that in this embodiment of this application, in distributed scheduling, an ID of a station group included in a scheduling indication message sent by an access point AP is local, that is, is a subgroup ID, an access point that receives the scheduling indication message needs to determine, according to the mapping relationship, a subgroup ID corresponding to the subgroup ID of the station group and a station group member corresponding to the subgroup ID, to perform subsequent scheduling.

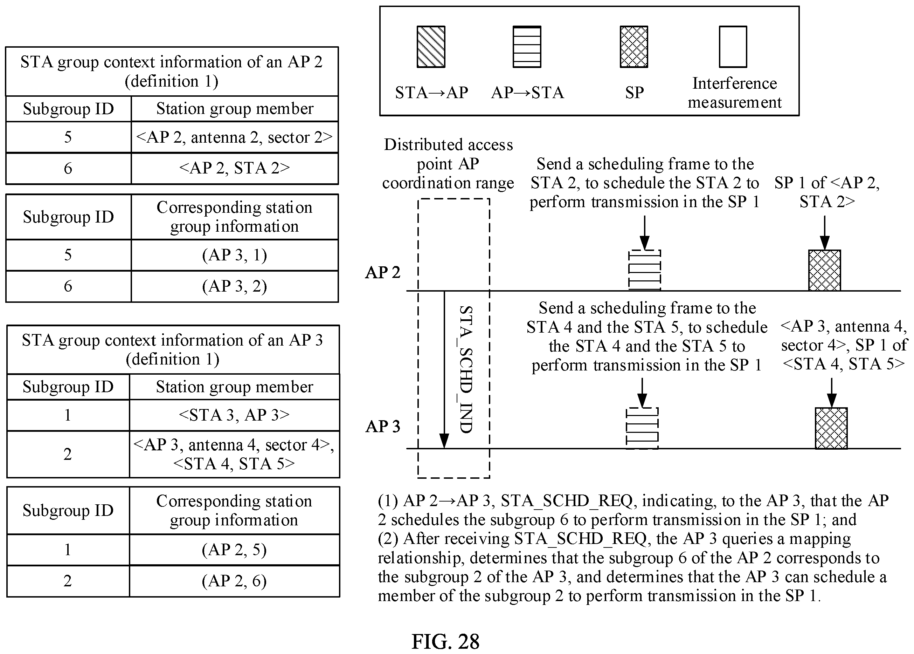

For example, as shown in FIG. 28, the AP 2 sends a scheduling indication message STA_SCHD_IND to the AP 3, to indicate the AP 3 to schedule a station group member corresponding to a subgroup ID 6 to perform transmission in the SP 1. The AP 3 that receives STA_SCHD_IND sent by the AP 2 may determine, according to the mapping relationship, that the subgroup ID 6 of the AP 2 corresponds to the subgroup ID 2 of the AP 3. In this case, the AP 3 determines that members <AP 3, antenna 4, sector 4> and <STA 4, STA 5> corresponding to the subgroup ID 2 can be scheduled to perform transmission in the SP 1.

According to technical solution in this embodiment of this application, only APs participating in coordination need to exchange information, and communication overheads are relatively low. Further, each AP in the access points APs participating in the coordination needs to maintain only a station group ID of the AP and a station group ID that is of another AP participating in the coordination and that corresponds to the station group ID, and does not need to maintain global station group information, thereby reducing storage space.

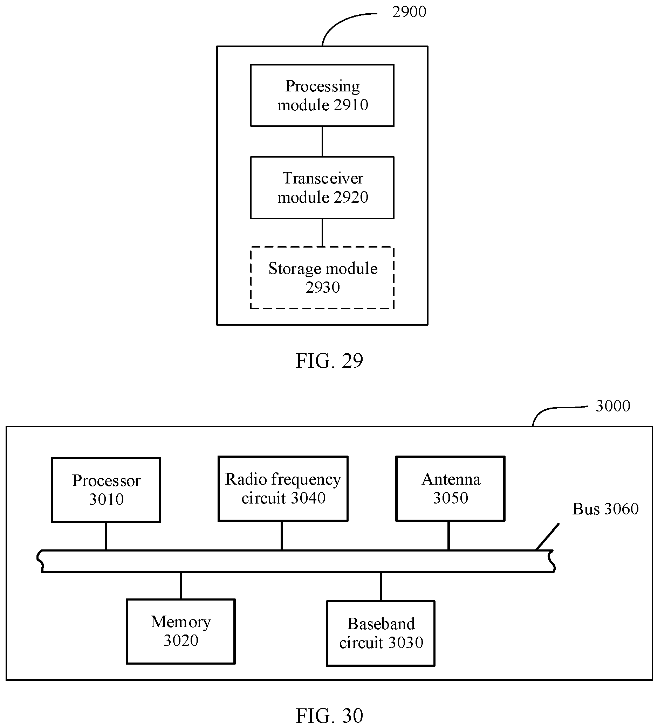

FIG. 29 is a schematic block diagram of an apparatus 2900 on a first access point side according to an embodiment of this application. In an embodiment, the apparatus 2900 shown in FIG. 29 may correspond to the apparatus on the first access point side in the foregoing method embodiment, and may have any function of the first access point in the method. Optionally, the apparatus 2900 in this embodiment of this application may be the first access point, or may be a chip in the first access point. The apparatus 2900 may include a processing module 2910 and a transceiver module 2920. Optionally, the apparatus 2900 may further include a storage module 2930.

For example, the processing module 2910 may be configured to perform step S301, step S801, step S1001, S1501, step S2401, step S2702, or step S2703 in the foregoing method embodiments.

The transceiver module 2920 may be configured to: perform steps S300.a and S302, receive the station group setup response message in step S303, or send STA_MEAS_IND in step S300.d in the foregoing method embodiment; perform steps S800.a and S802, receive the station group setup response message in step S803, or send STA_MEAS_IND in step S800.d in the foregoing method embodiment; perform steps S1000.a and S1002, receive the station group setup response message in step S1003, or send STA_MEAS_IND in step S1000.d in the foregoing method embodiment; perform step S1502; perform step S2402; or perform steps S2704 and S2706, receive the station group setup request message sent in step S2705, or receive the station group setup response message sent in the step S2706.

It should be understood that the apparatus 2900 according to this embodiment of this application may correspond to the first access point in the methods of the foregoing embodiments, and the foregoing and other management operations and/or functions of the modules in the apparatus 2900 are intended to implement corresponding steps in the foregoing methods. For brevity, no more details are described herein.

Alternatively, the apparatus 2900 may be configured as a universal processing system, which, for example, is generally referred to as a chip. The processing module 2910 may include one or more processors that provide a processing function. The transceiver module 2920, for example, may be an input/output interface, a pin, or a circuit. The input/output interface may be configured for information interaction between the chip system and the outside. For example, the input/output interface may output the scheduling request message generated by the first access point AP to another module outside the chip for processing. The processing module may execute a computer-executable instruction stored in the storage module, to implement the functions of the first access point in the foregoing method embodiments. In an example, the storage module 2930 optionally included in the apparatus 2900 may be a storage unit in the chip, such as a register or a cache. Alternatively, the storage module 2930 may be a storage unit located outside the chip, such as a read-only memory (read-only memory, ROM for short), another type of static storage device that can store static information and an instruction, or a random access memory (random access memory, RAM for short).

In another example, FIG. 30 is a schematic block diagram of another communications apparatus 3000 on a first access point side according to an embodiment of this application. The apparatus 3000 in this embodiment of this application may be the first access point in the foregoing method embodiments, and the apparatus 3000 may be configured to implement some or all functions of the first access point in the foregoing method embodiments. The apparatus 3000 may include a processor 3010, a baseband circuit 3030, a radio frequency circuit 3040, and an antenna 3050. Optionally, the apparatus 3000 may further include a memory 3020. All the components of the apparatus 3000 are coupled together by using a bus 3060. The bus 3060 includes a data bus, and further includes a power bus, a control bus, and a status signal bus. However, for clear description, the buses are all marked as the bus system 3060 in the figure.

The processor 3010 may be configured to control the first access point, and is configured to perform processing performed by the first access point in the foregoing embodiments. The processor 3010 may perform a processing process related to the first access point in the foregoing method embodiments and/or is configured to perform another process of the technology described in this application. Further, the processor 3010 may run an operating system, is responsible for managing the bus, and may execute a program or an instruction stored in the memory.

The baseband circuit 3030, the radio frequency circuit 3040, and the antenna 3050 may be configured to support information receiving and sending between the first access point and the second access point or the station in the foregoing embodiments, o support wireless communication between the first access point and another node. In an example, a measurement result sent by the station is received by using the antenna 3050, processed by the radio frequency circuit 3040 through processing such as filtering, amplification, down-conversion, and digitizization, processed by the baseband circuit 3030 through baseband processing such as decoding and protocol-based data decapsulation, and processed by the processor 3010, to restore service data and signaling information that are sent by the station. In still another example, first channel allocation information sent by the first access point may be processed by the processor 3010, processed by the baseband circuit 3030 through baseband processing such as protocol-based encapsulation and encoding, further processed by the radio frequency circuit 3040 through radio frequency processing such as analog conversion, filtering, amplification, and up-conversion, and sent to the second access point AP by using the antenna 3050.

The memory 3020 may be configured to store program code and data of the first access point, and the memory 3020 may be the storage module 2930 in FIG. 29. It can be understood that the baseband circuit 3030, the radio frequency circuit 3040, and the antenna 3050 may be further configured to support communication between the first access point and another network entity, for example, communication between the first access point and a network element on a core network side. In FIG. 30, the memory 3020 is shown as separated from the processor 3010. However, it is readily figured out by a person skilled in the art that the memory 3020 or any portion thereof may be located outside the apparatus 3000. For example, the memory 3020 may include a transmission cable and/or a computer product separated from a wireless node. These media may be accessed by the processor 3010 through the bus interface 3060. Alternatively, the memory 3020 or any portion thereof may be integrated into the processor 3010, for example, may be a cache and/or a general purpose register.

It can be understood that FIG. 30 merely shows a simplified design of the first access point. In an actual application, for example, the first access point may include any quantity of transmitters, receivers, processors, memories, and the like, and all first access points according to the appended claims within the protection scope of the present invention.

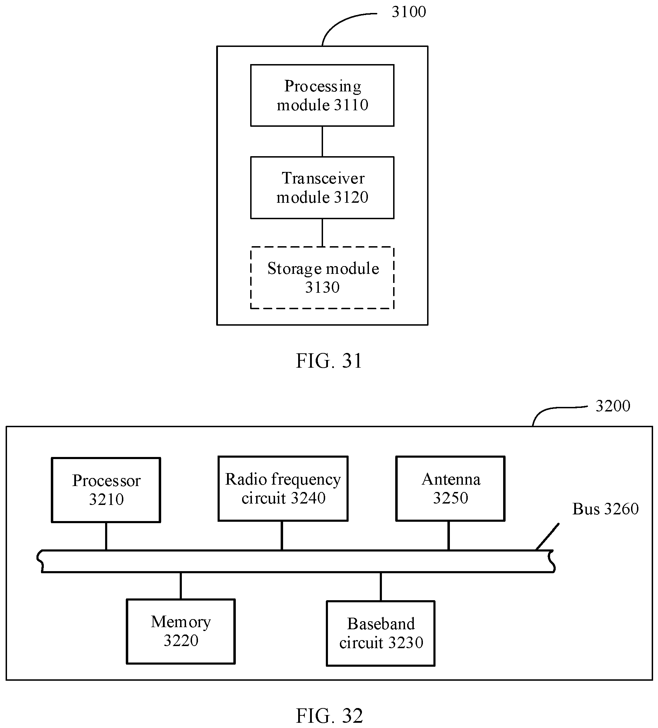

FIG. 31 is a schematic block diagram of an apparatus 3100 applied to a second access point side according to an embodiment of this application. In an embodiment, the apparatus 3100 shown in FIG. 31 may correspond to the apparatus on the second access point side in the foregoing method embodiment, and may have any function of the second access point in the method. Optionally, the apparatus 3100 in this embodiment of this application may be the second access point, or may be a chip in the second access point. The apparatus 3100 may include a processing module 3110 and a transceiver module 3120. Optionally, the apparatus 3100 may further include a storage module 3130.

For example, the processing module 3110 may be configured to perform step S1503, step S2403, or step S2703 in the foregoing method embodiments.

The transceiver module 3120 may be configured to: receive the signaling or data sent in steps S300.a, S302, and S300.c, or perform step S303, step S300.d, and step S300.b in the foregoing method embodiment; receive signaling or data sent in steps S800.a, S802, and S800.c, or perform step S803, step S800.d, and step S800.b in the foregoing method embodiment; or receive signaling or data sent in steps S1000.a, S1002, and S1000.c, or perform step S1003, step S1000.d, and step S1000.b in the foregoing method embodiment; receive the scheduling request message sent in step S1502; receive the scheduling indication message sent in step S2402; or perform steps S2701, S2705, and S2706, receive the station group setup request message sent in step S2704, or receive the station group setup response message sent in S2707.

It should be understood that the apparatus 3100 according to this embodiment of this application may correspond to the second access point in the methods of the foregoing embodiments, and the foregoing and other management operations and/or functions of the modules in the apparatus 3100 are intended to implement corresponding steps in the foregoing methods. For brevity, no more details are described herein.

Alternatively, the apparatus 3100 may be configured as a universal processing system, which, for example, is generally referred to as a chip. The processing module 3110 may include one or more processors that provide a processing function. The transceiver module 3120, for example, may be an input/output interface, a pin, or a circuit. The input/output interface may be configured for information interaction between the chip system and the outside. For example, the input/output interface may output the scheduling request message input by another module outside the chip, for processing. The processing module may execute a computer-executable instruction stored in the storage module, to implement the functions of the second access point in the foregoing method embodiments. In an example, the storage module 3130 optionally included in the apparatus 3100 may be a storage unit in the chip, such as a register or a cache. Alternatively, the storage module 3130 may be a storage unit located outside the chip, such as a read-only memory (read-only memory, ROM for short), another type of static storage device that can store static information and an instruction, or a random access memory (random access memory, RAM for short).

In another example, FIG. 32 is a schematic block diagram of another communications apparatus 3200 on a second access point side according to an embodiment of this application. The apparatus 3200 in this embodiment of this application may be the second access point in the foregoing method embodiments, and the apparatus 3200 may be configured to implement some or all functions of the second access point in the foregoing method embodiments. The apparatus 3200 may include a processor 3210, a baseband circuit 3232, a radio frequency circuit 3240, and an antenna 3250. Optionally, the apparatus 3200 may further include a memory 3220. All the components of the apparatus 3200 are coupled together by using a bus 3260. The bus system 3260 includes a data bus, and further includes a power bus, a control bus, and a status signal bus. However, for clear description, the buses are all marked as the bus system 3260 in the figure.

The processor 3210 may be configured to control the second access point, and is configured to perform processing performed by the second access point in the foregoing embodiments. The processor 3210 may perform a processing process related to the second access point in the foregoing method embodiments and/or is configured to perform another process of the technology described in this application. Further, the processor 3210 may run an operating system, is responsible for managing the bus, and may execute a program or an instruction stored in the memory.

The baseband circuit 3232, the radio frequency circuit 3240, and the antenna 3250 may be configured to support information receiving and sending between the second access point and the first access point or the station in the foregoing embodiments, o support wireless communication between the second access point and another node. In an example, a measurement result sent by the station is received by using the antenna 3250, processed by the radio frequency circuit 3240 through processing such as filtering, amplification, down-conversion, and digitizization, processed by the baseband circuit 3232 through baseband processing such as decoding and protocol-based data decapsulation, and processed by the processor 3210, to restore service data and signaling information that are sent by the station. In still another example, a station group setup response message sent by the second access point may be processed by the processor 3210, processed by the baseband circuit 3232 through baseband processing such as protocol-based encapsulation and encoding, further processed by the radio frequency circuit 3240 through radio frequency processing such as analog conversion, filtering, amplification, and up-conversion, and sent to the first access point AP by using the antenna 3250.

The memory 3220 may be configured to store program code and data of the second access point, and the memory 3220 may be the storage module 3132 in FIG. 31. It can be understood that the baseband circuit 3232, the radio frequency circuit 3240, and the antenna 3250 may be further configured to support communication between the second access point and another network entity, for example, communication between the second access point and a network element on a core network side. In FIG. 32, the memory 3220 is shown as separated from the processor 3210. However, it is readily figured out by a person skilled in the art that the memory 3220 or any portion thereof may be located outside the apparatus 3200. For example, the memory 3220 may include a transmission cable and/or a computer product separated from a wireless node. These media may be accessed by the processor 3210 through the bus interface 3260. Alternatively, the memory 3220 or any portion thereof may be integrated into the processor 3210, for example, may be a cache and/or a general purpose register.

It can be understood that FIG. 32 merely shows a simplified design of the second access point. In an actual application, for example, the second access point may include any quantity of transmitters, receivers, processors, memories, and the like, and all second access points according to the appended claims fall within the protection scope of the present invention.

An embodiment of this application further provides a computer storage medium. The computer-readable storage medium stores an instruction, and the instruction may be executed by one or more processors in a processing circuit. When the instruction is run on a computer, the computer is enabled to perform the methods in the foregoing aspects.

An embodiment of this application further provides a chip system. The chip system includes a processor, configured to support a distributed unit, a centralized unit, a first access point, and a second access point to implement a function in the foregoing embodiments, for example, generate or process data and/or information in the foregoing methods.

In a possible design, the chip system may further include a memory. The memory is configured to store program instructions and data that are necessary to the distributed unit, the centralized unit, the first access point, and the second access point. The chip system may include a chip, or may include a chip and another discrete device.

An embodiment of this application further provides a processor, configured to be coupled to a memory. The processor is configured to perform the method and the function of the first access point AP in any one of the foregoing embodiments.

An embodiment of this application further provides a processor, configured to be coupled to a memory. The processor is configured to perform the method and the function of the second access point AP in any one of the foregoing embodiments.

An embodiment of this application further provides a computer program product including an instruction. When the product runs on a computer, the computer is enabled to perform the method and the function of the first access point AP in any one of the foregoing embodiments.

An embodiment of this application further provides a computer program product including an instruction. When the product runs on a computer, the computer is enabled to perform the method and the function of the second access point AP in any one of the foregoing embodiments.

An embodiment of this application further provides a wireless communications system. The system includes the first access point and the at least one second access point in the foregoing embodiments.

It may be understood that various types of messages used in the embodiments of this application may have other names. For example, the station group setup request message may also be referred to as a station group initialization request message, a station group construction request message, or the like.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State drive), or the like.

## Claims

1. A transmission scheduling method, wherein the method comprises:
generating (S1501), by a first access point AP, a scheduling request message, wherein the scheduling request message comprises information about at least one scheduling set and at least one transmission time identifier, the information about the at least one scheduling set is used to indicate the at least one scheduling set, and the scheduling set comprises at least one scheduling set element; and
the at least one transmission time identifier is in a one-to-one correspondence with the at least one scheduling set, and the transmission time identifier is used to indicate a transmission time range in which at least one scheduling set element indicated by the scheduling set performs transmission; and
sending (S1502), by the first AP, the scheduling request message to at least one second access point AP, so that the at least one second AP determines, based on the scheduling request message, whether to schedule a scheduling set element, served by the at least one second AP, in the at least one scheduling set element in the scheduling set to perform transmission in the transmission time range;
**characterized in that**
a type of any one of the at least one scheduling set element comprises a station and a specified direction of the station; wherein
a scheduling set subfield corresponding to the scheduling set element comprises identifier information of the station, and an antenna identifier and/or a sector identifier of the station.

2. The method according to claim 1, wherein the information about the scheduling set further comprises at least one scheduling set subfield, and the at least one scheduling set subfield is used to indicate the at least one scheduling set element

3. The method according to claim 1 or 2, wherein the scheduling request message further comprises:
a first scheduling time identifier, used to indicate a time range in which the at least one second AP schedules the at least one scheduling set.

4. A transmission scheduling method, wherein the method comprises:
receiving (1502), by a second access point AP, a scheduling request message, wherein the scheduling request message comprises information about at least one scheduling set and at least one transmission time identifier, the information about the at least one scheduling set is used to indicate the at least one scheduling set, and the scheduling set comprises at least one scheduling set element; and
the at least one transmission time identifier is in a one-to-one correspondence with the at least one scheduling set, and the transmission time identifier is used to indicate a transmission time range in which at least one scheduling set element indicated by the scheduling set performs transmission; and
determinin (S1503), by the second AP, based on the scheduling request message, whether to schedule a scheduling set element, served by the second AP, in the at least one scheduling set element in the scheduling set to perform transmission in the transmission time range;
**characterized in that**
a type of any one of the at least one scheduling set element comprises a station and a specified direction of the station; wherein
a scheduling set subfield corresponding to the scheduling set element comprises identifier information of the station, and an antenna identifier and/or a sector identifier of the station.

5. The method according to claim 4, wherein the information about the scheduling set further comprises at least one scheduling set subfield, and the at least one scheduling set subfield is used to indicate the at least one scheduling set element

6. The method according to claim 4 or 5, wherein the scheduling request message further comprises:
a first scheduling time identifier, used to indicate a time range in which at least one second AP schedules the at least one scheduling set.

7. A communications apparatus (2900) applied to a first access point AP side, wherein the apparatus comprises:
a processor (2910), configured to generate a scheduling request message, wherein the scheduling request message comprises information about at least one scheduling set and at least one transmission time identifier, the information about the at least one scheduling set is used to indicate the at least one scheduling set, and the scheduling set comprises at least one scheduling set element; and
the at least one transmission time identifier is in a one-to-one correspondence with the at least one scheduling set, and the transmission time identifier is used to indicate a transmission time range in which at least one scheduling set element indicated by the scheduling set performs transmission; and
a transceiver (2920), configured to send the scheduling request message to at least one second access point AP, so that the at least one second AP determines, based on the scheduling request message, whether to schedule a scheduling set element, served by the at least one second AP, in the at least one scheduling set element in the scheduling set to perform transmission in the transmission time range;
**characterized in that**
a type of any one of the at least one scheduling set element comprises a station and a specified direction of the station; wherein
a scheduling set subfield corresponding to the scheduling set element comprises identifier information of the station, and an antenna identifier and/or a sector identifier of the station.

8. A communications apparatus (2900) applied to a second access point side, wherein the apparatus comprises:
a transceiver (2920), configured to receive a scheduling request message, wherein the scheduling request message comprises information about at least one scheduling set and at least one transmission time identifier, the information about the at least one scheduling set is used to indicate the at least one scheduling set, and the scheduling set comprises at least one scheduling set element; and
the at least one transmission time identifier is in a one-to-one correspondence with the at least one scheduling set, and the transmission time identifier is used to indicate a transmission time range in which at least one scheduling set element indicated by the scheduling set performs transmission; and
a processor (2910), configured to determine, based on the scheduling request message, whether to schedule a scheduling set element, served by a second AP, in the at least one scheduling set element in the scheduling set to perform transmission in the transmission time range;
**characterized in that**
a type of any one of the at least one scheduling set element comprises a station and a specified direction of the station; wherein
a scheduling set subfield corresponding to the scheduling set element comprises identifier information of the station, and an antenna identifier and/or a sector identifier of the station.

## Patentansprüche

1. Verfahren zur Übertragungsplanung, wobei das Verfahren umfasst:
Erzeugen (S1501) einer Planungsanforderungsnachricht durch einen ersten Zugangspunkt, AP, wobei die Planungsanforderungsnachricht Informationen über mindestens einen Planungssatz und mindestens eine Übertragungszeitkennung umfasst, die Informationen über den mindestens einen Planungssatz verwendet werden, um den mindestens einen Planungssatz anzuzeigen, und der Planungssatz mindestens ein Planungssatzelement umfasst; und
die mindestens eine Übertragungszeitkennung dem mindestens einen Planungssatz eins zu eins entspricht und die Übertragungszeitkennung verwendet wird, um einen Übertragungszeitbereich anzuzeigen, in dem mindestens ein durch den Planungssatz angezeigtes Planungssatzelement Übertragung durchführt; und
Senden (S 1502) der Planungsanforderungsnachricht durch den ersten AP an mindestens einen zweiten Zugangspunkt, AP, sodass der mindestens eine zweite AP basierend auf der Planungsanforderungsnachricht bestimmt, ob ein Planungssatzelement, das von dem mindestens einen zweiten AP bedient wird, in dem mindestens einen Planungssatzelement im Planungssatz zum Durchführen einer Übertragung im Übertragungszeitbereich geplant werden soll;
**dadurch gekennzeichnet, dass**
ein Typ eines des mindestens einen Planungssatzelements eine Station und eine spezifizierte Richtung der Station umfasst; wobei
ein Planungssatz-Unterfeld, das dem Planungssatzelement entspricht, Kennungsinformationen der Station und eine Antennenkennung und/oder eine Sektorkennung der Station umfasst.

2. Verfahren nach Anspruch 1, wobei die Informationen über den Planungssatz ferner mindestens ein Planungssatz-Unterfeld umfassen und das mindestens eine Planungssatz-Unterfeld verwendet wird, um das mindestens eine Planungssatzelement anzuzeigen.

3. Verfahren nach Anspruch 1 oder 2, wobei die Planungsanforderungsnachricht ferner umfasst:
eine erste Planungszeitkennung, die verwendet wird, um einen Zeitbereich anzuzeigen, in dem der mindestens eine zweite AP den mindestens einen Planungssatz plant.

4. Verfahren zur Übertragungsplanung, wobei das Verfahren umfasst:
Empfangen (1502) einer Planungsanforderungsnachricht durch einen zweiten Zugangspunkt, AP, wobei die Planungsanforderungsnachricht Informationen über mindestens einen Planungssatz und mindestens eine Übertragungszeitkennung umfasst, die Informationen über den mindestens einen Planungssatz verwendet werden, um den mindestens einen Planungssatz anzuzeigen, und der Planungssatz mindestens ein Planungssatzelement umfasst; und
die mindestens eine Übertragungszeitkennung dem mindestens einen Planungssatz eins zu eins entspricht und die Übertragungszeitkennung verwendet wird, um einen Übertragungszeitbereich anzuzeigen, in dem mindestens ein durch den Planungssatz angezeigtes Planungssatzelement Übertragung durchführt; und
Bestimmen (S 1503) basierend auf der Planungsanforderungsnachricht durch den zweiten AP, ob ein Planungssatzelement, das vom zweiten AP bedient wird, in dem mindestens einen Planungssatzelement im Planungssatz zum Durchführen einer Übertragung im Übertragungszeitbereich geplant werden soll;
**dadurch gekennzeichnet, dass**
ein Typ eines des mindestens einen Planungssatzelements eine Station und eine spezifizierte Richtung der Station umfasst; wobei
ein Planungssatz-Unterfeld, das dem Planungssatzelement entspricht, Kennungsinformationen der Station und eine Antennenkennung und/oder eine Sektorkennung der Station umfasst.

5. Verfahren nach Anspruch 4, wobei die Informationen über den Planungssatz ferner mindestens ein Planungssatz-Unterfeld umfassen und das mindestens eine Planungssatz-Unterfeld verwendet wird, um das mindestens eine Planungssatzelement anzuzeigen.

6. Verfahren nach Anspruch 4 oder 5, wobei die Planungsanforderungsnachricht ferner umfasst:
eine erste Planungszeitkennung, die verwendet wird, um einen Zeitbereich anzuzeigen, in dem mindestens ein zweiter AP den mindestens einen Planungssatz plant.

7. Kommunikationsvorrichtung (2900), die auf eine Seite eines ersten Zugangspunkts, AP, angewendet wird, wobei die Vorrichtung umfasst:
einen Prozessor (2910), der zum Erzeugen einer Planungsanforderungsnachricht konfiguriert ist, wobei die Planungsanforderungsnachricht Informationen über mindestens einen Planungssatz und mindestens eine Übertragungszeitkennung umfasst, die Informationen über den mindestens einen Planungssatz verwendet werden, um den mindestens einen Planungssatz anzuzeigen, und der Planungssatz mindestens ein Planungssatzelement umfasst; und
die mindestens eine Übertragungszeitkennung dem mindestens einen Planungssatz eins zu eins entspricht und die Übertragungszeitkennung verwendet wird, um einen Übertragungszeitbereich anzuzeigen, in dem mindestens ein durch den Planungssatz angezeigtes Planungssatzelement Übertragung durchführt; und
einen Sendeempfänger (2920), der zum Senden der Planungsanforderungsnachricht an mindestens einen zweiten Zugangspunkt, AP, konfiguriert ist, sodass der mindestens eine zweite AP basierend auf der Planungsanforderungsnachricht bestimmt, ob ein Planungssatzelement, das von dem mindestens einen zweiten AP bedient wird, in dem mindestens einen Planungssatzelement im Planungssatz zum Durchführen einer Übertragung im Übertragungszeitbereich geplant werden soll;
**dadurch gekennzeichnet, dass**
ein Typ eines des mindestens einen Planungssatzelements eine Station und eine spezifizierte Richtung der Station umfasst; wobei
ein Planungssatz-Unterfeld, das dem Planungssatzelement entspricht, Kennungsinformationen der Station und eine Antennenkennung und/oder eine Sektorkennung der Station umfasst.

8. Kommunikationsvorrichtung (2900), die auf eine Seite eines zweiten Zugangspunkts angewendet wird, wobei die Vorrichtung umfasst:
einen Sendeempfänger (2920), der zum Empfangen einer Planungsanforderungsnachricht konfiguriert ist, wobei die Planungsanforderungsnachricht Informationen über mindestens einen Planungssatz und mindestens eine Übertragungszeitkennung umfasst, die Informationen über den mindestens einen Planungssatz verwendet werden, um den mindestens einen Planungssatz anzuzeigen, und der Planungssatz mindestens ein Planungssatzelement umfasst; und
die mindestens eine Übertragungszeitkennung dem mindestens einen Planungssatz eins zu eins entspricht und die Übertragungszeitkennung verwendet wird, um einen Übertragungszeitbereich anzuzeigen, in dem mindestens ein durch den Planungssatz angezeigtes Planungssatzelement Übertragung durchführt; und
einen Prozessor (2910), der so konfiguriert ist, dass er basierend auf der Planungsanforderungsnachricht bestimmt, ob ein Planungssatzelement, das von einem zweiten AP bedient wird, in dem mindestens einen Planungssatzelement im Planungssatz zum Durchführen einer Übertragung im Übertragungszeitbereich geplant werden soll;
**dadurch gekennzeichnet, dass**
ein Typ eines des mindestens einen Planungssatzelements eine Station und eine spezifizierte Richtung der Station umfasst; wobei
ein Planungssatz-Unterfeld, das dem Planungssatzelement entspricht, Kennungsinformationen der Station und eine Antennenkennung und/oder eine Sektorkennung der Station umfasst.

## Revendications

1. Procédé de planification de transmission, le procédé comprenant :
la génération (S 1501), par un premier point d'accès, noté AP, d'un message de demande de planification, le message de demande de planification comprenant des informations concernant au moins un ensemble de planification et au moins un identifiant de temps de transmission, les informations concernant l'au moins un ensemble de planification étant utilisées pour indiquer l'au moins un ensemble de planification, et l'ensemble de planification comprenant au moins un élément d'ensemble de planification ; et
l'au moins un identifiant de temps de transmission étant en correspondance biunivoque avec l'au moins un ensemble de planification, et l'identifiant de temps de transmission étant utilisé pour indiquer un intervalle de temps de transmission dans lequel au moins un élément d'ensemble de planification indiqué par l'ensemble de planification réalise une transmission ; et
l'envoi (S 1502), par le premier AP, du message de demande de planification à au moins un deuxième point d'accès, noté AP, de sorte que l'au moins un deuxième AP détermine, sur la base du message de demande de planification, s'il convient ou non de planifier un élément d'ensemble de planification, desservi par l'au moins un deuxième AP, dans l'au moins un élément d'ensemble de planification dans l'ensemble de planification pour qu'il réalise une transmission dans l'intervalle de temps de transmission ;
**caractérisé en ce que**
un type d'un quelconque de l'au moins un élément d'ensemble de planification comprend une station et une direction spécifiée de la station ;
un sous-champ d'ensemble de planification correspondant à l'élément d'ensemble de planification comprenant des informations d'identifiant de la station, et un identifiant d'antenne et/ou un identifiant de secteur de la station.

2. Procédé selon la revendication 1, les informations concernant l'ensemble de planification comprenant en outre au moins un sous-champ d'ensemble de planification, et l'au moins un sous-champ d'ensemble de planification étant utilisé pour indiquer l'au moins un élément d'ensemble de planification.

3. Procédé selon la revendication 1 ou 2, le message de demande de planification comprenant en outre :
un premier identifiant de temps de planification, utilisé pour indiquer un intervalle de temps dans lequel l'au moins un deuxième AP planifie l'au moins un ensemble de planification.

4. Procédé de planification de transmission, le procédé comprenant :
la réception (1502), par un deuxième point d'accès, noté AP, d'un message de demande de planification, le message de demande de planification comprenant des informations concernant au moins un ensemble de planification et au moins un identifiant de temps de transmission, les informations concernant l'au moins un ensemble de planification étant utilisées pour indiquer l'au moins un ensemble de planification, et l'ensemble de planification comprenant au moins un élément d'ensemble de planification ; et
l'au moins un identifiant de temps de transmission étant en correspondance biunivoque avec l'au moins un ensemble de planification, et l'identifiant de temps de transmission étant utilisé pour indiquer un intervalle de temps de transmission dans lequel au moins un élément d'ensemble de planification indiqué par l'ensemble de planification réalise une transmission ; et
la détermination (S1503), par le deuxième AP, sur la base du message de demande de planification, s'il convient ou non de planifier un élément d'ensemble de planification, desservi par le deuxième AP, dans l'au moins un élément d'ensemble de planification dans l'ensemble de planification pour qu'il réalise une transmission dans l'intervalle de temps de transmission ;
**caractérisé en ce que**
un type d'un quelconque de l'au moins un élément d'ensemble de planification comprend une station et une direction spécifiée de la station ;
un sous-champ d'ensemble de planification correspondant à l'élément d'ensemble de planification comprenant des informations d'identifiant de la station, et un identifiant d'antenne et/ou un identifiant de secteur de la station.

5. Procédé selon la revendication 4, les informations concernant l'ensemble de planification comprenant en outre au moins un sous-champ d'ensemble de planification, et l'au moins un sous-champ d'ensemble de planification étant utilisé pour indiquer l'au moins un élément d'ensemble de planification.

6. Procédé selon la revendication 4 ou 5, le message de demande de planification comprenant en outre :
un premier identifiant de temps de planification, utilisé pour indiquer un intervalle de temps dans lequel au moins un deuxième AP planifie l'au moins un ensemble de planification.

7. Appareil de communications (2900) appliqué du côté d'un premier point d'accès, noté AP, l'appareil comprenant :
un processeur (2910), configuré pour générer un message de demande de planification, le message de demande de planification comprenant des informations concernant au moins un ensemble de planification et au moins un identifiant de temps de transmission, les informations concernant l'au moins un ensemble de planification étant utilisées pour indiquer l'au moins un ensemble de planification, et l'ensemble de planification comprenant au moins un élément d'ensemble de planification ; et
l'au moins un identifiant de temps de transmission étant en correspondance biunivoque avec l'au moins un ensemble de planification, et l'identifiant de temps de transmission étant utilisé pour indiquer un intervalle de temps de transmission dans lequel au moins un élément d'ensemble de planification indiqué par l'ensemble de planification réalise une transmission ; et
un émetteur-récepteur (2920), configuré pour envoyer le message de demande de planification à au moins un deuxième point d'accès, noté AP, de sorte que l'au moins un deuxième AP détermine, sur la base du message de demande de planification, s'il convient ou non de planifier un élément d'ensemble de planification, desservi par l'au moins un deuxième AP, dans l'au moins un élément d'ensemble de planification dans l'ensemble de planification pour qu'il réalise une transmission dans l'intervalle de temps de transmission ;
**caractérisé en ce que**
un type d'un quelconque de l'au moins un élément d'ensemble de planification comprend une station et une direction spécifiée de la station ;
un sous-champ d'ensemble de planification correspondant à l'élément d'ensemble de planification comprenant des informations d'identifiant de la station, et un identifiant d'antenne et/ou un identifiant de secteur de la station.

8. Appareil de communications (2900) appliqué du côté d'un deuxième point d'accès, l'appareil comprenant :
un émetteur-récepteur (2920), configuré pour recevoir un message de demande de planification, le message de demande de planification comprenant des informations concernant au moins un ensemble de planification et au moins un identifiant de temps de transmission, les informations concernant l'au moins un ensemble de planification étant utilisées pour indiquer l'au moins un ensemble de planification, et l'ensemble de planification comprenant au moins un élément d'ensemble de planification ; et
l'au moins un identifiant de temps de transmission étant en correspondance biunivoque avec l'au moins un ensemble de planification, et l'identifiant de temps de transmission étant utilisé pour indiquer un intervalle de temps de transmission dans lequel au moins un élément d'ensemble de planification indiqué par l'ensemble de planification réalise une transmission ; et
un processeur (2910), configuré pour déterminer, sur la base du message de demande de planification, s'il convient ou non de planifier un élément d'ensemble de planification, desservi par un deuxième AP, dans l'au moins un élément d'ensemble de planification dans l'ensemble de planification pour qu'il réalise une transmission dans l'intervalle de temps de transmission ;
**caractérisé en ce que**
un type d'un quelconque de l'au moins un élément d'ensemble de planification comprend une station et une direction spécifiée de la station ;
un sous-champ d'ensemble de planification correspondant à l'élément d'ensemble de planification comprenant des informations d'identifiant de la station, et un identifiant d'antenne et/ou un identifiant de secteur de la station.
